(19) Europäisches Patentamt
European Patent Office
Office européen des brevets

(11) **EP 3 952 581 A1**

(12) **EUROPEAN PATENT APPLICATION**
published in accordance with Art. 153(4) EPC

(43) Date of publication:
**09.02.2022 Bulletin 2022/06**

(21) Application number: **20781943.4**

(22) Date of filing: **10.02.2020**

(51) International Patent Classification (IPC):
*H04W 74/08* (2009.01)

(52) Cooperative Patent Classification (CPC):
**H04W 74/08**

(86) International application number:
**PCT/JP2020/005041**

(87) International publication number:
**WO 2020/202799 (08.10.2020 Gazette 2020/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.03.2019 JP 2019068877**

(71) Applicant: **Sony Group Corporation
Tokyo 108-0075 (JP)**

(72) Inventors:
• **MATSUDA, Hiroki
Tokyo 108-0075 (JP)**
• **KUSASHIMA, Naoki
Tokyo 108-0075 (JP)**

(74) Representative: **Witte, Weller & Partner
Patentanwälte mbB
Postfach 10 54 62
70047 Stuttgart (DE)**

(54) **COMMUNICATION DEVICE, BASE STATION DEVICE, COMMUNICATION METHOD, AND COMMUNICATION PROGRAM**

(57) A communication device includes an obtaining unit that obtains predetermined information which is different than terminal IDs enabling identification of each of a plurality of communication devices with which another communication device performs radio communication; and a generating unit that, based on the predetermined information, generates common recognition information to be shared with the other communication device.

FIG.5

**Description**

Field

The application concerned is related to a communication device, a base station, a communication method, and a communication program.

Background

With the advancement in the communication technology, there is a significant enhancement in the communication performance in the form of high throughput and low delay. Besides, in recent years, a study is being carried out regarding communication technologies enabling achieving further enhancement in the communication performance. For example, in the next-generation radio access technology (RAT) such as the NR (New Radio), in order to achieve further reduction in the communication delay, the introduction of a 2-step random access procedure is being considered.

Citation List

Patent Literature

Non Patent Literature 1: RP-182894, ZTE Corporation, Senachips, "2-step RACH for NR," 3GPP TSG RAN Meeting#82, Sorrento, Italy, December 2018

Summary

Technical Problem

However, just by introducing a new communication technology, enhancement in the communication performance is not necessarily achieved. For example, in the 2-step random access procedure, the message 3 of the conventional 4-step random access procedure gets transmitted in the initial step itself. However, there is a possibility that the transmission of the message 3 is not successful. If that happens, the communication device eventually has to use the conventional random access procedure. As a result, there is a possibility that a high level of communication performance is not achieved.

In that regard, in the application concerned, a communication device, a base station, a communication method, and a communication program are proposed that enable achieving a high level of communication performance.

Solution to Problem

To solve the problem described above, a communication device includes: an obtaining unit that obtains predetermined information which is different than terminal IDs enabling identification of each of a plurality of communication devices with which another communication device performs radio communication; and a generating unit that, based on the predetermined information, generates common recognition information to be shared with the other communication device.

Brief Description of Drawings

FIG. 1 is a diagram illustrating an exemplary configuration of a communication system according to an embodiment of the application concerned.
FIG. 2 is a diagram illustrating an exemplary configuration of a management device according to the embodiment of the application concerned.
FIG. 3 is a diagram illustrating an exemplary configuration of a base station device according to the embodiment of the application concerned.
FIG. 4 is a diagram illustrating an exemplary configuration of a relay device according to the embodiment of the application concerned.
FIG. 5 is a diagram illustrating an exemplary configuration of a terminal device according to the embodiment of the application concerned.
FIG. 6 is a diagram illustrating a configuration of a radio frame in a radio access network according to the embodiment of the application concerned.

FIG. 7 is a diagram illustrating an example of a subframe configuration in the LTE.

FIG. 8 is a diagram illustrating an example of a subframe configuration in the NR.

FIG. 9 is a diagram illustrating an example of parameter sets related to transmission signals in NR cells.

FIG. 10 is a diagram illustrating an example of a downlink subframe in the NR.

FIG. 11 is a diagram for explaining transmission and reception of data using the NOMA.

FIG. 12 is an explanatory diagram for explaining an example of a NOMA transmission operation performed according to the embodiment of the application concerned.

FIG. 13 is an explanatory diagram for explaining an example of the NOMA transmission operation performed according to the embodiment of the application concerned.

FIG. 14 is a diagram for explaining transmission and reception of data using the NOMA.

FIG. 15 is an explanatory diagram for explaining an example of the NOMA transmission operation performed according to the embodiment of the application concerned.

FIG. 16 is an explanatory diagram for explaining an example of the NOMA transmission operation performed according to the embodiment of the application concerned.

FIG. 17 is an explanatory diagram for explaining an example of a NOMA reception operation performed according to the embodiment of the application concerned.

FIG. 18 is a flowchart for explaining an example of an initial connection operation.

FIG. 19 is a diagram illustrating a contention based random access procedure.

FIG. 20 is a diagram illustrating a non-contention based random access procedure.

FIG. 21 is a diagram illustrating a 2-step random access procedure.

FIG. 22 is a sequence diagram illustrating an example of a transmission-reception operation (grant based).

FIG. 23 is a sequence diagram illustrating an example of a transmission-reception operation (configured grant).

FIG. 24 is a sequence diagram illustrating an example of a transmission-reception operation (downlink).

FIG. 25 is a sequence diagram illustrating an example of a connection operation according to the embodiment of the application concerned.

Description of Embodiments

A preferred embodiment of the application concerned is described below in detail with reference to the accompanying drawings. In the embodiment described below, identical constituent elements are referred to by the same reference numerals, and the redundant explanation is not repeated.

Moreover, in the present written description and the drawings, the constituent elements having practically identical functional configuration are sometimes differentiated by adding different numbers to the same reference numeral. For example, as may be necessary, a plurality of constituent elements having practically identical functional configuration is differentiated as terminal devices $40_1$, $40_2$, and $40_3$. However, when a plurality of constituent elements having practically identical functional configuration need not be particularly distinguished from each other, they are referred to by only the same reference numeral. For example, when the terminal devices $40_1$, $40_2$, and $40_3$ need not be particularly distinguished from each other, they are simply referred to as terminal devices 40.

The explanation of the application concerned is given in the following sequence.

1. To begin with
2. Configuration of communication system

2-1. Overall configuration of communication system
2-2. Configuration of management device
2-3. Configuration of base station device
2-4. Configuration of relay device
2-5. Configuration of terminal device
2-6. Configuration of radio frame

3. Regarding NOMA
4. Fundamental operations of communication system

4-1. Initial connection operation
4-2. Random access procedure
4-3. Transmission-reception operation (grant based)
4-4. Transmission-reception operation (configured grant)

4-5. Transmission-reception operation (downlink)

5. Signal processing without ID assignment

5-1. Signal processing requiring terminal ID
5-2. Generation of common recognition information using different information held in terminal
5-3. Generation of common recognition information from information about group of candidates for common recognition information
5-4. Generation of common recognition information based on additional information transmitted from base station device
5-5. Generation of common recognition information from previously-obtained terminal ID
5-6. Treating zero value as common recognition information
5-7. Implicit notification of common recognition information from terminal device to base station device
5-8. Explicit notification of common recognition information from terminal device to base station device
5-9. Omission of signal processing requiring terminal ID
5-10. Exemplary sequence
5-11. Use of common recognition information in operations subsequent to message A
5-12. Cases in which generated common recognition information collides with common recognition information of another terminal
5-13. Regarding cell ID

6. Modification examples

6-1. Modification examples related to operations
6-2. Other modification examples

7. Summary

<<1. To begin with>>

In the 3GPP (3rd Generation Partnership Project), the radio access technology (RAT) such as the LTE (Long Term Evolution) and the NR (New Radio) is being studied. The LTE and the NR are types of the cellular communication technology, and enable mobile communication of terminal devices as a result of cellularly providing a plurality of areas covered by base stations.

In the following explanation, it is assumed that the "LTE" includes the LTE-A (LTE-Advanced), the LTE-A Pro (LTE-Advanced Pro), and the EUTRA (Evolved Universal Terrestrial Radio Access). Moreover, it is assumed that the "NR" includes the NRAT (New Radio Access Technology) and the FEUTRA (Further EUTRA). Meanwhile, a single base station can be configured to manage a plurality of cells. In the following explanation, the cells compatible to the LTE are called LTE cells, and the cells compatible to the NR are called NR cells.

The NR represents the radio access technology (RAT) of the next generation of the LTE (i.e., represents the RAT of the fifth generation). The NR is the radio access technology that can deal with various use cases including the eMBB (Enhanced Mobile Broadband), the mMTC (Massive Machine Type Communications), and the URLLC (Ultra-Reliable and Low Latency Communications). The NR is being studied with the aim of building a technical framework compatible to the usage situations, requirements, and layout situations in the abovementioned use cases.

In the NR, in order to achieve further reduction in the communication delay, the 2-step random access procedure is being studied. The random access procedure is used in the case in which a terminal device establishes initial connection with a cell (a base station device). In the conventional LTE, for example, the 4-step random access procedure is used, and that contributes to the delay. If the random access procedure can be completed in two steps, it is expected to achieve a significant decrease in the delay.

Although explained later in detail in <4-2. Random access procedure>, in the 2-step random access procedure, the message 3 of the conventional 4-step random access procedure gets transmitted in the initial step (message A) itself. However, there is a possibility that the transmission of the message 3 is not successful in the case of the 2-step random access procedure.

For example, in the conventional 4-step random access procedure, for example, in order to ensure that the correlation of communication with another terminal device in the concerned cell does not become higher, a unique terminal ID for that other terminal device (for example, C-RNTI: Cell-Radio Network Temporary ID) is used in the transmission signal processing of the message 3. Herein, the transmission signal processing implies, for example, scrambling explained later in <5-1. Signal processing requiring terminal ID>. For example, in the conventional 4-step random access procedure, the terminal ID for a terminal device is assigned by the corresponding base station device in the second step (as a random access response after the reception of a random access preamble). Hence, naturally, once the message 3 is received from the terminal device, the base station device is able to recognize the terminal ID of the terminal device. For that reason, the base station device becomes able to decode the message 3 that has been subjected to the transmission signal processing (for example, scrambling) in the terminal device using the terminal ID.

However, in the 2-step random access procedure, the message 3 gets transmitted in the initial step (message A). Hence, depending on the situation, the terminal device needs to transmit the message 3 before being assigned with a terminal ID by the base station device. As a result, the terminal device does is not in possession of the terminal ID that is recognized in common by the base station device and, in spite of needing to transmit the message 3, may end up being unable to transmit the message 3. In that case, there is a possibility that the terminal device cannot use the 2-step random access procedure. That forces the terminal device to use the conventional 4-step random access procedure, and thus the reduction in delay is not achieved.

In that regard, in the present embodiment, the issue is resolved in the following manner.

For example, the concerned terminal device obtains "predetermined information" that is different than the terminal IDs enabling the base station device to identify a plurality of terminal identifies performing radio communication with the base station device. As an example, the terminal device obtains, as the "predetermined information", the information that is already in its possession and that can be recognized by the base station device as the information of the concerned terminal device (for example, the information about the resources used by the terminal device for transmitting the random access preamble to the base station device). Then, based on the "predetermined information", the terminal device generates common recognition information to be shared with the base station device (For example, a terminal ID or a substitute for the terminal ID).

The common recognition information generated in this manner is the information that is recognized in common by the terminal device and the base station device. For example, assume that the information about the resources of the random access preamble (hereinafter, simply called preamble) represents the "predetermined information". The base station device receives the transmission of the preamble from the terminal device at the initial step of the 2-step random access procedure. At that stage, the base station device is able to recognize which resources are used by the terminal device in transmitting the preamble (for example, recognize which preamble index is used). Hence, for example, the base station device can share, in advance with the terminal device, a generation criterion indicating the manner of generating common recognition information from the information about the resources of the preamble; and then the terminal device and the base station device can generate common recognition information (for example, a terminal ID or a substitute for the terminal ID) using the information about the resources of the preamble.

For that reason, even if the terminal device performs scrambling of the message 3 using the common recognition information, the base station device becomes able to decode the scrambled message 3 using the common recognition information (for example, a terminal ID or a substitute for the terminal ID). As a result, the terminal device becomes able to perform random access to the base station device using the 2-step random access procedure, and it becomes possible to achieve reduction in the delay. Hence, a higher level of communication performance can be achieved in the communication system.

Till now, the explanation was given about the overview of the present embodiment with reference to the example of the two 2-step random access procedure. However, the abovementioned issues faced in the 2-step random access can also arise in an identical manner in other cases in which the terminal device does not possess the "ID required in signal processing" at the time of data transmission (for example, in the case of the RRC IDLE state or in the case of configured grant during the RRC Inactive state). Herein, examples of the "ID required in signal processing" include the cell ID, the terminal ID (for example, the C-RNT1), and the scrambling ID assigned from the upper layer. Also in the other cases in which the terminal device does not possess the "ID required in signal processing" at the time of data transmission, the method explained in the present embodiment is applicable. As a result of applying the present embodiment to such cases, a higher level of communication performance can be achieved in the communication system.

Till now, the explanation was given about the overview of the present embodiment. Given below is the detailed explanation of a communication system 1 according to the present embodiment.

<<2. Configuration of communication system>>

The communication system 1 includes base station devices and can establish radio connection with terminal devices.

The communication devices (for example, the terminal devices) included in the communication system 1 according to the present embodiment can establish initial connection using the 2-step random access. Herein, the 2-step random access implies the random access in which the conventional 4-step random access (the contention based random access procedure) is fit into two steps. In the 2-step random access, the transmission of the preamble and the transmission of the message 3 is performed at the initial step, and the transmission of the message 2 and the message 4 is performed at the next step. Regarding the 2-step random access, the detailed explanation is given later in <4-2. Random access procedure>.

Moreover, the communication devices (for example, the terminal devices) included in the communication system 1 according to the present embodiment are capable of performing configured grant transmission. The configured grant transmission implies that a communication device (for example, a terminal device) does not receive dynamic resource allocation (grant) from another communication device (for example, a base station device), and performs transmission using suitable resources from among the available frequency and time resources specified in advance by the other communication device. Regarding the configured grant transmission, the detailed explanation is given later in <4-4. Transmission-reception operation (configured grant)>.

Given below is the specific explanation of a configuration of the communication system 1.

<2-1. Overall configuration of communication system>

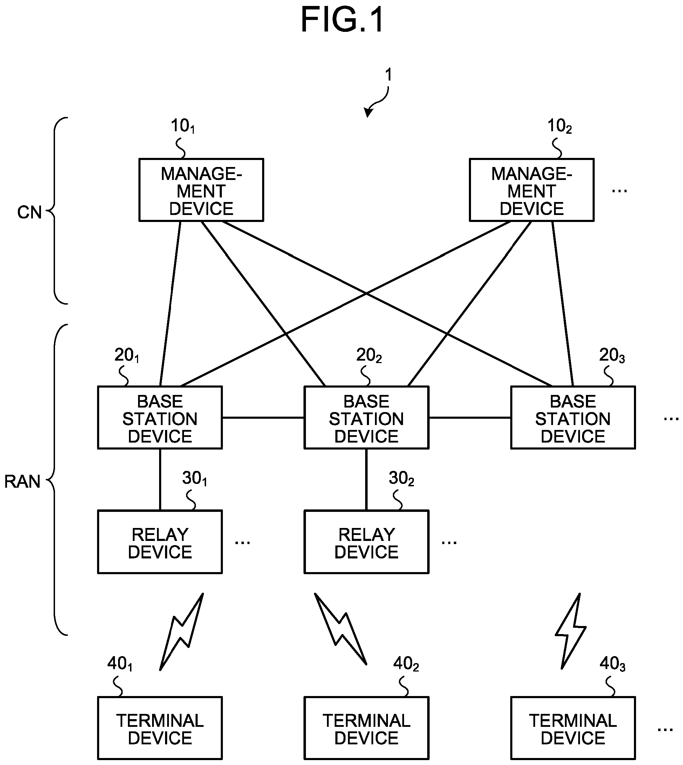

FIG. 1 is a diagram illustrating an exemplary configuration of the communication system 1 according to the embodiment of the application concerned. The communication system 1 is a radio communication system that provides a radio access network to terminal devices. For example, the communication system 1 is a cellular communication system in which the radio access technology such as the LTE or the NR is used.

As illustrated in FIG. 1, the communication system 1 includes management devices 10, base station devices 20, relay devices 30, and the terminal devices 40. In the communication system 1, as a result of coordinated operations among various radio communication devices constituting the communication system 1, a radio network enabling mobile communication can be provided to the users. In the present embodiment, the radio network is configured with a radio access network RAN and a core network CN. Meanwhile, the radio communication devices are devices equipped with the radio communication function; and, in the example illustrated in FIG. 1, the base station devices 20, the relay devices 30, and the terminal devices 40 represent the radio communication devices.

The communication system 1 can include a plurality of management devices 10, a plurality of base station devices 20, a plurality of relay devices 30, and a plurality of terminal devices 40. In the example illustrated in FIG. 1, the communication system 1 includes management devices $10_1$ and $10_2$ as the management devices 10. Moreover, the communication system 1 includes base station devices $20_1$, $20_2$, and $20_3$ as the base station devices 20. Furthermore, the communication device 1 includes relay devices $30_1$ and $30_2$ as the relay devices 30. Moreover, the communication device 1 includes the terminal devices $40_1$, $40_2$, and $40_3$ as the terminal devices 40.

Meanwhile, it is possible to think that the devices illustrated in FIG. 1 are devices with logical meaning. That is, some of the devices illustrated in FIG. 1 can be implemented using virtual machines (VMs), containers, and dockers; and those devices can be installed in the same physical hardware.

Meanwhile, an LTE base station is sometimes called eNodeB (Evolved Node B) or eNB. Moreover, an NR base station is sometimes called gNodeB or gNB. In the LTE and the NR, a terminal device (also called a mobile station, a mobile station device, or a terminal) is also called UE (User Equipment). Moreover, a terminal device is a type of communication device, and is also called a mobile station, a mobile station device, or a terminal.

In the present embodiment, the concept of a communication device not only includes a mobile body device (a terminal device) having portability such as a mobile terminal, but also includes a device that is installed in a structure or a mobile object. Alternatively, a structure or a mobile object itself can be treated as a communication device. Moreover, the concept of a communication device not only includes a terminal device, but also includes a base station device and a relay device. A communication device is a type of processing device and a type of information processing device. Moreover, a communication device can also be called a transmission device or a reception device in other words.

[Management device]

Each management device 10 is a device that manages the radio network. For example, each management device 10 is a device that manages the communication of the base station devices 20. For example, each management device 10 is a device that functions as an MME (Mobility Management Entity), an AMF (Access and Mobility Management Function), or an SMF (Session Management Function).

The management devices 10 constitute the core network CN along with gateway devices. The core network CN is, for example, a network possessed by a predetermined entity (agent) such as a mobile network operator. For example, the core network CN is an EPC (Evolved Packet Core) or a 5GC (5G Core network). Meanwhile, the predetermined entity can be the same entity as or a different entity than the entity that uses, operates, and/or manages the base station devices 20.

Meanwhile, the management devices 10 can also be configured to have the gateway function. For example, if the core network is an EPC, then each management device 10 can be configured to function as an S-GW or a P-GW. If the core network is a 5GC, then each management device 10 can be configured to function as a UPF (User Plane Function). Meanwhile, the management devices 10 need not necessarily be devices constituting the core network CN. For example, assume that the core network CN is a core network of W-CDMA (Wideband Code Division Multiple Access) or cdma2000 (Code Division Multiple Access 2000). In that case, each management device 10 can be a device that functions as an RNC (Radio Network Controller).

Each management device 10 is connected to each of a plurality of base station devices 20 and manages the communication of the base station devices 20. For example, regarding each terminal device 40, the management device 10 obtains and manages information about the base station device (or the cell) to which that terminal device 40 is connected and about the communication area of the base station device (or the cell) in which that terminal device 40 is present. Herein, a cell can be a pCell (Primary Cell) or an sCell (Secondary Cell). Each cell can have different radio resources (for example, frequency channels or component carriers) that are usable by the terminal devices 40. Moreover, a single base station device can provide a plurality of cells.

[Base station device]

The base station devices 20 are radio communication devices that perform radio communication with the terminal devices 40. The base station devices 20 are a type of communication devices. For example, each base station device 20 is a device equivalent to a radio base station (base station, node B, eNB, or gNB) or a radio access point. Alternatively, the base station device 20 can be a radio relay station. Still alternatively, the base station device 20 can be an optical extension device called an RRH (Remote Radio Head). Still alternatively, the base station device 20 can be a receiving station device such as an FPU (Field Pickup Unit). Still alternatively, the base station device 20 can be an IAB (Integrated Access and Backhaul) donor node or an IAB relay node that provides radio access lines and radio backhaul lines according to time-division multiplexing, or frequency-division multiplexing, or space-division multiplexing.

Meanwhile, the radio access technology used by the base station devices 20 either can be the cellular communication technology or can be the wireless LAN technology. Of course, the radio access technology used in the base station devices 20 is not limited to such technologies, and other radio access technologies can also be used. Thus, the radio access technology used by the base station devices 20 can be the LPWA (Low Power Wide Area) communication technology. Herein, the LPWA communication implies communication compatible to an LPWA standard. Examples of the LPWA standard include ELTRES, ZETA, SIGFOX, LoRaWAN, and NB-Iot. Of course, the LPWA standard is not limited to those examples, and some other LPWA standard can also be used. Apart from that, the radio communication used in the base station devices 20 can be radio communication using millimeter waves. Alternatively, the radio communication used in the base station devices 20 can be radio communication using radio waves or can be radio communication using infrared light or visible light.

The base station devices 20 can also be configured to be capable of performing NOMA communication with the terminal devices 40. Herein, NOMA communication implies communication (transmission, or reception, or both transmission and reception) performed using non-orthogonal resources. Regarding the non-orthogonal resources, the explanation is given later. Moreover, each base station device 20 can be configured to be capable of performing NOMA communication also with the other base station devices 20 and the relay devices 30.

Moreover, the base station devices 20 can be configured to be capable of communicating with each other via a base station device-core network interface (for example, the S1 interface). The interface can be a wired interface or a radio interface. Alternatively, the base station devices can be configured to be capable of communicating with each other via an inter-base-station-device interface (for example, the X2 interface or the S1 interface). The interface can be a wired interface or a radio interface.

The base station devices 20 can be used, operated, and/or managed by various entities (agents). Herein, possible examples of the entity include a mobile network operator (MNO), a mobile virtual network operator (MVNO), a mobile virtual network enabler (MVNE), a neutral host network (NHN), an enterprise, an educational institute (such as an educational corporation or an autonomous education board), a real estate management firm (for managing buildings and condominiums), and an individual person.

Of course, the agents for using, operating, and/or managing the base station devices 20 are not limited to the abovementioned examples. The base station device 20 can be installed and/or operated by a single business operator, or can be installed and/or operated by a single individual person. Of course, the agents for installation/operation of the base station devices 20 are not limited to those examples. For example, the base station device 20 can be installed/operated by a plurality of business operators or a plurality of individual persons on a conjoint basis. Alternatively, the base station device 20 can be common utility used by a plurality of business operators or a plurality of individual persons. In that case, the installation and/or the operation of the equipment can be performed by a third party different than the users.

Meanwhile, the concept of a base station device (also called a base station) not only includes a donor base station but also includes a relay base station (also called a relay station or a relay station device). Moreover, the concept of a base station not only includes a structure equipped with the functions of a base station, but also includes a device installed in a structure.

Examples of the structure include a building such as a high-rise building, a house, a steel tower, a railway station facility, an airport facility, a port facility, and a stadium. However, the concept of a structure not only includes a building, but also includes a non-building structure such as a tunnel, a bridge, a dam, a wall, or a steel pole; or includes a facility such as a crane, a gate, or a windmill. Moreover, the concept of a structure not only includes a structure on land (above ground in a narrow sense) or a structure in the ground, but also includes a structure on the water, such as a pier or a mega-float, or an underwater structure such as a maritime observation facility. Meanwhile, a base station device can also be called a processing device or an information processing device in other words.

The base station device 20 can be a donor station or a relay station. Moreover, the base station device 20 can be a fixed station or a mobile station. A mobile station implies a radio communication device (for example, a base station device) configured to have portability. In that case, the base station device 20 can be a device installed on a mobile object, or can be a mobile object itself. For example, a relay station device having portability can be treated as the base station device 20 representing a mobile station. Alternatively, a device such as a vehicle, a drone, or a smartphone that originally has mobility capability and is equipped with the functions of a base station device (at least some functions of a base station device) is equivalent to the base station device 20 representing a mobile station.

Herein, the mobile object can be a mobile terminal such as a smartphone or a cellular phone. Alternatively, the mobile object can be a mobile object moving on land (above ground in a narrow sense) (for example, a vehicle such as an automobile, a bus, a truck, a motorcycle, a railway train, or a magnetic levitation train); or can be a mobile object moving underground (for example, through a tunnel) (such as underground railway).

Alternatively, the mobile object can be a mobile object moving on water (for example, a ship such as a passenger ship, a freight vessel, or a hovercraft); or can be mobile object moving underwater (for example, a submarine ship such as a submersible vessel, or an underwater craft, or an unmanned underwater vehicle).

Still alternatively, the mobile object can be a mobile object moving within the atmosphere (for example, an aircraft such as an airplane, an airship, or a drone); or can be a mobile object that moves in the outer space (for example, an artificial celestial body such as an artificial satellite, a spacecraft, a space station, or a probe vehicle). A mobile object moving in the outer space can be called a space mobile object in other words.

The base station device 20 can be a ground base station device (a ground station) installed on the ground. For example, the base station device 20 can be a base station device installed in a structure on the ground, or can be a base station device installed in a mobile object that moves on the ground. More particularly, the base station device 20 can be configured with an antenna installed on a structure, such as a building, and a signal processing device connected to the antenna. Of course, a structure or a mobile object itself can represent the base station device 20. Herein, "on the ground" is not limited to imply on land (above ground in a narrow sense), and implies above ground in a broad sense that also includes underground, on the water, and underwater. Moreover, the base station device 20 is not limited to a ground base station device. Alternatively, the base station device 20 can be a non-ground base station device (a non-ground station device) that is capable of floating on air or in space. For example, the base station device 20 can be an aircraft station device or a satellite station device.

An aircraft station device is a radio communication device such as an aircraft capable of floating within the atmosphere. Thus, an aircraft station device can be a device installed in an aircraft, or can be an aircraft itself. The concept of an aircraft not only includes a heavier-than-air aircraft such as an airplane or a glider, but also includes a lighter-than-air aircraft such as an airship. Moreover, the concept of an aircraft not only includes a heavier-than-air aircraft or a lighter-than-air aircraft, but also includes a rotary-wind airplane such as a helicopter or an autogiro. Meanwhile, an aircraft station device (or an aircraft in which an aircraft station device is installed) can also be an unmanned aircraft vehicle such as a drone.

The concept of an unmanned aircraft vehicle also includes an unmanned aircraft system (UAS) and a tethered UAS. Moreover, the concept of an unmanned aircraft vehicle also includes a lighter-than-air UAS (LTA UAS) and a heavier-than-air UAS (HTA UAS). Furthermore, the concept of an unmanned aircraft vehicle also includes high altitude UAS platforms (HAPs).

A satellite station device is a radio communication device capable of floating in the outer space. A satellite station device can be a device installed in a space mobile object such as an artificial satellite, or can be a space mobile object itself. The satellite representing a satellite station device can be a low earth orbiting (LEO) satellite, a medium earth orbiting (MEO) satellite, a geostationary earth orbiting (GEO) satellite, or a highly elliptical orbiting (HEO) satellite. Of course, a satellite radio device can be a device installed in an LEO satellite, an MEO satellite, a GEO satellite, or an HEO satellite.

The coverage of the base station device 20 can be in the range from large cells such as macro cells to small cells such as pico cells. Of course, the coverage of the base station device 20 can be for extremely small cells such as famto cells. Moreover, the base station device 20 can have the beam forming capability. In that case, the base station device 20 can have cells or service areas formed on a beam-by-beam basis.

In the example illustrated in FIG. 1, the base station device $20_1$ is connected to the relay device $30_1$, and the base station device $20_2$ is connected to the relay device $30_2$. Thus, the base station device $20_1$ is able to perform indirect radio communication with the terminal devices 40 via the relay device $30_1$. In an identical manner, the base station device $20_2$ is able to perform indirect radio communication with the terminal devices 40 via the relay device $30_2$.

[Relay device]

The relay devices 30 are devices representing relay stations for base stations. The relay device 30 is a type of base station device. A relay device can be called a relay base station device (or a relay base station) in other words. The relay device 30 can perform NOMA communication with the terminal devices 40. The relay device 30 relays the communication between the base station device 20 and the terminal devices 40. The relay device 30 can be configured to be capable of performing NOMA communication with the other relay devices 30 and the base station device 20. The relay devices 30 can be ground base station devices or can be non-ground base station devices. Along with the base station devices 20, the relay devices 30 constitute the radio access network RAN.

[Terminal device]

The terminal devices 40 are radio communication devices that perform radio communication with the base station devices 20 or the relay devices 30. Examples of the terminal device 40 include a cellular phone, a smart device (a smartphone or a tablet), a PDA (Personal Digital Assistant), or a personal computer. Alternatively, the terminal device 40 can be a device such as a professional camera equipped with the communication function, or can be a motorbike or a mobile relay vehicle in which a communication device such as an FPU (Field Pickup Unit) is installed. Still alternatively, the terminal device 40 can be an M2M (Machine to Machine) device or an IoT (Internet of Things) device.

Meanwhile, each terminal device 40 can be configured to be capable of performing sidelink communication with the other terminal devices 40. At the time of performing sidelink communication, the terminal device 40 can make use of an automatic repeat technology such as HARQ. The terminal device 40 can also configured to be capable of performing NOMA communication with the base station devices 20 and the relay devices 30. Moreover, the terminal device 40 can be configured to be capable of performing NOMA communication during the communication (sidelink) with the other terminal devices 40 too. Furthermore, the terminal device 40 can be configured to be capable of performing LPWA communication with the other communication devices (for example, the base station devices 20, the relay devices 30, and the other terminal devices 40). Apart from that, the radio communication used by the terminal device 40 can be radio communication using millimeter waves. Alternatively, the radio communication (including sidelink communication) used by the terminal device 40 can be radio communication using radio waves or can be radio communication (optical wireless) using infrared light or visible light.

Meanwhile, the terminal device 40 can be a mobile object device. Herein, a mobile object device is a radio communication device having portability. In this case, the terminal device 40 can be a radio communication device installed in a mobile object, or can be a mobile object itself. For example, the terminal device 40 can be a vehicle moving on a road such as an automobile, a bus, a truck, or a motorcycle; or can be a radio communication device installed in such a vehicle. Alternatively, the mobile object can be a mobile terminal, or can be a mobile object that moves on land (above ground in a narrow sense), or moves underground, or moves on the water, or moves underwater. Still alternatively, the mobile object can be a mobile object such as a drone or a helicopter that moves within the atmosphere; or can be a mobile object such as an artificial satellite that moves in the outer space.

The terminal device 40 can establish connection and perform simultaneous communication with a plurality of base station devices or a plurality of cells. For example, when a single base station device supports the communication area via a plurality of cells (for example, pCell and sCell), those cells can be bundled according to the carrier aggregation (CA) technology, or the dual connectivity (DC) technology, or the multi-connectivity (MC) technology, so as to enable communication between the base station device 20 and the terminal device 40. Alternatively, according to the CoMP (Coordinated MultiPoint Transmission and Reception) technology, the terminal device 40 can communicate with a plurality of base station devices 20 via the cells of those base station devices 20.

The terminal device 40 need not necessarily be a device that is directly used by a person. That is, the terminal device 40 can be a sensor installed in a machine of a factory, as in the case of what is called an MTC (Machine Type communication). Alternatively, the terminal device 40 can be an M2M (Machine to Machine) device or an IoT (Internet of Things) device. Still alternatively, the terminal device 40 can be a device equipped with the relay communication function, as represented by D2D (Device to Device) or V2X (Vehicle to everything). Still alternatively, the terminal device 40 can be a device called CPE (Client Premises Equipment) that is used in radio backhauling.

Given below is the specific explanation of a configuration of each device constituting the communication system 1 according to the embodiment. Herein, the configuration of each device as explained below is only exemplary. Thus, the configuration of each device can be different than the configuration explained below.

<2-2. Configuration of management device>

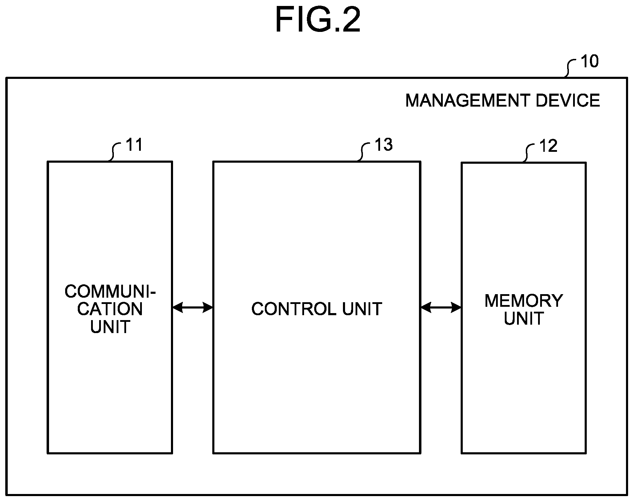

FIG. 2 is a diagram illustrating an exemplary configuration of the management device 10 according to the embodiment of the application concerned. The management device 10 is a device that manages a radio network. The management device 10 includes a communication unit 11, a memory unit 12, and a control unit 13. The configuration illustrated in FIG. 2 is a functional configuration, and the hardware configuration can be different from that. Moreover, the functions of the management device 10 can be implemented by dispersing them across a plurality of physically-separated configurations. For example, the management device 10 can be configured using a plurality of server devices.

The communication unit 11 is a communication interface for communicating with other devices. The communication unit 11 can be a network interface, or can be a network connection interface. For example, the communication unit 11 can be a LAN (Local Area Network) interface such as an NIC (Network Interface Card), or can be a USB (Universal Serial Bus) interface configured with a USB host controller and a USB port. Moreover, the communication unit 11 can be a wired interface or a radio interface. The communication unit 11 functions as a communication unit for the management device 10. The communication unit 11 communicates with the base station devices 20 under the control of the control unit 13.

The memory unit 12 is a data readable-writable memory device such as a DRAM (Dynamic Random Access Memory), an SRAM (Static Random Access Memory), a flash memory, or a hard disk. The memory unit 12 functions as a memory unit for the management device 10. For example, the memory unit 12 is used to store the connection states of the terminal devices 40. For example, the memory unit 12 is used to store the RRC (Radio Resource Control) states or the ECM (EPS Connection Management) states of the terminal devices 40. The memory unit 12 can also function as a home memory for storing the location information of the terminal devices 40.

The control unit 13 is a controller that controls the constituent elements of the management device 10. For example, the control unit 13 is implemented using a processor such as a CPU (Central Processing Unit) or an MPU (Micro Processing Unit). For example, the control unit 13 is implemented when the processor executes various programs, which are stored in an internal memory device of the management device 10, using a RAM (Random Access Memory) as the work area. Alternatively, the control unit 13 can be implemented using an integrated circuit such as an ASIC (Application Specific Integrated Circuit) or an FPGA (Field Programmable Gate Array). Herein, any one of a CPU, an MPU, an ASIC, and an FPGA can be treated as the controller.

<2-3. Configuration of base station device>

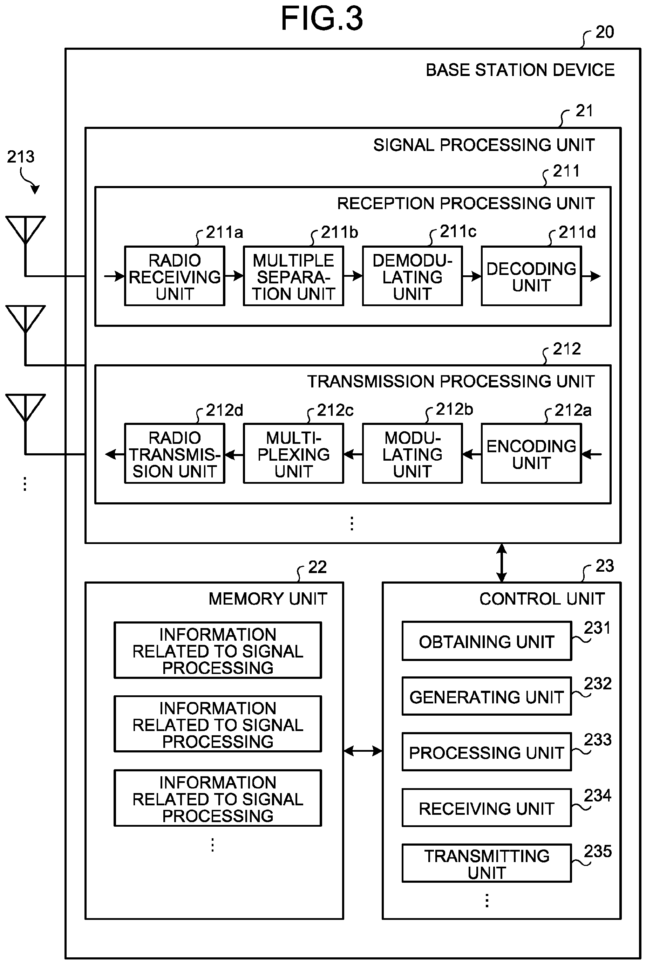

Given below is the explanation of a configuration of the base station device. FIG. 3 is a diagram illustrating an exemplary configuration of the base station device 20 according to the embodiment of the application concerned. Herein, in addition to supporting the conventional 4-step random access procedure (the contention based random access procedure) and the 3-step random access procedure (the non-contention based random access procedure), the base station device 20 also supports the 2-step random access procedure. Moreover, the base station device 20 can perform NOMA communication with the terminal devices 40. The base station device 20 includes a signal processing unit 21, a memory unit 22, and a control unit 23. The configuration illustrated in FIG. 3 is a functional configuration, and the hardware configuration can be different from that. Moreover, the functions of the base station device 20 can be implemented by dispersing them across a plurality of physically-separated configurations.

The signal processing unit 21 is a signal processing unit for performing radio communication with other radio communication devices (for example, the terminal devices 40 and the relay devices 30). The signal processing unit 21 performs operations under the control of the control unit 23. Moreover, the signal processing unit 21 is compatible to one or more radio access methods. For example, the signal processing unit 21 is compatible to the NR and the LTE. In addition to being compatible to the NR and the LTE, the signal processing unit 21 can also be compatible to W-CDMA and cdma2000. Moreover, the signal processing unit 21 is compatible to the communication performed using the NOMA. The detailed explanation about the NOMA is given later.

The signal processing unit 21 includes a reception processing unit 211, a transmission processing unit 212, and an antenna 213. Herein, the signal processing unit 21 can include a plurality of reception processing units 211, a plurality of transmission processing units 212, and a plurality of antennas 213. When the signal processing unit 21 is compatible to a plurality of radio access methods, the constituent elements of the signal processing unit 21 can be separately configured for each radio access method. For example, the reception processing unit 211 and the transmission processing unit 212 can be separately configured for the LTE and for the NR.

The reception processing unit 211 processes the uplink signals received via the antenna 213. The reception processing unit 211 includes a radio receiving unit 211a, a multiple separation unit 211b, a demodulating unit 211c, and a decoding unit 211d.

With respect to the uplink signals, the radio receiving unit 211a performs down-conversion, elimination of unnecessary frequency components, control of amplification level, orthogonal demodulation, conversion into digital signals, elimination of guard interval (cyclic prefix), and extraction of frequency domain signals according to fast Fourier transform. The multiple separation unit 211b separates, from the signals output from the radio receiving unit 211a, uplink channels such as the PUSCH (Physical Uplink Shared Channel) and the PUCCH (Physical Uplink Control Channel), and the uplink reference signal. The demodulating unit 211c demodulates the received signals by implementing a modulation method such as the BPSK (Binary Phase Shift Keying) or the QPSK (Quadrature Phase Shift Keying) with respect to modulation symbols of the uplink channels. The demodulating unit 211c can alternatively implement a modulation method such as the 16QAM (Quadrature Amplitude Modulation), the 64QAM, or the 256QAM. In that case, the signal points on the constellation need not necessarily be equidistant. Herein, the constellation can be a non-uniform constellation (NUC). The decoding unit 211d decodes the encoded bits of the demodulated uplink channels. Then, the demodulated uplink data and uplink control information is output to the control unit 23.

The transmission processing unit 212 transmits downlink control information and downlink data. The transmission processing unit 212 includes an encoding unit 212a, a modulating unit 212b, a multiplexing unit 212c, and a radio transmission unit 212d.

The encoding unit 212a encodes the downlink control information and the downlink data, which is input thereto from the control unit 23, according to an encoding method such as block encoding, convolutional encoding, or turbo encoding. The modulating unit 212b modulates the encoded bits, which are output from the encoding unit 212a, according to a predetermined modulation method such as the BPSK, the QPSK, the 16QAM, the 64QAM, or the 256QAM. In that case, the signal points on the constellation need not necessarily be equidistant. Herein, the constellation can be a non-uniform constellation. The multiplexing unit 212c multiplexes the modulation symbols of each channel and the downlink reference signal, and places the result of multiplexing in a predetermined resource element. The radio transmission unit 212d performs a variety of signal processing with respect to the signals received from the multiplexing unit 212c. For example, the radio transmission unit 212d performs conversion into time domain according to fast Fourier transform, addition of the guard interval (cyclic prefix), generation of digital signals of the baseband, conversion into analog signals, orthogonal modulation, up-conversion, elimination of excess frequency components, and power amplification. Then, the signals generated by the transmission processing unit 212 are transmitted to the antenna 213.

The memory unit 22 is a data readable-writable memory device such as a DRAM, an SRAM, a flash memory, or a hard disk. The memory unit 22 functions as the memory unit of the base station device 20. The memory unit 22 is used to store "information related to the transmission in the unconnected state (information about unconnected transmission)" to be notified to the terminal devices. Regarding the "information related to the transmission in the unconnected state (information about unconnected transmission)", the detailed explanation is given later.

The control unit 23 is a controller that controls the constituent elements of the base station device 20. For example, the control unit 23 is implemented using a processor such as a CPU (Central Processing Unit) or an MPU (Micro Processing Unit). For example, the control unit 23 is implemented when the processor executes various programs, which are stored in an internal memory device of the base station device 20, using a RAM (Random Access Memory) as the work area. Alternatively, the control unit 23 can be implemented using an integrated circuit such as an ASIC (Application Specific Integrated Circuit) or an FPGA (Field Programmable Gate Array). Herein, any one of a CPU, an MPU, an ASIC, and an FPGA can be treated as the controller.

As illustrated in FIG. 3, the control unit 23 includes an obtaining unit 231, a generating unit 232, a processing unit 233, a receiving unit 234, and a transmitting unit 235. The blocks (the obtaining unit 231 to the transmitting unit 235) constituting the control unit 23 are functional blocks indicating the functions of the control unit 23. These functional blocks can be implemented either as software blocks or as hardware blocks. For example, each functional block can be a single software module implemented using software (including microprograms), or can be a single circuit block on a semiconductor chip (die). Of course, each functional block can be a single processor or a single integrated circuit. Thus, the method of configuring the functional blocks is arbitrary.

Meanwhile, the control unit 23 can be configured in different functional units than the functional blocks mentioned above. Regarding the operations of the blocks (the obtaining unit 231 to the transmitting unit 235) constituting the control unit 23, the explanation is given later. Moreover, the operations of the blocks constituting the control unit 23 can be identical to the operations of the blocks constituting the control unit of the terminal device 40. The explanation of a configuration of the terminal device 40 is given later.

<2-4. Configuration of relay device>

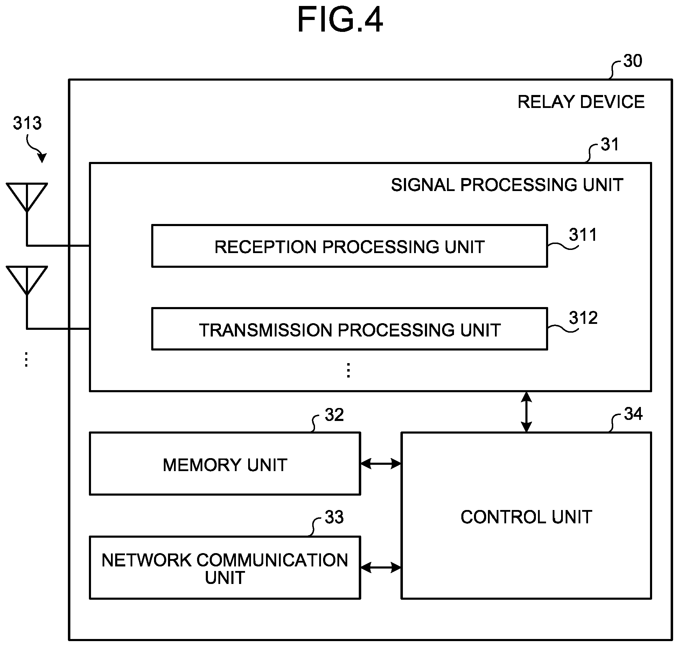

Given below is the explanation of a configuration of the relay device 30. FIG. 4 is a diagram illustrating an exemplary configuration of the relay device 30 according to the embodiment of the application concerned. The relay device 30 can perform NOMA communication with the terminal devices 40. The relay device 30 includes a signal processing unit 31, a memory unit 32, a network communication unit 33, and a control unit 34. The configuration illustrated in FIG. 4 is a functional configuration, and the hardware configuration can be different from that. Moreover, the functions of the relay device 30 can be implemented by dispersing them across a plurality of physically-separated configurations.

The signal processing unit 31 is a signal processing unit for performing radio communication with other radio communication devices (for example, the base station device 20 and the terminal devices 40). The signal processing unit 31 performs operations under the control of the control unit 34. The signal processing unit 31 includes a reception processing unit 311, a transmission processing unit 312, and an antenna 313. The configuration of the signal processing unit 31, the reception processing unit 311, the transmission processing unit 312, and the antenna 313 is identical to the configuration of the signal processing unit 21, the reception processing unit 211, the transmission processing unit 212, and the antenna 213, respectively, of the base station device 20.

The memory unit 32 is a data readable-writable memory device such as a DRAM, an SRAM, a flash memory, or a hard disk. The memory unit 32 functions as the memory unit of the relay device 30. The configuration of the memory unit 32 is identical to the configuration of the memory unit 22 of the base station device 20.

The network communication unit 33 is a communication interface for communicating with other devices. For example, the network communication unit 33 is a LAN interface such as an NIC. The network communication unit 33 can be a wired interface or a radio interface. The network communication unit 33 functions as the network communication unit of the relay device 30. The network communication unit 33 communicates with the base station device 20 under the control of the control unit 34.

The control unit 34 is a controller that controls the constituent elements of the relay device 30. The configuration of the control unit 34 can be identical to the configuration of the control unit 23 of the base station device 20.

<2-5. Configuration of terminal device>

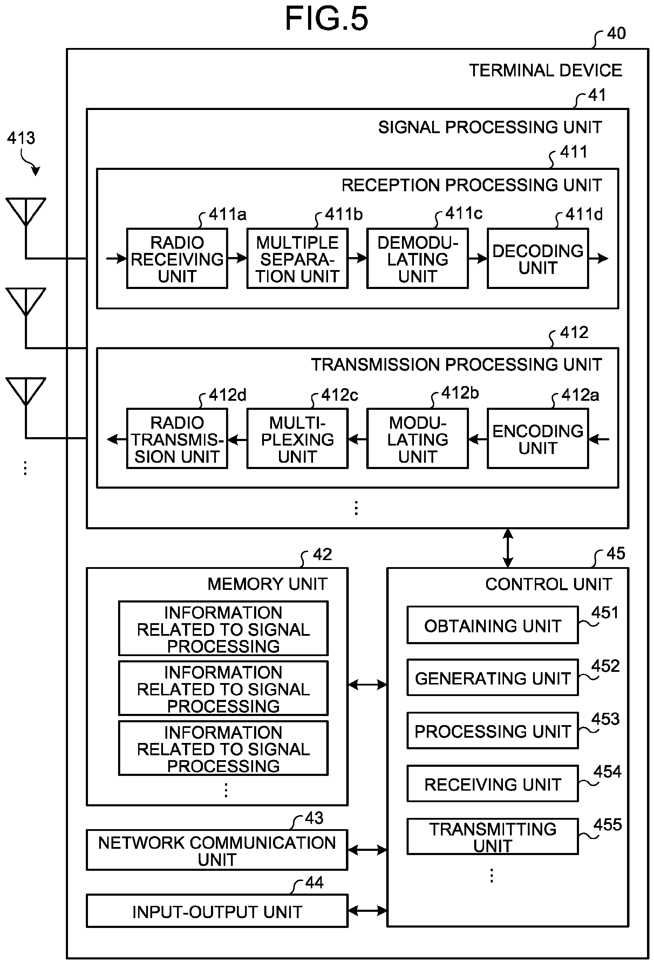

Given below is the explanation of a configuration of the terminal device 40. FIG. 5 is a diagram illustrating an exemplary configuration of the terminal device 40 according to the embodiment of the application concerned. Herein, in addition to be able to use the conventional 4-step random access procedure (the contention based random access procedure) and the 3-step random access procedure (the non-contention based random access procedure), the terminal device 40 can also use the 2-step random access procedure. The terminal device 40 can perform NOMA communication with the base station devices 20 and the relay devices 30. The terminal device 40 includes a signal processing unit 41, a memory unit 42, a network communication unit 43, an input-output unit 44, and a control unit 45. The configuration illustrated in FIG. 5 is a functional configuration, and the hardware configuration can be different from that. Moreover, the functions of the terminal device 40 can be implemented by dispersing them across a plurality of physically-separated configurations.

The signal processing unit 41 is a signal processing unit for performing radio communication with other radio communication devices (for example, the base station devices 20 and the relay devices 30). The signal processing unit 41 performs operations under the control of the control unit 45. The signal processing unit 41 is compatible to one or more radio access methods. For example, the signal processing unit 41 is compatible to the NR and the LTE. In addition to being compatible to the NR and the LTE, the signal processing unit 41 can also be compatible to W-CDMA and cdma2000. Moreover, the signal processing unit 41 is compatible to the communication performed using the NOMA. The detailed explanation about the NOMA is given later.

The signal processing unit 41 includes a reception processing unit 411, a transmission processing unit 412, and an antenna 413. Herein, the signal processing unit 41 can include a plurality of reception processing units 411, a plurality of transmission processing units 412, and a plurality of antennas 413. When the signal processing unit 41 is compatible to a plurality of radio access methods, the constituent elements of the signal processing unit 41 can be separately configured for each radio access method. For example, the reception processing unit 411 and the transmission processing unit 412 can be separately configured for the LTE and for the NR.

The reception processing unit 411 processes downlink signals that are received via the antenna 413. The reception processing unit 411 includes a radio receiving unit 411a, a multiple separation unit 411b, a demodulating unit 411c, and a decoding unit 411d.

With respect to the downlink signals, the radio receiving unit 411a performs down-conversion, elimination of unnecessary frequency components, control of amplification level, orthogonal demodulation, conversion into digital signals, elimination of guard interval (cyclic prefix), and extraction of frequency domain signals according to fast Fourier transform. The multiple separation unit 411b separates, from the signals output from the radio receiving unit 411a, downlink channels, downlink synchronization signals, and the downlink reference signal. The downlink channels are channels such as the PBCH (Physical Broadcast Channel), the PDSCH (Physical Downlink Shared Channel), and the PDCCH (Physical Downlink Control Channel). The demodulating unit 211c demodulates the received signals by implementing a modulation method such as the BPSK, the QPSK, the 16QAM, the 64QAM, or the 256QAM with respect to modulation symbols of the downlink channels. In that case, the signal points on the constellation need not necessarily be equidistant. Herein, the constellation can be a non-uniform constellation (NUC). The decoding unit 411d decodes the encoded bits of the demodulated downlink channels. Then, the demodulated downlink data and downlink control information is output to the control unit 45.

The transmission processing unit 412 transmits uplink control information and uplink data. The transmission processing unit 412 includes an encoding unit 412a, a modulating unit 412b, a multiplexing unit 412c, and a radio transmission unit 412d.

The encoding unit 412a encodes the uplink control information and the uplink data, which is input thereto from the control unit 45, according to an encoding method such as block encoding, convolutional encoding, or turbo encoding. The modulating unit 412b modulates the encoded bits, which are output from the encoding unit 412a, according to a predetermined modulation method such as the BPSK, the QPSK, the 16QAM, the 64QAM, or the 256QAM. In that case, the signal points on the constellation need not necessarily be equidistant. Herein, the constellation can be a non-uniform constellation. The multiplexing unit 412c multiplexes the modulation symbols of each channel and the uplink reference signal, and places the result of multiplexing in a predetermined resource element. The radio transmission unit 412d performs a variety of signal processing with respect to the signals received from the multiplexing unit 412c. For example, the radio transmission unit 412d performs conversion into the time domain according to inverse fast Fourier transform, addition of the guard interval (cyclic prefix), generation of digital signals of the baseband, conversion into analog signals, orthogonal modulation, up-conversion, elimination of excess frequency components, and power amplification. Then, the signals generated by the transmission processing unit 412 are transmitted to the antenna 413.

The memory unit 42 is a data readable-writable memory device such as a DRAM, an SRAM, a flash memory, or a hard disk. The memory unit 42 functions as the memory unit of the terminal device 40. Herein, the memory unit 42 is used to store "information related to the transmission in the unconnected state (information about unconnected transmission)" that is obtained from the base station device 20. Regarding the "information related to the transmission in the unconnected state (information about unconnected transmission)", the detailed explanation is given later.

The network communication unit 43 is a communication interface for communicating with other devices. For example, the network communication unit 43 is a LAN interface such as an NIC. The network communication unit 43 can be a wired interface or a radio interface. The network communication unit 43 functions as the network communication unit of the terminal device 40. The network communication unit 43 communicates with other devices under the control of the control unit 45.

The input-output unit 44 is a user interface for communicating information with the user. For example, the input-output unit 44 is an operating unit such as a keyboard, a mouse, operation keys, or a touch-sensitive panel that enables the user to perform various operations. Alternatively, the input-output unit 44 is a display device such as a liquid crystal display or an organic EL (Electroluminescence) display. Still alternatively, the input-output unit 44 can be an acoustic device such as a speaker or a buzzer. Still alternatively, the input-output unit 44 can be an illumination device such as an LED (Light Emitting Diode) lamp. The input-output unit 44 functions as an input-output unit (an input unit, an output unit, an operating unit, or a notifying unit) of the terminal device 40.

The control unit 45 is a controller that controls the constituent elements of the terminal device 40. For example, the control unit 45 is implemented using a processor such as a CPU or an MPU. For example, the control unit 45 is implemented when the processor executes various programs, which are stored in an internal memory device of the terminal device 40, using a RAM as the work area. Alternatively, the control unit 45 can be implemented using an integrated circuit such as an ASIC or an FPGA. Herein, any one of a CPU, an MPU, an ASIC, and an FPGA can be treated as the controller.

As illustrated in FIG. 5, the control unit 45 includes an obtaining unit 451, a generating unit 452, a processing unit 453, a receiving unit 454, and a transmitting unit 455. The blocks (the obtaining unit 451 to the transmitting unit 455) constituting the control unit 45 are functional blocks indicating the functions of the control unit 45. These functional blocks can be implemented either as software blocks or as hardware blocks. For example, each functional block can be a single software module implemented using software (including microprograms), or can be a single circuit block on a semiconductor chip (die). Of course, each functional block can be a single processor or a single integrated circuit. Thus, the method of configuring the functional blocks is arbitrary.

Meanwhile, the control unit 45 can be configured in different functional units than the functional blocks mentioned above. Regarding the operations of the blocks (the obtaining unit 451 to the transmitting unit 455) constituting the control unit 45, the explanation is given later. Moreover, the operations of the blocks constituting the control unit 45 can be identical to the operations of the blocks constituting the control unit 23 of the base station device 20 (i.e., the obtaining unit 231 to the transmitting unit 235).

<2-6. Configuration of radio frame>

Given below is the explanation of a configuration of a radio frame in the radio access network RAN.

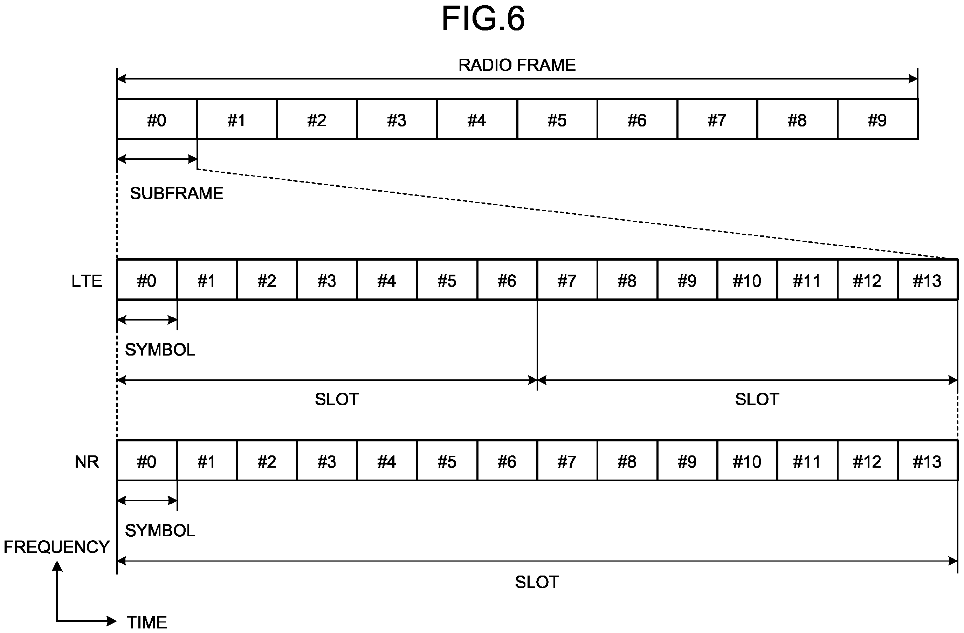

FIG. 6 is a diagram illustrating a configuration of a radio frame in the radio access network RAN. In the radio access network RAN, radio frames configured with the time intervals of 10 ms are defined. A single radio frame is configured with 10 subframes. The subframes have the time interval of 1 ms. A subframe is configured with, for example, 14 symbols. Herein, a symbol is, for example, an OFDM symbol or an SC-FDMA symbol. In the LTE, for example, seven symbols constitute a single slot. In the NR, for example, 14 symbols constitute a single slot. The following explanation is given about the subframe configuration in the LTE and in the NR.

[Subframe configuration in LTE]

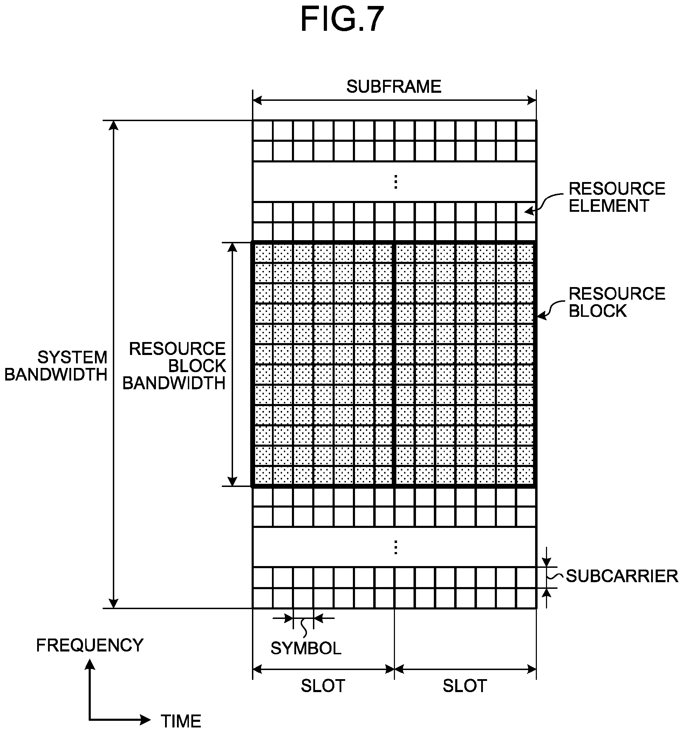

FIG. 7 is a diagram illustrating an example of the subframe configuration in the LTE. In the example illustrated in FIG. 7, the system bandwidth implies the bandwidth of LTE cells. In a resource grid, each of a plurality of lattices indicates a resource element. A single resource element has the size of one subcarrier in the frequency direction and one symbol in the time direction. In the case of the LTE, a single slot is defined by a plurality of symbols. In a single slot, the number of symbols is decided according to the type of the CP (Cyclic Prefix). The types of the CP include the normal CP and the extended CP. In the normal CP, there are seven symbols constituting a single slot. In the extended CP, there are six symbols constituting a single slot.

A resource block is used for mapping a particular physical channel (such as the PDSCH or the PUSCH) onto resource elements. A single resource block is defined by a predetermined number of successive subcarriers in the frequency domain and a predetermined number of successive symbols in the time domain. The number of symbols and the number of subcarriers (the resource block bandwidth) in a single resource block are decided based on the type of the CP in that cell, the subcarrier spacing, and/or the higher layer. For example, when the normal CP is the CP type and when the subcarrier spacing is equal to 15 kHz, there are seven symbols and 12 subcarriers in a single resource block. In this case, a single resource block is configured with ($7 \times 12$) number of resource elements.

In each LTE cell, in a particular subframe, predetermined parameters are used. The predetermined parameters are, for example, parameters (physical parameters) related to transmission signals. The parameters related to transmission signals include the CP length, the subcarrier length, the number of symbols in a single subframe (a predetermined duration), the number of subcarriers in a single resource block (a predetermined frequency bandwidth), the multiple access scheme, and the signal waveform. In an LTE cell, during a predetermined duration (for example, a subframe), the link signals (the downlink signals and the uplink signals) are generated using a single predetermined parameter.

[Frame configuration in NR]

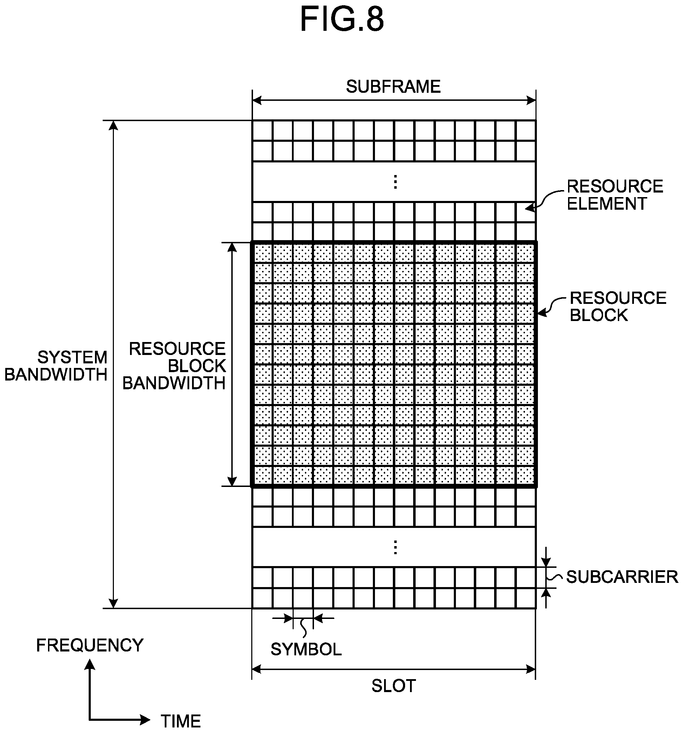

FIG. 8 is a diagram illustrating an example of the subframe configuration in the NR. In the example illustrated in FIG. 8, the system bandwidth implies the bandwidth of NR cells. In the case of NR cells, during a predetermined duration (for example, a subframe), one or more predetermined parameters are used. That is, in the NR cells, during a predetermined duration, the link signals are generated using one or more predetermined parameters. When a plurality of predetermined parameters is used, the signals generated using those predetermined parameters are multiplexed according to a predetermined method. Examples of the predetermined method include the FDM (Frequency Division Multiplexing), the TDM (Time Division Multiplexing), the CDM (Code Division Multiplexing), and the SDM (Spatial Division Multiplexing).

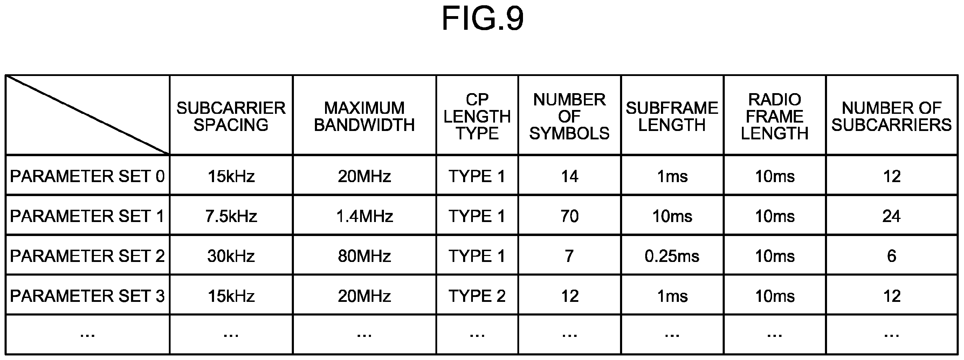

Regarding the combination of parameters set in the NR cells, a plurality of combinations can be defined in advance as parameter sets. FIG. 9 is a diagram illustrating an example of the parameter sets related to transmission signals in the NR cells. In the example illustrated in FIG. 9, the parameters include "subcarrier spacing", "maximum bandwidth" of the component carrier, "CP length type", "number of symbols" in each subframe, and "number of subcarriers" in each resource block in the NR cells. Moreover, "radio frame length" can also be included as a parameter. Herein, the "CP length type" implies the type of the CP length used in the NR cells. For example, a CP length type 1 corresponds to the normal CP in the LTE, and a CP length type 2 corresponds to the extended CP in the LTE. The parameter set related to transmission signals in the NR cells can be separately defined for the downlink and for the uplink. Moreover, the parameter set related to transmission signals in the NR cells can be independently defined for the downlink and for the uplink.

In the example in FIG. 9, a parameter set 0 is defined with the following parameters: 15 kHz (subcarrier spacing), 20 MHz (maximum bandwidth), type 1 (CP length type), 14 (number of symbols), 1 ms (subframe length), 10 ms (radio frame length), and 12 (number of subcarriers). Moreover, a parameter set 1 is defined with the following parameters: 7.5 kHz (subcarrier spacing), 1.4 MHz (maximum bandwidth), type 1 (CP length type), 70 (number of symbols), 10 ms (subframe length), 10 ms (radio frame length), and 24 (number of subcarriers). Furthermore, a parameter set 2 is defined with the following parameters: 30 kHz (subcarrier spacing), 80 MHz (maximum bandwidth), type 1 (CP length type), 7 (number of symbols), 0.25 ms (subframe length), 10 ms (radio frame length), and 6 (number of subcarriers). Moreover, a parameter set 3 is defined with the following parameters: 15 kHz (subcarrier spacing), 20 MHz (maximum bandwidth), type 2 (CP length type), 12 (number of symbols), 1 ms (subframe length), 10 ms (radio frame length), and 12 (number of subcarriers).

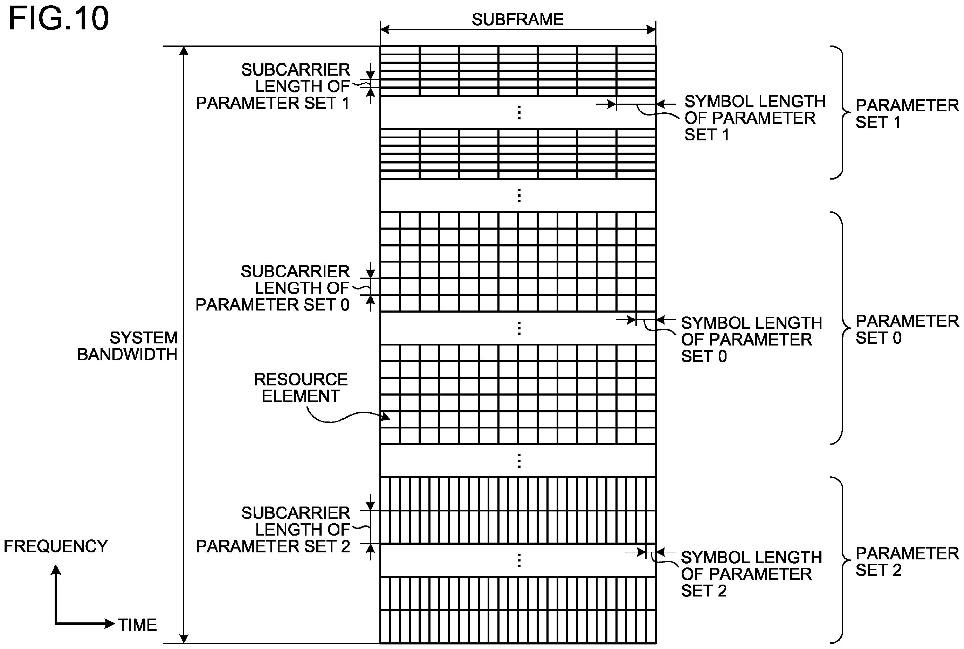

FIG. 10 is a diagram illustrating an example of the downlink subframe in the NR. In the example illustrated in FIG. 10, the signals generated using the parameter set 1, the parameter set 0, and the parameter set 2 are subjected to frequency division multiplexing (FDM) to have the bandwidth of the cells (the system bandwidth).

<<Regarding NOMA>>

One of the technologies being studied in the NR is the non-orthogonal multiple access (NOMA). In that technology, in addition to using orthogonal resources, non-orthogonal resources are also used so as to enhance the frequency usage efficiency.

Examples of the orthogonal resources include time (for example, subframes, slots, and radio frames); frequency (for example, component carriers, subcarriers, sub-channels, and resource blocks); and orthogonal codes. Examples of the non-orthogonal resources include space; electrical power; interleaving (for example, bit interleaving and symbol interleaving); data rate; and codes (for example, sparse code and diffusion codebook). Herein, the space implies, for example, a space stream, a space layer, a space codebook, an antenna, or an antenna port. Meanwhile, the orthogonal resources and the non-orthogonal resources are not limited to the examples given above. In the following explanation, communication (transmission, reception, or both transmission and reception) performed using the non-orthogonal resources is sometimes called NOMA communication. Moreover, in the following explanation, transmission performed using the non-orthogonal resources is sometimes called NOMA transmission, and reception (decoding) of signals that were transmitted using NOMA transmission is sometimes called NOMA reception.

As described above, the communication devices according to the present embodiment are capable of transmitting user data in the unconnected state. If NOMA transmission is used to transmit user data in the unconnected state, then the frequency usage efficiency is further enhanced.

Meanwhile, in the orthogonal multiple access (OMA), for example, transmission and reception of data is performed using the frequency axis and the time axis that are orthogonal to each other. In that case, the frame configuration of the frequency resources and the time resources is decided according to the subcarrier spacing, and it is not possible to use the resources equal to or greater than the number of resource elements. In contrast, in the non-orthogonal multiple access (NOMA), the frame configuration is decided by adding a non-orthogonal axis (for example, an interleave pattern axis, a spreading pattern axis, a scrambling pattern axis, a codebook axis, or a power axis) to the frequency axis and the time axis that are orthogonal to each other.

Given below is the explanation of the transmission and reception performed using the NOMA.

[Non-orthogonal multiplexing in transmission device]

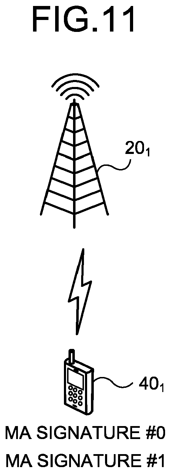

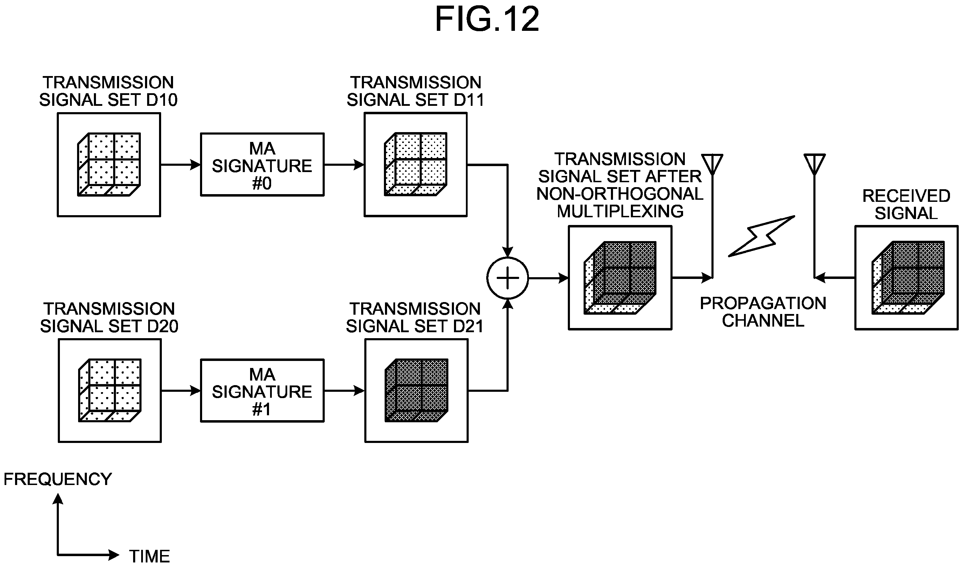

FIG. 11 is a diagram for explaining the transmission and reception of data using the NOMA. In the example illustrated in FIG. 11, a single transmission device multiplexes transmission signals on the non-orthogonal axis, and transmits them. Herein, the transmission device is a communication device such as the base station device 20, the relay device 30, or the terminal device 40. In the example illustrated in FIG. 11, a single transmission device (for example, the terminal device $40_1$) multiplexes two transmission signal sets. FIG. 12 is an explanatory diagram for explaining an example of the NOMA transmission operation performed according to the embodiment of the application concerned. In the example illustrated in FIG. 12, all resources that are multiplexed on the non-orthogonal axis have the same parameter set.

Meanwhile, the NOMA transmission operation as explained below is implemented when, for example, the control unit 45 of the terminal device 40 controls the transmission processing unit 412. Alternatively, the transmission operation explained below is implemented when, for example, the control unit 23 of the base station device 20 (for example, the processing unit 233 and the transmitting unit 235) controls the transmission processing unit 212.

A transmission signal set represents, for example, signals that are generated as a result of performing signal processing for radio communication with respect to some or all of the transmission data generated in the communication device. That is, a transmission signal set represents the transmission data (some or all of the transmission data) that has been subjected to signal processing for radio communication. Herein, the transmission data represents data related to a single instance of processing arising in the communication device. For example, the transmission data represents data related to a single transmission job arising in various programs (for example, application programs and the operating system) executed in the communication device.

In the present embodiment, the transmission data is divided into a plurality of sets of data. In the following explanation, the data representing the unit for transmission (unit for division) of the transmission data is called transmission-unit data. Herein, the transmission-unit data can be a single IP packet or can be a single transport block. Of course, the transmission-unit data can have some other unit for transmission. A transport block is, for example, the unit for error correction of HARQ (Hybrid ARQ (Automatic Repeat request). For example, a transport block is a block of data in the transport channel (transport layer). Meanwhile, a transmission signal set can be signals (transmission-unit data) that are generated as a result of performing signal processing on the transmission-unit data such as a transport block. In the following explanation, a transmission signal set is assumed to be data obtained when transmission-unit data such as a transport block is subjected to signal processing using the OFDM for the purpose of radio communication.

A transmission signal set (transmission-unit data) can be configured with a plurality of blocks or a plurality of elements. For example, assume that transport blocks represent the transmission signal set. In that case, in the transmission signal set, the transmission-unit data can be configured with a plurality of resource blocks or resource elements. In the example explained below, it is assumed that a transmission signal set is configured with a plurality of blocks. In the example illustrated in FIG. 12, transmission signal sets D10 and D20 are configured with four blocks (for example, resource blocks).

In the example illustrated in FIG. 12, to each of the transmission signal sets D10 and D20, the transmission device applies a corresponding MA signature (Multiple Access signature). An MA signature represents a part of the information related to non-orthogonal multiplexing. In an MA signature, for example, an interleave pattern, a spreading pattern, a scrambling pattern, a codebook, and power allocation are included. Meanwhile, an MA signature can be simply called a pattern or an index. For example, an MA signature can be an identifier for the pattern or the index used in NOMA transmission explained earlier; or can represent the pattern itself. In the following explanation, applying an MA signature to a predetermined transmission signal set is called the NOMA transmission operation using an MA signature. Examples of the NOMA transmission operation using an MA signature include converting a predetermined transmission signal set, which is mapped onto a predetermined orthogonal resource, into a transmission signal set that is transmittable using the non-orthogonal resource indicated by the MA signature.

In the example illustrated in FIG. 12, the transmission device (for example, the control unit 45 of the terminal device $40_1$) performs the NOMA transmission operation in which an MA signature #0 is used in the transmission signal set D10, and performs the NOMA transmission operation in which an MA signature #1 is used in the transmission signal set D20. The MA signatures #0 and #1 are compatible non-orthogonal resources. For example, assume that power allocation represents the MA signature (i.e., the power axis represents the non-orthogonal axis). In that case, the MA signature #0 can be information indicating conversion of a predetermined transmission signal set into a transmission signal set having lower electrical power (for example, electrical power equal to or lower than a first threshold value). Moreover, the MA signature #1 can be information indicating conversion of a predetermined transmission signal set into a transmission signal set having higher electrical power (for example, electrical power equal to or higher than the first threshold value and equal to or lower than a second threshold value). The transmission device multiplexes the post-MA-signature-application signals on the same frequency resources and the same time resources. For example, the transmission device performs non-orthogonal multiplexing of transmission signal sets D11 and D21, which are generated as a result of performing the NOMA transmission operations, on the same orthogonal resources. Then, the transmission device (for example, the transmitting unit 455 of the terminal device $40_1$) transmits the signals, which have been subjected to non-orthogonal multiplexing, to an antenna port.

In the example illustrated in FIG. 12, the transmission device performs multiplexing of two transmission signals. However, there can be three or more transmission signals multiplexed by the transmission device. Moreover, each transmission signal set can correspond to a different reception device, or all transmission signals can correspond to the same reception device. Herein, the reception device implies a communication device such as the base station device 20, the relay device 30, or the terminal device 40.

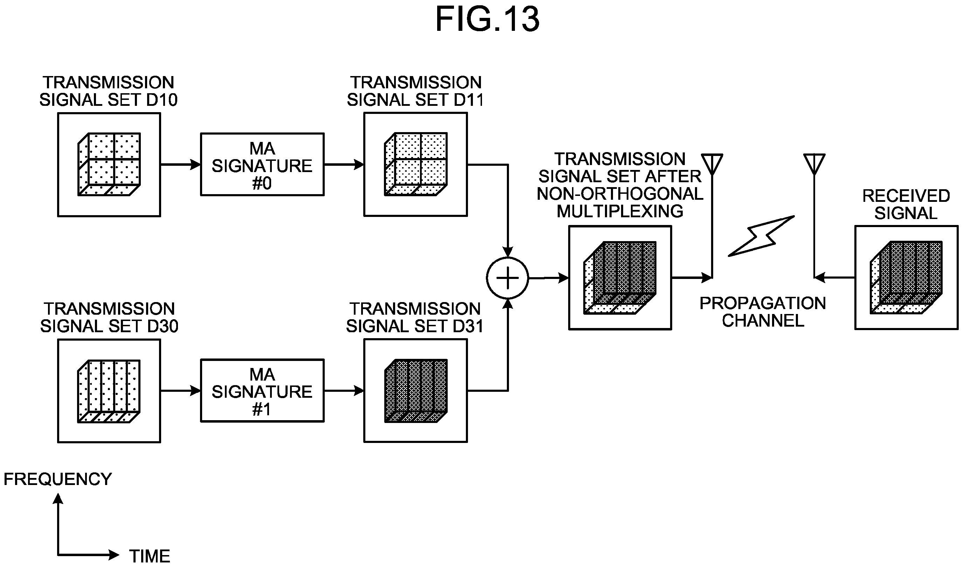

Moreover, in the example illustrated in FIG. 12, the transmission device performs multiplexing of transmission signal sets having the same parameter set. However, alternatively, the transmission device can perform multiplexing of transmission signal sets having different parameter sets. FIG. 13 is an explanatory diagram for explaining an example of the NOMA transmission operation performed according to the embodiment of the application concerned. In the example illustrated in FIG. 13, two transmission signal sets having different parameter sets are multiplexed. More particularly, in the example illustrated in FIG. 13, the transmission device (for example, the control unit 45 of the terminal device $40_1$) performs the NOMA transmission operations in which MA signatures (the MA signatures #0 and #1) are used that correspond to transmission signal sets D10 and D30, respectively. The transmission signal sets D30 and D40 are transmission signal sets having different parameter sets. Then, the transmission device performs non-orthogonal multiplexing of transmission signal sets D11 and D31, which are generated as a result of performing the NOMA transmission operations, on the same orthogonal resources. Subsequently, the transmission device (for example, the transmitting unit 455 of the terminal device $40_1$) transmits the signals, which have been subjected to non-orthogonal multiplexing, to an antenna port.

[Non-orthogonal multiplexing in propagation channel]

In the examples illustrated in FIGS. 12 and 13, a plurality of transmission signal sets is subjected to non-orthogonal multiplexing in the transmission device. Alternatively, a plurality of transmission signal sets can be subjected to non-orthogonal multiplexing in a propagation channel.

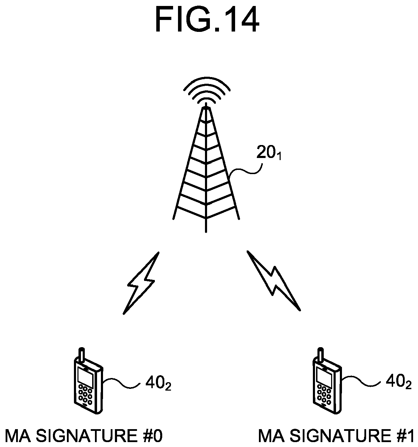

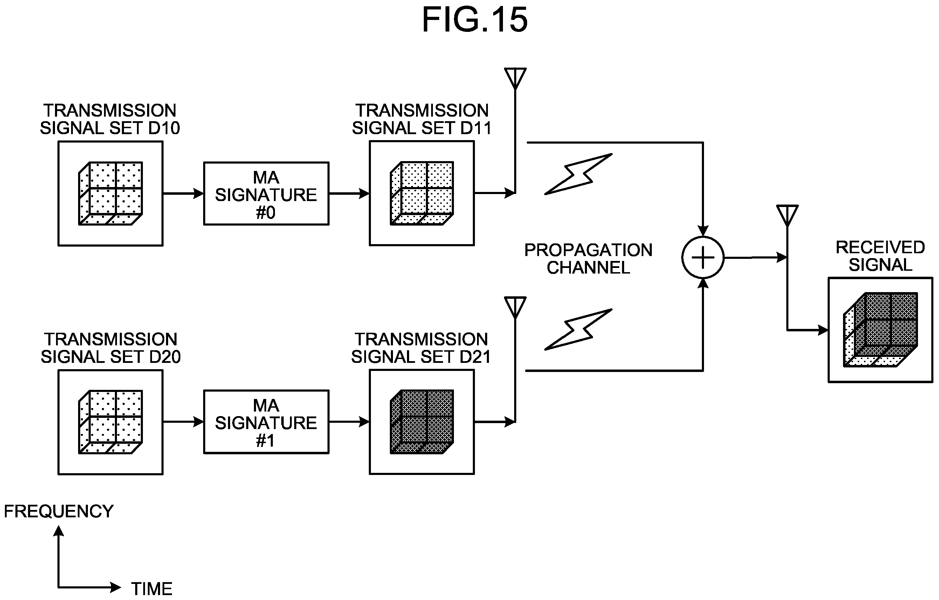

FIG. 14 is a diagram for explaining the transmission and reception of data using the NOMA. In the example illustrated in FIG. 14, transmission signals of a plurality of transmission devices are subjected to non-orthogonal multiplexing in a propagation channel. Herein, a plurality of transmission signal sets can be transmitted from different transmission devices (for example, the terminal devices 401 and 402), or can be transmitted from different antennas of a single transmission device (for example, the terminal device 401). In the following explanation, it is assumed that the two transmission signal sets are transmitted from different transmission devices. Of course, the two transmission signal sets can be transmitted from a single transmission device. FIG. 15 is an explanatory diagram for explaining an example of the NOMA transmission operation performed according to the embodiment of the application concerned. In the example illustrated in FIG. 15, two transmission signal sets are transmitted from different antennas.

In the example illustrated in FIG. 15, one of the transmission devices (for example, the terminal device $40_1$) performs the NOMA transmission operation in which the MA signature #0 is used in the transmission signal set D10. The other transmission device (for example, the terminal device $40_2$) performs the NOMA transmission operation in which the MA signature #1 is used in the transmission signal set D20. The MA signatures #0 and #1 are compatible non-orthogonal resources. In an MA signature, for example, an interleave pattern, a spreading pattern, a scrambling pattern, a codebook, and power allocation are included. The post-MA-signature-application transmission signal sets D11 and D21 are transmitted on the same frequency resources and the same time resources, and are multiplexed through a propagation channel.

In the example illustrated in FIG. 15, the transmission signal sets having the same parameter sets are multiplexed. Alternatively, transmission signal sets having different parameter sets can also be multiplexed.

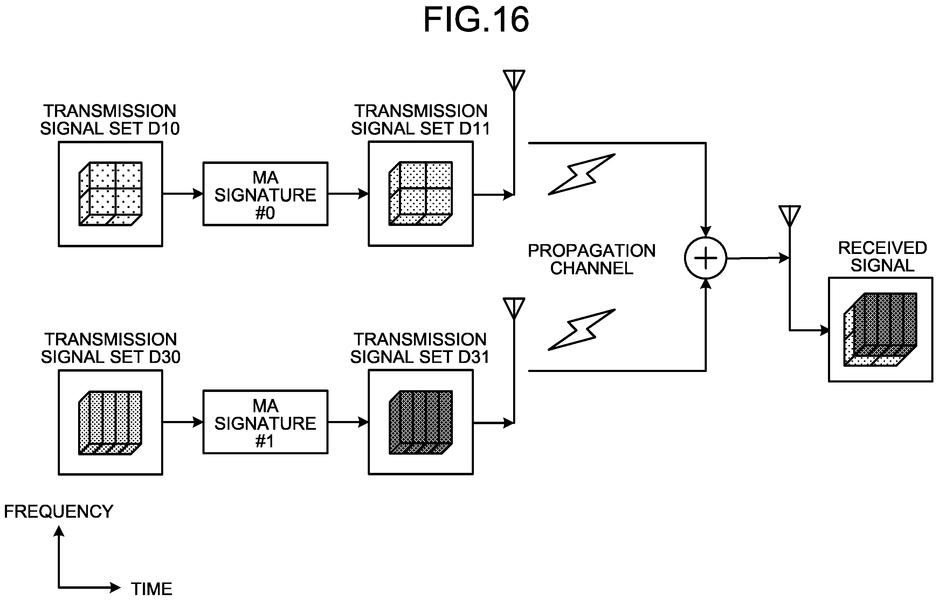

FIG. 16 is an explanatory diagram for explaining an example of the NOMA transmission operation performed according to the embodiment of the application concerned. In the example illustrated in FIG. 16, two transmission signal sets having different parameter sets are multiplexed. More particularly, in the example illustrated in FIG. 16, one of the transmission devices (for example, the terminal device $40_1$) performs the NOMA transmission operation in which the MA signature #0 is used in the transmission signal set D10. The other transmission device (for example, the terminal device $40_2$) performs the NOMA transmission operation in which the MA signature #1 is used in the transmission signal set D30. The transmission signal sets D10 and D30 are transmission signal sets having different parameter sets. Moreover, the MA signatures #0 and #1 are compatible non-orthogonal resources. The post-MA-signature-application transmission signal sets D11 and D31 are transmitted on the same frequency resources and the same time resources, and are multiplexed through a propagation channel.

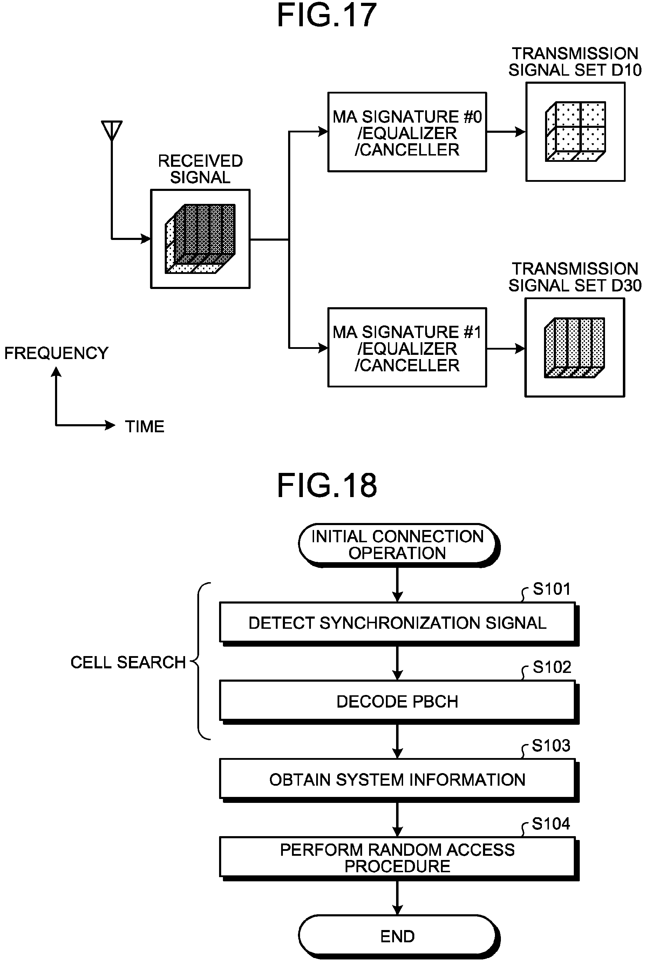

FIG. 17 is an explanatory diagram for explaining an example of a NOMA reception operation performed according to the embodiment of the application concerned. The NOMA reception operation explained below is implemented when the control unit 23 of the base station device 20 controls the reception processing unit 211. Alternatively, the NOMA reception operation explained below is implemented when, for example, the control unit 45 of the terminal device 40 (for example, the receiving unit 454) controls the reception processing unit 411.

As illustrated in FIG. 17, the received signals are received in the state in which a plurality of transmission signals are multiplexed on the same frequency resources and the same time resources. In order to decode the multiplexed transmission signal sets, the reception device (for example, the base station device $20_1$) performs the NOMA reception operation (for example, operations such as channel equalization and interference signal cancellation) based on the MA signatures used in the transmission device. As a result, the reception device retrieves desired signals from the received signals. In the example illustrated in FIG. 17, the reception device performs the NOMA reception operation using the MA signatures #0 and #1 in the received signals, and retrieves the transmission signal sets D10 and D30. Meanwhile, if multiplexing is performed using the same MA signature, there is an increase in the impact of the interference among the multiplexed signals, and it becomes difficult to decode the signals. For that reason, the base station device 20 schedules the MA signatures for use in such a way that there is no repetition of the MA signatures.

As described above, in the NOMA transmission, the MA signatures applied in the transmission device and the reception device need to be shared between the transmission device and the reception device, and the MA signatures need to be applied without repetition. Meanwhile, in the following explanation, the concept of resources (radio resources) is assumed to include the MA signatures too. Thus, the resources including the frequency, the time, and a MA signature are sometimes called multiple access resources (MA resources). Moreover, the resources including only the frequency/time are sometimes called multiple access physical resources (MA physical resources).

<<4. Fundamental operations of communication system>>

<4-1. Initial connection operation>

Given below is the explanation about the fundamental operations of the communication system 1. Firstly, the explanation is given about an initial connection operation. The initial connection operation is performed to switch the radio connection state of the terminal device 40 from the unconnected state to the connected state. The unconnected state is, for example, the RRC_IDLE state or the RRC_INACTIVE state. Herein, the RRC_IDLE state indicates the idle state in which the terminal device is not connected to any cell (or any base station device), and is also called an idle mode. The RRC_INACTIVE state is a radio connection state that is newly defined in the NR and that indicates the inactive state. Thus, the RRC_INACTIVE state is also called the inactive mode. Meanwhile, the unconnected state can also include the lightning mode. The connected state is, for example, the RRC_CONNECTED state in which the terminal device has established connection with a cell (or a base station device), and is also called the connected mode.

FIG. 18 is a flowchart for explaining an example of the initial connection operation. Thus, the initial connection operation is explained below with reference to FIG. 18. The initial connection operation is performed when, for example, the power of the terminal device 40 is turned on.

Firstly, the terminal device 40 in the unconnected state performs a cell search. In the present embodiment, the search includes detection of synchronization signals and PBCH decoding. In the terminal device 40, the receiving unit 454 detects the synchronization signals of the cell (Step S101). Based on the detected synchronization signals, the receiving unit 454 performs synchronization between the cell and the downlink. After the synchronization is established in the downlink, the receiving unit 454 attempts to decode the PBCH and obtains the MIB (Master Information Block) representing a part of system information (Step S102).

The system information represents information for notifying the settings in the cell that transmits the system information. The system information contains, for example, information related to cell accessing, information related to cell selection, and information related to other RATs and other systems. Moreover, in the system information, the MIB and the SIB (System Information Block) are included. The MIB represents information about the physical layer required in receiving the SIB, and represents information having a fixed payload size as notified by the PBCH. The MIB includes some of the system frame numbers; includes information at least about SIB1, Msg.2/4 for initial connection, paging, and subcarrier spacing of broadcast SI message; includes information about subcarrier offset; includes information about the position of DMRS type A; includes PDCCH setting for at least SIB1; includes information about cell barred; and includes information about in-frequency reselection. The SIB represents system information other than the MIB, and is notified using the PDSCH.

Meanwhile, the system information can be categorized into first-type system information, second-type system information, and third-type system information. The first-type system information and the second-type system information contains information related to accessing the cells, information related to obtaining other system information, and information related to cell selection. The information included in the MIB represents the first-type system information. Moreover, of the SIB, the information included in the SIB1 represents the second-type system information. The remaining system information represents the third-type system information.

The obtaining unit 451 of the terminal device 40 obtains the second-type system information based on the MIB (i.e., based on the first-type system information) (Step S103). As explained above, the second-type system information is configured with the SIB1 and the SIB2. The SIB1 includes the following: information related to cell selection; information related to cell accessing; information related to connection establishment failure control; scheduling information of the system information other than the SIB1; and the setting of the serving cell. In the setting of the serving cell, parameters specific to the cell are included; and the downlink setting, the uplink setting, and TDD setting information is included. In the uplink setting, RACH setting is included.

Meanwhile, if the obtaining unit 451 is not able to obtain the system information required in establishing the links, then the control unit 45 of the terminal device 40 determines that the access to the concerned cell is prohibited. For example, when the first-type system information cannot be obtained, the control unit 45 determines that the access to the concerned cell is prohibited. In that case, the control unit 45 ends the initial connection operation.

If it becomes possible to obtain the system information, then the control unit 45 executes the random access procedure based on the first-type system information and the second-type system information (Step S104). The random access procedure is also called the RACH procedure (Random Access Channel procedure) or the RA procedure. Once the random access procedure is completed, the terminal device 40 switches from the unconnected state to the connected state.

<4-2. Random access procedure>

Given below is the explanation of the random access procedure. The random access procedure is executed with the aim of performing "RRC connection setup" from the idle state to the connected state (or the inactive state) and with the aim of issuing "state transition request" for switching from the inactive state to the connected state. Moreover, the random access procedure is also used with the aim of issuing a "scheduling request" for requesting for the resources to be used in uplink data transmission, and with the aim of "timing advancement adjustment" for adjusting the synchronization of the uplink. Apart from that, the random access procedure is executed in the case of issuing an "on-demand SI request" for requesting for non-transmitted system information; in the case of performing "beam recovery" for restoring the broken beam connection; and in the case of performing "handover" for changing the connected cell.

The "RRC connection setup" is the operation performed when the terminal device 40 establishes connection with the base station device depending on the occurrence of traffic. More particularly, the "RRC connection setup" is the operation in which connection-related information (for example, UE context) is sent from the base station device to the terminal device 40. The UE context is managed using predetermined communication device identification information (for example, the C-RNT1) specified by the base station device. After finishing the "RRC connection setup", the terminal device 40 switches from the idle state to the inactive estate or from the idle state to the connected state.

The "state transition request" is the operation in which the terminal device 40 requests for switching from the inactive state to the connected state depending on the occurrence of traffic. By switching to the connected state, the terminal device 40 becomes able to perform transmission and reception of unicast data with the base station device.

The "scheduling request" is the operation in which the terminal device 40 requests for the resources to be used in uplink data transmission depending on the occurrence of traffic. When this scheduling request is received without any hitch, the base station device assigns PUSCH resources to the communication device. Meanwhile, this scheduling request is issued also using the PUCCH.

The "timing advancement adjustment" is the operation for adjusting the error occurring in the downlink and the uplink due to the propagation delay. The terminal device 40 transmits the PRACH (Physical Random Access Channel) to the downlink frame at the adjusted timing. As a result, the base station device becomes able to recognize the propagation delay with the terminal device 40, and can instruct that terminal device 40 about the value of timing advancement using the message 2.

The "on-demand SI request" is the operation in which, when the system information that has not been transmitted on account of system information overhead becomes necessary in the terminal device 40, a request for transmitting the system information is issued to the base station device.

The "beam recovery" is the operation in which, after the beam has been established, when there is deterioration in the communication quality due to the movement of the terminal device 40 or due to the blocking of the communication path by some other object, a recovery request is issued. Upon receiving that request, the base station device attempts to establish connection with the terminal device 40 using a different beam.

The "handover" is the operation in which, accompanying the change in the radio wave environment due to the movement of the terminal device 40, the connection is switched from the currently-connected cell (serving cell) to the neighboring cell. Upon receiving a handover command from the base station device 20, the terminal device 40 issues a connection request to the neighboring cell that is specified in the handover command.

The random access procedure includes contention based random access procedure and non-contention based random access procedure. Firstly, the explanation is given about the contention based random access procedure.

Meanwhile, in the random access procedure explained below, it is assumed that the communication system 1 supports the LTE as the RAT. However, the random access procedure explained below is also applicable in the case in which the RAT supported by the communication system 1 is other than the LTE.

[Contention based random access procedure]

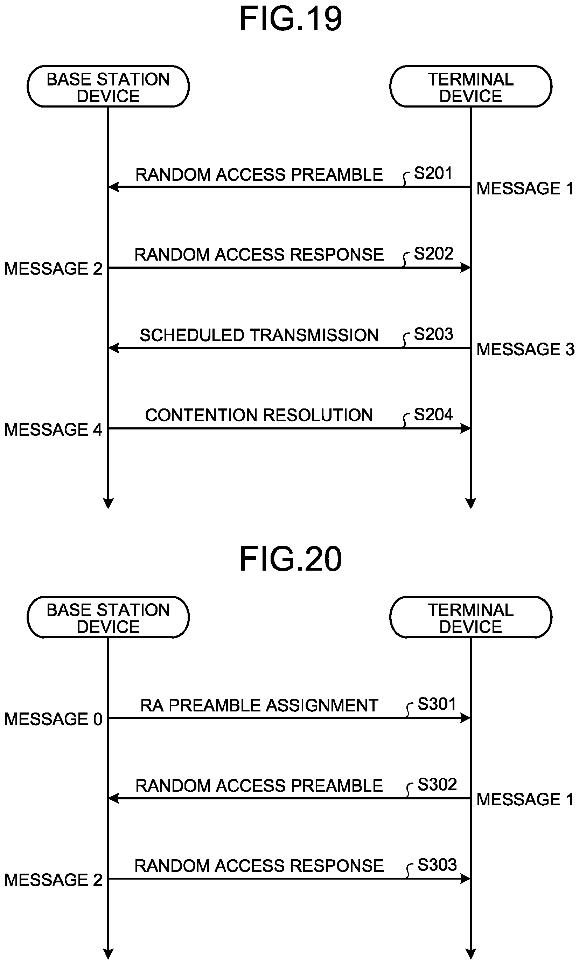

The contention based random access procedure is a random access procedure performed on the initiative of the terminal device 40. FIG. 19 is a diagram illustrating the contention based random access procedure. As illustrated in FIG. 19, the contention based random access procedure is a 4-step procedure starting with the transmission of a random access preamble from the terminal device 40. The contention based random access procedure includes transmission of a random access preamble (Msg1), reception of a random access response (Msg2), transmission of a message (Msg3), and reception of a message (Msg4) about contention resolution.

Firstly, the terminal device 40 randomly selects a preamble sequence to be used from among a plurality of predetermined preamble sequences. Then, the terminal device 40 transmits a message including the selected preamble sequence (Msg1: random access preamble) to the base station device representing the connection destination (Step S201). Herein, the base station device 20 can be a non-ground base station device or can be a ground base station device. In the following explanation, the base station device 20 to which the terminal device 40 transmits the random access preamble is assumed to be a ground base station device. The random access preamble is transmitted using the PRACH.

In the base station device 20, upon receiving the random access preamble, the control unit 23 transmits a random access response (Msg2) to the terminal device. The random access response is transmitted using, for example, the PDSCH. Thus, the terminal device 40 receives the random access response (Msg2) transmitted from the base station device 20 (Step S202). The random access response includes one or more random access preambles that the base station device 20 could receive, and includes the resources (hereinafter, called uplink grants) of the UL (Up Link) corresponding to those random access preambles. Moreover, the random access response includes a TC-RNTI (Temporary Cell Radio Network Temporary Identifier) representing a unique identifier of the terminal device 40 assigned thereto on a temporary basis by the base station device 20.

Upon receiving the random access response from the base station device 20, the terminal device 40 determines whether or not the random access preamble transmitted at Step S201 is included in the received information. If the random access preamble is included, then the terminal device 40 extracts, from the uplink grants included in the random access response, the uplink grant corresponding to the random access preamble transmitted at Step S201. Then, using the resources scheduled according to the extracted uplink grant, the terminal device 40 transmits a UL message (Msg3: scheduled transmission) (Step S203). Herein, the message (Msg3) is transmitted using the PUSCH. The message (Msg3) includes an RRC message meant for requesting an RRC (Radio Resource Control) connection. Moreover, the message (Msg3) includes the identifier of the terminal device 40.

In the contention based random access procedure, the random access preamble that is randomly selected by the terminal device 40 is used in the procedure. For that reason, a situation may arise in which, at the same time at which the concerned terminal device 40 transmits the random access preamble, another terminal device 40 happens to transmit the same random access preamble to the base station device 20. In that regard, in the base station device 20, as a result of receiving the identifier transmitted by each terminal device 40 at Step S203, the control unit 23 recognizes the terminal devices between which the preamble contention has occurred and resolves the contention. Then, the control unit 23 transmits a contention resolution message (Msg4) to the terminal device 40 selected as a result of contention resolution. The contention resolution message (Msg4) includes the identifier transmitted by the terminal device 40 at Step S203. Moreover, the contention resolution message (Msg4) includes an RRC message of the RRC connection setup. Thus, the selected terminal device 40 receives the contention resolution message (Msg4) from the base station device 20 (Step S204).

Then, the concerned terminal device 40 compares the identifier transmitted at Step S203 with the identifier received at Step S204. If the two identifiers are not identical, then the terminal device 40 again performs the random access procedure starting from Step S201. On the other hand, if the two identifiers are identical, then the terminal device 40 performs an RRC connection operation, and switches from the idle state (RRC_IDLE) to the connected state (RRC_CONNECTED). Moreover, in the subsequent communication, the terminal device 40 uses the TC-RNTI, which was obtained at Step S202, as the C-RNTI (Cell Radio Network Temporary Identifier). After switching to the connected state, the terminal device 40 transmits an RRC message indicating RRC connection setup completion to the base station device. The message indicating RRC connection setup completion is also called a message 5. In this way, as a result of such a sequence of operations, the terminal device 40 establishes connection with the base station device 20.

The contention based random access procedure is a 4-step random access procedure (4-step RACH). However, the communication system 1 can also support the 2-step random access procedure (2-step RACH) as the contention based random access procedure. For example, along with transmitting a random access preamble, the terminal device 40 also transmits the message (Msg3) explained with reference to Step S203. In response, the control unit 23 of the base station device 20 transmits the random access response (Msg2) and the contention resolution message (Msg4). Since that marks the completion of the 2-step random access procedure, the terminal device 40 can promptly establish connection with the base station device 20.

[Non-contention based random access procedure]

Given below is the explanation about the non-contention based random access procedure. The non-contention based random access procedure is a random access procedure performed on the initiative of the base station device. FIG. 20 is a diagram illustrating the non-contention based random access procedure. The non-contention based random access procedure is a 3-step procedure starting with the assignment of a random access preamble by the base station device. The non-contention based random access procedure includes reception of the assignment of a random access preamble (Msg0), transmission of a random access preamble (Msg1), and reception of a random access response (Msg2). In the following explanation about the random access procedure, although the base station device 20 is assumed to be a ground base station device, it can alternatively be a non-ground base station device.

In the contention based random access procedure, the terminal device 40 randomly selects a preamble sequence. In contrast, in the non-contention based random access procedure, the base station device 20 assigns a separate random access preamble to the concerned terminal device 40. Thus, the terminal device 40 receives the assignment of a random access preamble (Msg0: RA preamble assignment) from the base station device 20 (Step S301).

The terminal device 40 uses the random access preamble, which has been assigned thereto at Step S301, and performs a random access to the base station device 20. That is, the terminal device 40 transmits the assigned random assembly preamble (Msg1) to the base station device 20 using the PRACH (Step S302).

In the base station device 20, the control unit 23 receives the random access preamble (Msg1) from the terminal device 40. In response to the random access preamble, the control unit 23 transmits a random access response (Msg2) to the terminal device 40 (Step S303). The random access response includes, for example, the information about the uplink grant corresponding to the received random access preamble. Upon receiving the random access response (Msg2), the terminal device 40 switches from the idle state (RRC_IDLE) to the connected state (RRC_CONNECTED).

In this way, in the non-contention based random access procedure, since it is the base station device that schedules the random access preamble, preamble collision does not occur easily.

[Details of random access procedure in NR]

Till now, the explanation was given about the random access procedure in which the communication system 1 supports the LTE as the RAT. However, the random access procedure explained above is also applicable in the case in which the RAT supported by the communication system 1 is other than the LTE. Given below is the detailed explanation about the random access procedure in which the communication system 1 supports the NR as the RAT. In the following explanation, the four steps related to Msg1 to Msg4 illustrated in FIG. 19 or FIG. 20 are individually explained below in detail. The step for Msg1 corresponds to Step S201 illustrated in FIG. 19 and corresponds to Step S302 illustrated in FIG. 20. The step for Msg2 corresponds to Step S202 illustrated in FIG. 19 and corresponds to Step S303 illustrated in FIG. 20. The step for Msg3 corresponds to Step S203 illustrated in FIG. 19. The step for Msg4 corresponds to Step S204 illustrated in FIG. 19.

[Random access preamble (Msg1) in NR]

In the NR, the PRACH is called NR-PRACH (NR Physical Random Access Channel). The NR-PRACH is configured using the Zadoff-Chu sequence. In the NR, a plurality of preamble formats is defined as the formats of the NR-PRACH. A preamble format is defined by combining parameters such as the PRACH subcarrier spacing, the transmission bandwidth, the sequence length, the number of symbols used in transmission, the number of repetitions of transmission, the CP (Cyclic Prefix) length, and the guard period length. The types of preamble sequences in the NR-PRACH are numbered. The numbers of the types of preamble sequences are called the preamble index.

In the NR, regarding the terminal device 40 in the idle state, the setting related to the NR-PRACH is performed according to the system information. Moreover, regarding the terminal device 40 in the connected state, the setting related to the NR-PRACH is performed according to dedicated RRC signaling.

The terminal device 40 transmits the NR-PRACH using a physical resource transmittable by the NR-PRACH (i.e., using an NR-PRACH occasion). The physical resources are instructed in the setting related to the NR-PRACH. The terminal device 40 selects one of the physical resources, and transmits the NR-PRACH. When the terminal device 40 is in the connected state, it transmits the NR-PRACH using the NR-PRACH resource. The NR-PRACH resource represents the combination of the NR-PRACH preamble and its physical resource. The base station device 20 can instruct the terminal device 40 about the NR-PRACH resource. At that time, the base station device 20 can be a non-ground base station device or can be a ground base station device. In the following explanation about the random access procedure in the NR, the base station device 20 is assumed to be a ground base station device.

Meanwhile, the NR-PRACH is transmitted also in the case in which the random access procedure ends in failure. Then, at the time of retransmitting the NR-PRACH, the terminal device 40 waits for a standby period, which is calculated from the back-off value (back-off indicator), before transmitting the NR-PRACH. The back-off value can be different according to the terminal category of the terminal device 40 or according to the priority of the traffic. At that time, a plurality of back-off values is notified, and the terminal device 40 selects the back-off value according to the priority. Moreover, at the time of retransmitting the NR-PRACH, the terminal device 40 ramps up the transmission power of the NR-PRACH as compared to the initial transmission. This procedure is called power ramping.

[Random access response (Msg2) in NR]

In the NR, a random access response is transmitted using the NR-PDSCH (NR Physical Downlink Shared Channel). The NR-PDSCH including a random access response is scheduled according to the NR-PDCCH (NR Physical Downlink Control Channel) in which the CRC (Cyclic Redundancy Check) is scrambled according to the RA-RNTI. The NR-PDCCH is transmitted in the common control sub-band. Moreover, the NR-PDCCH is placed in the CSS (Common Search Space). Meanwhile, the value of the RA-RNTI (Random Access Radio Network Temporary Identifier) is decided based on the transmission resources of the NR-PRACH corresponding to the concerned random access response. The transmission resources of the NR-PRACH are, for example, the time resources (slots or subframes) and frequency resources (resource blocks). Meanwhile, the NR-PDCCH can be placed in the search space that is associated to the NR-PRACH linked to the random access response. More particularly, the search space for placing the NR-PDCCH is set in a corresponding manner to the preamble of the NR-PRACH and/or the physical resources used in transmitting the NR-PRACH. The search space for placing the NR-PDCCH is set in a corresponding manner to the preamble index and/or the index of the physical resources. The NR-PDCCH represents the NR-SS (NR Synchronization Signal) and the QCL (Quasi co-location) .

In the NR, the random access response represents information of the MAC (Medium Access Control). Moreover, in the NR, the random access response includes at least the following: the uplink grant for transmitting the message 3 of the NR; the value of the timing advancement used in adjusting the frame synchronization of the uplink; and the value of the TC-RNTI. Furthermore, in the NR, the random access response includes the PRACH index used in the transmission of the NR-PRACH corresponding to that random access response. Moreover, in the NR, the random access response includes the information related to the back-off used at the time of waiting for PRACH transmission.

In the base station device 20, the control unit 23 transmits the random access response using the NR-PDSCH. From the information included in the random access response, the terminal device 40 determines whether or not the transmission of the random access preamble was successful. If it is determined that the transmission of the random access preamble was not successful, then the terminal device 40 transmits the message 3 (Msg3) of the NR according to the information included in the random access response. On the other hand, if the transmission of the random access preamble was not successful, then the terminal device 40 determines that the random access procedure ended up in failure, and retransmits the NR-PRACH.

Meanwhile, the random access response in the NR can also include a plurality of uplink grants meant for transmitting the message 3 (Msg3). From among the uplink grants, the terminal device 40 can select a single resource for transmitting the message 3 (Msg3). As a result, in a situation in which different terminal devices 40 receive the same random access response of the NR, it becomes possible to alleviate the collision of the transmission of the message 3 (Msg3) of the NR. That enables the communication system 1 to provide a more stable random access procedure.

[Message 3 (Msg3) of NR]

The message 3 (Msg3) of the NR is transmitted using the NR-PUSCH (NR Physical Uplink Shared Channel). The NR-PUSCH is transmitted using the resources instructed in the random access response. In the message 3 of the NR, an RRC connection request message is included. The format of the NR-PUSCH is instructed using the parameters included in the system information. For example, according to the parameters, either the OFDM (Orthogonal Frequency Division Multiplexing) or the DFT-s-OFDM (Discrete Fourier Transform Spread OFDM) is decided as the format of the NR-PUSCH.

When the message 3 of the NR is received without any hitch, the control unit 23 of the base station device 20 performs the transmission operation for transmitting a contention resolution message (Msg4). However, if the message 3 of the NR could not be received normally, then the control unit 23 attempts to again receive the message 3 of the NR for at least a predetermined period of time.

As another example of the instruction for retransmitting the message 3 and the transmission resource, an instruction can be cited that is based on the NR-PDCCH, which is used in instructing the retransmission of the message 3. The NR-PDCCH represents the uplink grant. Using the DCI (Downlink Control Information) of the NR-PDCCH, the resource for retransmitting the message 3 is instructed. Thus, the terminal device 40 retransmits the message 3 based on the instruction from that uplink grant.

Meanwhile, if the reception of the contention resolution message of the NR is not received within a predetermined period of time, then the terminal device 40 considers that the random access procedure ended up in failure and retransmits the NR-PRACH. Meanwhile, the transmission beam of the terminal device 40 that is used in retransmitting the message 3 of the NR can be different than the transmission beam of the terminal device 40 that was used in the initial transmission of the message 3. Moreover, during a predetermined period of time, if neither the contention resolution message of the NR could be received nor the instruction to retransmit the message 3 could be received, the terminal device 40 considers that the random access procedure ended up in failure, and retransmits the NR-PRACH. The predetermined period of time is set using, for example, the system information.

[Contention resolution message (Msg4) in NR]

The contention resolution message in the NR is transmitted using the NR-PDSCH. The NR-PDSCH including the contention resolution message is scheduled using the NR-PDCCH in which the CRC is scrambled using the TC-RNTI or the C-RNTI. The NR-PDCCH is placed in the USS (User equipment specific Search Space). Alternatively, the NR-PDCCH can be placed in the CSS too.

When the NR-PDSCH including the contention resolution message is received without any hitch, the terminal device 40 transmits an acknowledgment response (ACK) to the base station device 20. Thereafter, the terminal device 40 considers that the random access procedure was successful, and switches to the connected state (RRC_CONNECTED). Meanwhile, if a non-acknowledgment response with respect to the NR-PDSCH is received from the terminal device 40 or if there is no response from the terminal device 40, then the control unit 23 of the base station device 20 retransmits the NR-PDSCH including the concerned contention resolution message. Moreover, if the terminal device 40 cannot receive the contention resolution message (Msg4) within a predetermined period of time, it considers that the random access procedure ended up in failure, and retransmits the random access preamble (Msg1).

[2-step RACH in NR according to present embodiment]

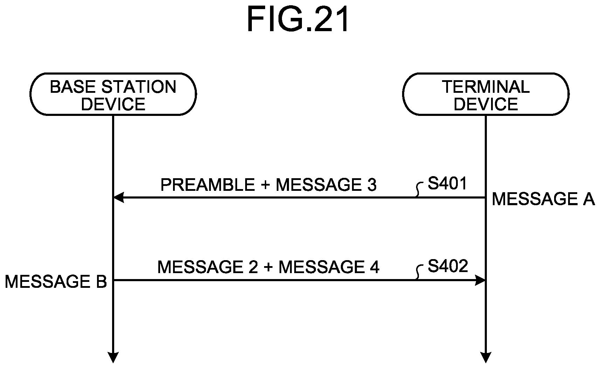

Given below is the explanation of an example of the 2-step RACH procedure (hereinafter, called 2-step random access procedure) in the NR. FIG. 21 is a diagram illustrating the 2-step random access procedure. The 2-step random access procedure is configured with two steps, namely, a step for a message A (Step S401) and a step for a message B (Step S402). As an example, the message A includes the message 1 (preamble) and the message 3 of the conventional 4-step random access procedure (4-step RACH procedure); and the message B includes the message 2 and the message 4 of the conventional 4-step random access procedure. Moreover, as an example, the message A is configured with a preamble (also called the PRACH) and the PUSCH, and the message B is configured with the PDSCH.

As a result of using the 2-step random access procedure, it becomes possible to complete the random access procedure with a lower amount of delay as compared to the conventional 4-step random access procedure.

The preamble and the PUSCH included in the message A can have their transmission resources set in a linked manner, or can have independent resources set.

If the transmission resources are set in a linked manner, for example, when the transmission resource for the preamble is decided, the transmission resource for the PUSCH gets decided either uniquely or in the form of a plurality of candidates. As an example, the time offset and the frequency offset between the preamble of the PRACH occasion and the PUSCH occasion are decided by a single value. As another example, regarding the time offset and the frequency offset between the preamble of the PRACH occasion and the PUSCH occasion, different values are set for each preamble. The value of the offset can be decided according to the specifications, or can be set in a quasi-static manner by the base station device. As an example of the values of the time offset and the frequency offset, for example, the values are decided using a predetermined frequency. For example, in the unlicensed band (for example, 5 GHz band or band 45), the value of time offset can be set to zero or to a value close to zero. That enables elimination of the LBT (Listen Before Talk) prior to the transmission of the PUSCH.

On the other hand, when independent resources are to be set, the transmission resources for the preamble and the PUSCH can be decided according to the specifications, or the base station device can set the resources in a quasi-static manner, or the resources can be decided from some other information. Examples of such some other information include slot format information (for example, a slot format indicator), BWP (Band Width Part) information, preamble transmission resource information, a slot index, and a resource block index. In the case in which independent resources are set, the linking between the preamble and the PUSCH constituting a single message A can be notified to the base station using the payload of the PUSCH or using the UCI included in the PUSCH, or can be notified to the base station using the transmission physical parameters of the PUSCH (for example, the scrambled sequence of the PUSCH, the DMRS sequence and/or the DMRS pattern, and the transmission antenna port of the PUSCH).

Meanwhile, the method for setting the transmission resources for the preamble and the PUSCH can be switched between setting the resources in a linked manner and setting the resources independently. For example, in a licensed band, the resources can be set independently; and, in an unlicensed band, the transmission resources can be set in a linked manner.

<4-3. Transmission-reception operation (grant based)>

Given below is the explanation of the transmission (uplink) of the data from the terminal device 40 to the base station device 20. The data transmission in the uplink can be divided into "transmission-reception operation (grant based)" and "transmission-reception operation (configured grant)". Firstly, the explanation is given about the "transmission-reception operation (grant based)".

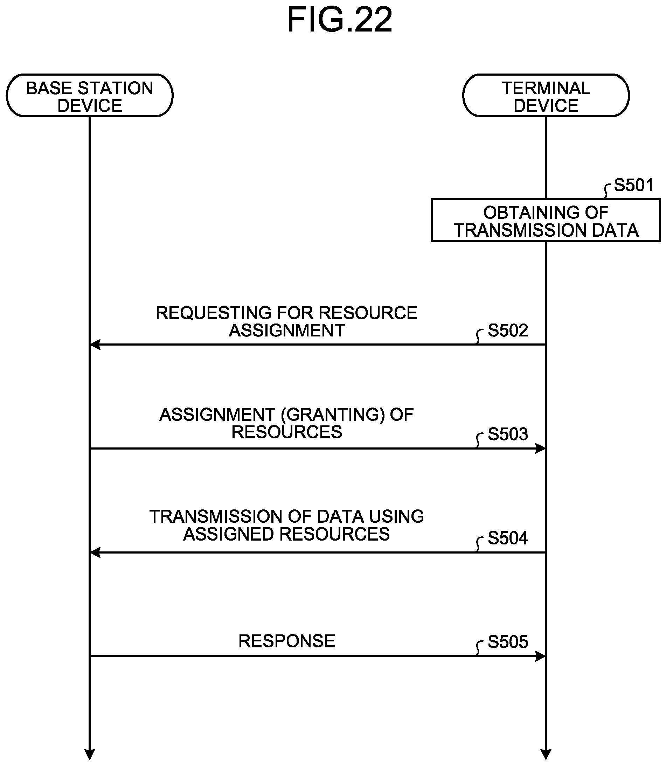

In the transmission-reception operation (grant based), the terminal device 40 receives dynamic resource allocation (grant) from the base station device 20, and then transmits data. FIG. 22 is a sequence diagram illustrating an example of the transmission-reception operation (grant based). Thus, the explanation of the transmission-reception operation (grant based) is given with reference to FIG. 22. The transmission-reception operation (grant based) explained below is performed when, for example, the terminal device 40 switches to the connected state (RRC_CONNECTED) with respect to the base station device 20.

Firstly, the obtaining unit 451 of the terminal device 40 obtains transmission data (Step S501). For example, the obtaining unit 451 obtains, as the transmission data, the data generated by various programs in the terminal device 40 as the data to be transmitted to other communication devices (for example, the base station device 20).

In the case of using the NOMA, before obtaining the transmission data, the transmitting unit 455 of the terminal device 40 can send NOMA support information to the base station device 20 connected thereto. The NOMA support information can contain information indicating whether or not the terminal device 40 supports the NOMA (for example, whether or not the NOMA transmission operation is possible). Moreover, the NOMA support information can contain information about the non-orthogonal resources available to the terminal device 40.

Then, the transmitting unit 235 of the base station device 20 can send, to the terminal device 40, information instructing the use of NOMA transmission and information related to NOMA transmission. Such information can be sent using the RRC signaling. In the terminal device 40, the receiving unit 454 can receive the information related to NOMA transmission from the base station device 20, and store it in the memory unit 22.

When the obtaining unit 451 obtains the transmission data, the transmitting unit 455 issues a resource allocation request to the base station device 20 (Step S502).

In the base station device 20, the receiving unit 234 receives the resource allocation request from the terminal device 40. Then, in the base station device 20, the processing unit 233 decides on the resources (in the case of using the NOMA, the MA resources) to be allocated to the terminal device 40. Subsequently, the transmitting unit 235 of the base station device 20 transmits, to the terminal device 40, the information about the resources (in the case of using the NOMA, the information about the MA resources) allocated to the terminal device 40 (Step S503).

In the terminal device 40, the receiving unit 454 receives the resource information (in the case of using the NOMA, the MA resource information) from the base station device 20, and stores it in the memory unit 42. Then, the transmitting unit 455 of the terminal device 40 transmits data to the base station device 20 based on the resource information (Step S504).

Meanwhile, in the case of using the NOMA, the terminal device 40 can perform the NOMA transmission operation with respect to the transmission-unit data based on the MA resource information. When the NOMA transmission operation is completed, the transmitting unit 455 of the terminal device 40 can transmit the data, which has been subjected to the NOMA transmission operation, to the base station device 20.

In the base station device 20, the receiving unit 234 obtains the data from the terminal device 40. In the case of using the NOMA, the receiving unit 234 receives, from the terminal device 40, the data that has been subjected to the NOMA transmission operation. In that case, the data received from the concerned terminal device 40 represents multiplexed data obtained by performing non-orthogonal multiplexing of the data transmitted by the other terminal devices 40. For that reason, from the multiplexed data, the base station device 20 retrieves the data transmitted by the concerned terminal device 40, and performs the NOMA reception operation with respect to the multiplexed data.

For example, in the base station device 20, the obtaining unit 231 obtains, from the memory unit 22, the information about the NOMA transmission operation used by the terminal device 40. Then, in the base station device 20, based on the information about the NOMA transmission operation as obtained by the obtaining unit 231, the data transmitted by the concerned terminal device 40 is separated from the multiplexed data.

When the reception (or the separation) is completed, the transmitting unit 235 of the base station device 20 transmits response data (for example, an acknowledgement response) to the concerned terminal device 40 (Step S505). When the transmission of the response data is completed, the base station device 20 and the terminal device 40 end the transmission-reception operation (grant based).

<4-4. Transmission-reception operation (configured grant)>

Given below is the explanation about the "transmission-reception operation (configured grant)".

The transmission-reception operation (configured grant) is the operation of data transmission from the terminal device 40 to the base station device 20 using the configured grant transmission. Herein, the configured grant transmission implies that a communication device does not receive dynamic resource allocation (grant) from another communication device, and performs transmission using suitable resources from among the available frequency and time resources specified in advance from the other communication device. That is, the configured grant transmission implies that data transmission is performed without including the grant in the DCI. The configured grant transmission is also called data transmission without grant or grant-free semi persistent scheduling.

In the case of the configured grant transmission, the base station device 20 can specify the candidates for frequency and time resources that are selectable by the terminal device 40. That is done mainly to reduce the signaling overhead and to achieve power saving and low-delay communication in the terminal device 40. In the grant based transmission-reception operation, the base station device 20 notifies the terminal device 40 about the resources to be used in the uplink or the sidelink. As a result, the terminal device 40 can perform communication without any occurrence of resource contention with the other terminal devices 40. However, in this method, there occurs signaling overhead attributed to the notification.

The specific explanation is given below with reference to the sequence illustrated in FIG. 22. In the example illustrated in FIG. 22, when there is data (Step S501), the terminal device 40 issues a resource allocation request to the base station device 20 (Step S502). In response to the resource allocation request, the base station device 20 allocates resources to the terminal device 40 (Step S503). Then, the terminal device 40 transmits data using the resources assigned by the base station device 20 (Step S504). In the example illustrated in FIG. 22, there occurs signaling overhead equivalent to the operation performed at Step S502 or Step S503.

In the configured grant transmission, the operation performed at Step S502 or Step S503 illustrated in FIG. 22 can be omitted. For that reason, as far as power saving and low-delay communication required in the next-generation communication is concerned, the configured grant transmission in which resource allocation notification is not issued is believed to be a potent technical candidate. In the configured grant transmission, the transmission resources can be selected from all available bandwidths, or can be selected from among the resources specified in advance by the base station device 20.

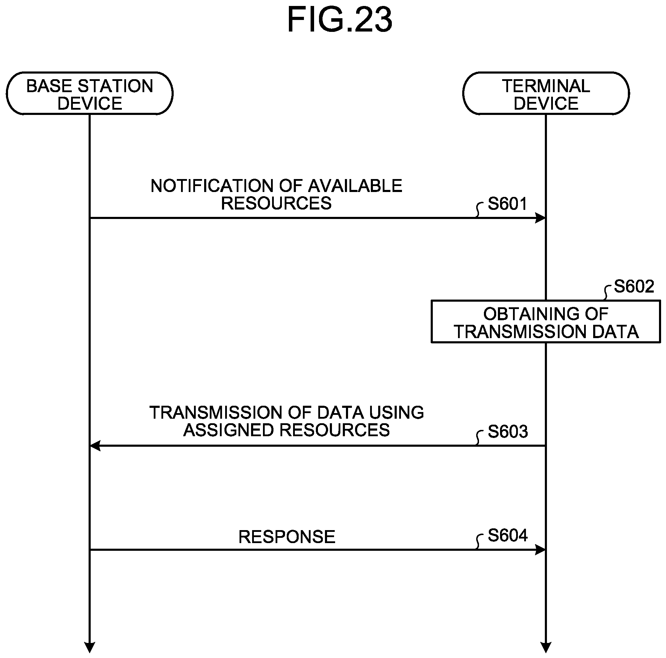

FIG. 23 is a sequence diagram illustrating an example of the transmission-reception operation (configured grant). Thus, the transmission-reception operation (configured grant) is explained below with reference to FIG. 23. The transmission-reception operation (configured grant) explained below is performed when, for example, the terminal device 40 switches to the connected state (RRC_CONNECTED) with respect to the base station device 20.

When the terminal device 40 switches to the connected state, the processing unit 233 of the base station device 20 decides on the resources (in the case of using the NOMA, the MA resources) that are to be allocated to the terminal device 40. Subsequently, the transmitting unit 235 of the base station device 20 transmits, to the terminal device 40, the information about the resources (in the case of using the NOMA, the information about the MA resources) allocated to the terminal device 40 (Step S601).

In the terminal device, the receiving unit 454 receives the resource information from the base station device 20, and stores it in the memory unit 42. Then, in the terminal device 40, the obtaining unit 451 obtains the transmission data that has emerged (Step S602). For example, the obtaining unit 451 obtains, as the transmission data, the data generated by various programs in the terminal device 40 as the data to be transmitted to other communication devices.

Then, the transmitting unit 455 of the terminal device 40 transmits the data to the base station device 20 based on the resource information (Step S603). Meanwhile, in the case of using the NOMA, the control unit 45 of the terminal device 40 can perform the NOMA transmission operation with respect to the transmission-unit data based on the MA resource information stored in the memory unit 22. Then, the transmitting unit 455 of the terminal device 40 can send the data, which has been subjected to the NOMA transmission operation, to the base station device 20.

In the base station device 20, the receiving unit 234 receives the data from the terminal device 40. Meanwhile, in the case of using the NOMA, the data received from the concerned terminal device 40 represents multiplexed data obtained by performing non-orthogonal multiplexing of the data transmitted by the other terminal devices 40. In that case, from the multiplexed data, the base station device 20 retrieves the data transmitted by the concerned terminal device 40, and performs the NOMA reception operation with respect to the multiplexed data. For example, in the base station device 20, the obtaining unit 231 obtains the information about the NOMA transmission operation used by the terminal device 40. Then, in the base station device 20, based on the information about the NOMA transmission operation as obtained by the obtaining unit 231, the data transmitted by the concerned terminal device 40 is separated from the multiplexed data.

When the reception (or the separation) is completed, the transmitting unit 235 of the base station device 20 transmits response data (for example, an acknowledgement response) to the concerned terminal device 40 (Step S604). When the transmission of the response data is completed, the base station device 20 and the terminal device 40 end the transmission-reception operation (configured grant).

<4-5. Transmission-reception operation (downlink)>

Given below is the explanation of the transmission (downlink) of data from the base station device 20 to the terminal device 40.

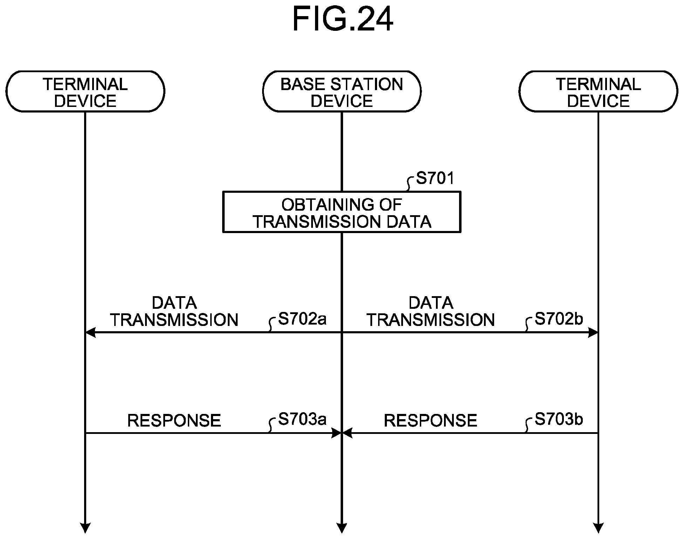

FIG. 24 is a sequence diagram illustrating an example of the transmission-reception operation (downlink). In FIG. 24 is illustrated an example in which the base station device 20 transmits data to two terminal devices 40. Thus, the explanation of the transmission-reception operation (downlink) is given below with reference to FIG. 24. The transmission-reception operation (downlink) explained below is performed when, for example, two terminal devices 40 switch to the connected state with respect to the base station device 20. In the following explanation, the two terminal devices 40 are simply referred to as the terminal devices 40.

Firstly, in the base station device 20, the obtaining unit 231 obtains transmission data to be transmitted to each of the two terminal devices 40 (Step S701). For example, the obtaining unit 231 obtains, as the transmission data, the data generated by various programs in the base station device 20 as the data to be transmitted to other communication devices.

Meanwhile, in the case of using the NOMA, before obtaining the data, the transmitting unit 455 of the terminal devices 40 can send NOMA support information to the base station device 20 connected thereto. In the base station device 20, the receiving unit 234 can receive the support information from the terminal device 40. Then, the processing unit 233 of the base station device 20 can perform the NOMA transmission operation with respect to the transmission-unit data.

The transmitting unit 235 of the base station device 20 transmits a plurality of sets of data, which has been subjected to the NOMA transmission operation, to the terminal devices 40 (Steps S702a and S702b). At that time, the transmitting unit 235 either can perform non-orthogonal multiplexing of the sets of data that have been subjected to the NOMA transmission operation and then send the multiplexed data; or can transmit the sets of data, which have been subjected to the NOMA transmission operation, from different antennas and then perform multiplexing in the transmission channels.

In each terminal device 40, the receiving unit 454 receives data from the base station device 20. Meanwhile, in the case of using the NOMA, the receiving unit 454 receives, from the base station device 20, data that has been subjected to the NOMA transmission operation. In that case, the data received from the base station device 20 represents multiplexed data obtained by performing non-orthogonal multiplexing of a plurality of sets of data subjected to the NOMA transmission operation. Thus, from the multiplexed data, in order to retrieve the data sent thereto, the terminal device 40 performs the NOMA reception operation with respect to the multiplexed data.

For example, in the terminal device 40, the obtaining unit 451 obtains the information about the NOMA transmission operation (for example, the information about MA signatures) used by the base station device 20. Then, in the terminal device 40, based on the information about the NOMA transmission operation as obtained by the obtaining unit 451, the data sent thereto is separated from the multiplexed data.

When the reception (or the separation) is completed, the transmitting unit 455 of each terminal device 40 transmits response data (for example, an acknowledgement response) to the base station device 20 (Steps S703a and S703b). When the transmission of the response data is completed, the base station device 20 and the terminal devices 40 end the transmission-reception operation (configured grant).

<<5. Signal processing without ID assignment>>

As described above, there are times when the terminal device 40 does not possess the "ID required in signal processing" at the time of data transmission.

Examples of the "ID required in signal processing" include a cell ID, a terminal ID (for example, a C-RNTI) assigned by a base station, and a scrambling ID assigned from the upper layer.

Moreover, examples of the case in which "the terminal device 40 does not possess the ID required in signal processing at the time of data transmission" include data transmission in the 2-step random access, the RRC idle state, and the configured grant during the RRC inactive state.

In such cases, since the terminal device 40 cannot perform signal processing, it cannot transmit data to the base station device 20. Even if it is assumed that the terminal device 40 performs transmission signal processing using a tentative ID, the base station device 20 cannot recognize the tentative ID and thus cannot decode the data.

In the regard, in the following explanation, the terminal device 40 and the base station device 20 generate common recognition information, which is mutually recognizable in common, based on "predetermined information" instead of using the abovementioned ID. The "predetermined information" represents the information that is recognizable by the base station device as the information of the terminal device. As an example, the terminal device 40 and the base station device 20 obtain, as the "predetermined information" the information about the resources used in the terminal device 40 for transmitting the preamble to the base station device 20. Then, the terminal device 40 and the base station device 20 generate common recognition information based on that "predetermined information".

Herein, the "common recognition information" represents the information that is recognized in common by the terminal device 40 and the base station device 20. For example, the "common recognition information" can be information specific to the terminal device 40, such as a "terminal ID" or "information about a substitute for the terminal ID", among the cells covered by the base station device 20.

As a result, even in a situation in which the terminal device 40 has not obtained the ID required in signal processing, it can still perform signal processing for transmitting data to the base station device 20. That results in an enhancement in the communication performance on account of achieving reduction in the communication procedure.

Given below is the detailed explanation about a method for generating common recognition information.

In the following explanation, the base station device 20 is typically assumed to be a base station such as an eNB or a gNB. Of course, the base station device 20 is not limited to an eNB or a gNB. Alternatively, for example, the base station device 20 can be a relay terminal, or can be a leader terminal among a group of terminals. Still alternatively, the base station device 20 can be a device (or a system) explained earlier in <2-1. Overall configuration of communication system>. Meanwhile, in the following explanation, the term "base station device 20" is substitutable by the term "relay device 30" or the term "terminal device 40".

Moreover, in the following explanation, while giving specific examples, sometimes the explanation is given with reference to specific values. However, the values are not limited to the examples given below, and it is possible to use other values.

Meanwhile, the concept of "resource" includes frequency, time, a resource element, a resource block, a bandwidth part, a component carrier symbol, a sub-symbol, a slot, a subframe, a frame, a PRACH occasion, an occasion, a code, a multi-access physical resource, and a multi-access signature. Of course, the resource is not limited to these examples.

The following explanation about the present embodiment is given with reference to the 2-step random access (2-step RACH). However, the present embodiment is also applicable to other cases, such as the RRC IDLE state or the configured grant during the RRC inactive state, other than the 2-step random access.

<5-1. Signal processing requiring terminal ID>

Before explaining a method for generating common recognition information, the explanation is given about conventional signal processing that requires the terminal ID. The following explanation is given with reference to the example of transmission signal processing in which the terminal ID is used.

In the conventional transmission signal processing, the transmission-reception signal processing is performed using the terminal ID. As the examples of the transmission signal processing in which the terminal ID is used, examples (A1) to (A3) given below can be cited.

(A1) bit scrambling of the transmission signal bit sequence transmitted in the PUSCH and the PSSCH (A2) sequence generation of the reference signal for demodulation with respect to the PUSCH and the PSSCH (A3) sequence generation and resource mapping of the phase tracking reference signal with respect to the PUSCH

In the present embodiment, the terminal device 40 performs the transmission signal processing given above in (A1) to (A3) using the common recognition information. For example, the common recognition information represents a terminal ID (or information about a substitute for the terminal ID) that is generated using predetermined information other than the terminal ID assigned by the base station device 20.

Meanwhile, the transmission-reception signal processing according to the present embodiment is not limited to the transmission signal processing in the physical channels (for example, the PUSCH and the PSSCH) that are mentioned in (A1) to (A3). That is, the transmission-reception signal processing according to the present embodiment can be transmission signal processing performed also in the PDSCH, the PDCCH, the PUCCH, or the PSCCH.

Meanwhile, in the following explanation, it is assumed that a C-RNTI represents the terminal ID. However, the terminal ID need not necessarily be a C-RNTI. Alternatively, a TC-RNTI (Temporary C-RNTI) can represent the terminal ID. In the following explanation, the term "terminal ID" is substitutable with a "scrambling ID" assigned from the upper layer.

Given below is the explanation of a scrambling operation for scrambling a physical channel as an example of the transmission signal processing in which the terminal ID is used.

[Scrambling operation]

As an example of conventional transmission signal processing in which the terminal ID is required, the scrambling of a physical channel can be cited. The scrambling operation implemented in the transmission signal processing is calculated, for example, according to following equation.

$$\text{scrambling sequence: } c(n) = (x_1(n+N_c) + x_2(n+N_c)) \bmod 2$$

$$N_c = 1600$$

$$x_1(n+31) = (x_1(n+3) + x_1(n)) \bmod 2$$

$$x_2(n+31) = (x_2(n+3) + x_2(n+2) + x_2(n+1) + x_2(n)) \bmod 2$$

Meanwhile, the initial values of $x_1(n)$ and $x_2(n)$ are obtained from $x_1(0)1$, $x_1(n)=0$, $n=1,2, ..., 30$ and according to Equation (1) given below.

$$C_{init} = \sum_{i=0}^{30} x_2(i) \cdot 2^i \qquad\qquad (1)$$

Herein, $C_{init}$ is decided according to $C_{init} = n_{RNTI} \cdot 2^{15} + n_{ID}$.

Herein, $n_{RNTI}$ represents the ID of the terminal device 40 as set by the base station device 20. More particularly, $n_{RNTI}$ is equivalent to the RNTI related to physical channel transmission.

Moreover, as far as $n_{ID}$ is concerned, when a value is notified by the base station device 20, that value is used as $n_{ID}$. However, if a value is not notified, then the value of $N_{ID}^{cell}$ representing the cell ID is used as $N_{ID}$.

The conventional signal processing explained herein faces the following issue. That is, in the conventional scrambling operation, an ID assigned by the base station device 20 is required in deriving the scrambling sequence. Hence, when that ID is not assigned, the scrambling sequence cannot be derived.

[In case of handover]

In the case of the handover too, it is possible to think of a case in which the 2-step random access is performed. In the present embodiment, the handover includes contention-based handover, non-contention-based handover (contention-free handover), and conditional handover.

Even in the case of performing the 2-step random access for the handover, the terminal ID becomes an issue as explained above. Besides, in the case of the handover, the cell ID also becomes an issue in addition to the terminal ID.

[Other transmission signal processing]

In the explanation given above, the scrambling of a physical channel is explained as an example of the transmission signal processing in which the present embodiment is applied. However, the transmission signal processing in which the present embodiment is applied is not limited to the scrambling of a physical channel. That is, the transmission signal processing in which the present embodiment is applied can be some other signal processing too.

Examples of other signal processing include channel coding, rate matching, interleaving, code block segmentation, code block concatenation, CRC attachment, modulation, layer mapping, transform precoding, precoding, resource mapping, and antenna port mapping of the physical channel. Some other examples include sequence generation, precoding, and resource mapping of the reference signal. Of course, the transmission signal processing in which the present embodiment is applied can be still different signal processing than the signal processing mentioned above.

Given below is the explanation of a few specific examples of the method for generating common recognition information. However, the method for generating common recognition information is not limited to the examples given below.

<5-2. Generation of common recognition information using different information held in terminal>

As a method for generating common recognition information, for example, it is possible to think of a method in which common recognition information (for example, a terminal ID or a substitute for the terminal ID) is generated using some other information held in the terminal device 40 (hereinafter, called held information). A specific example is explained below.

[Generation based on non-RNTI ID held in terminal]

For example, the terminal device 40 generates common recognition information based on an ID that is held in the terminal device 40 but that is different than the RNTI. Examples of such a non-RNTI ID include (B1) to (B6) mentioned below. However, the non-RNTI ID is not limited to the examples given below. Moreover, the non-RNTI ID can also be a combination of a plurality of IDs selected from among the IDs mentioned below.

(B1) device ID
(B2) MAC ID
(B3) serial number
(B4) unique identification number assigned to SIM
(B5) IMSI (International Mobile Subscriber Identity)
(B6) TMSI (Temporary Mobile Subscriber Identity)

Meanwhile, as an example of generating common recognition information (for example, $n_{RNTI}$), the following example can be cited.

Common recognition information=(ID)%65536

In the terminal device 40, the obtaining unit 451 can obtain, as the predetermined information, the information that enables the base station device 20 to narrow down the candidates representing the information of the terminal device 40 from among the non-RNTI IDs held in the terminal device 40. Then, in the terminal device 40, the generating unit 452 can generate common recognition information based on the predetermined information. Subsequently, in the terminal device 40, the processing unit 453 can treat the common recognition information as the terminal ID and perform the transmission signal processing (for example, scrambling) of transmission data. Then, the transmitting unit 455 of the terminal device 40 can transmit the transmission data, which has been subjected to the transmission signal processing, to the base station device 20.

In the base station device 20, the receiving unit 234 receives the transmission data from one of a plurality of terminal devices 40. Moreover, in the base station device 20, the obtaining unit 231 obtains, from another base station device 20 via a core network (for example, from the base station device to which the concerned terminal device 40 was presumed to be previously connected (for example, the base station device of the neighboring cell)), the IDs of a plurality of terminal devices 40 that were connected to that other base station device 20 within a predetermined period of time in the past. Then, the processing unit 233 of the base station device 20 treats a plurality of sets of information generated by performing predetermined processing on the obtained IDs as the common recognition information for the concerned terminal device 40, and repeatedly attempts to decode the received signals. As a result, the base station device 20 becomes able to obtain the transmission data that was transmitted from the terminal device 40.

[Generation based on cell ID]

For example, the terminal device 40 generates common recognition information based on a cell ID. Herein, the cell ID can be the ID of the cell to which the connection is to be established, or can be the ID of a cell to which connection was established in the past, or can be the ID of the cell to which the connection is currently established. As an example of generating common recognition information (for example, $n_{RNTI}$), the following example can be cited.

Common recognition information $= N_{ID}^{CELL} \cdot a$

Herein, $N_{ID}^{CELL}$ represents the cell ID, and "a" represents an arbitrary value equal to or greater than one.

Meanwhile, in the terminal device 40, the obtaining unit 451 can obtain the cell ID from the system information that is broadband-transmitted by the base station device 20. Then, in the terminal device 40, the generating unit 452 can generate common recognition information based on that cell ID. Subsequently, in the terminal device 40, the processing unit 453 can treat the common recognition information as the terminal ID and perform transmission signal processing (for example, scrambling) of transmission data. Then, the transmitting unit 455 of the terminal device 40 can transmit the transmission data, which has been subjected to the transmission signal processing, to the base station device 20.

In the base station device 20, the receiving unit 234 receives transmission data from the terminal device 40. Moreover, in the base station device 20, the obtaining unit 231 obtains the cell ID of the corresponding covered cell. Subsequently, in the base station device 20, the generating unit 232 generates common recognition information based on the cell ID. Then, in the base station device 20, the processing unit 233 decodes the transmission data from the terminal device 40 based on the common recognition information. As a result, the base station device 20 becomes able to obtain the transmission data that was transmitted from the terminal device 40.

[Generation based on information related to message A]

For example, the terminal device 40 generates common recognition information based on the information related to the 2-step random access. For example, the terminal device 40 can generate common recognition information based on the information related to the transmission resource used in the data transmission to the base station device 20 in the 2-step random access. For example, the terminal device 40 can generate common recognition information based on the information related to the message A in the 2-step random access.

Examples of the information related to the message A in the 2-step random access include (C1) to (C3) given below. However, the information related to the message A is not limited to the examples given below. Moreover, the information related to the message A can be a combination of a plurality of sets of information selected from among the information given below.

(C1) the reference number ID for demodulation (port number) of the PUSCH of the message A
(C2) the preamble index of the preamble of the message A
(C3) the transmission resource index of the message A or the PUSCH

Meanwhile, as an example of generating common recognition information (for example, $n_{RNTI}$), the following example can be cited.

For example, the terminal device 40 and the base station device 20 generate common recognition information in which the bits from the 0-th bit to the 4-th bit represent the value of the reference signal ID for demodulation of the PUSCH, the bits from the 5-th bit to the 9-th bit represent the value of the preamble index of the preamble of the message A, and the bits from the 10-th bit to the 15-th bit represent the value of the transmission resource index of the preamble of the message A.

Alternatively, for example, the terminal device 40 and the base station device 20 generate common recognition information in which the bits from the 0-th bit to the 4-th bit represent the value of the reference signal ID for demodulation of the PUSCH, the bits from the 5-th bit to the 9-th bit represent the value of the preamble index of the preamble of the message A, and the bits from the 10-th bit to the 15-th bit represent the value of the transmission resource index of the PUSCH of the message A.

Meanwhile, the number of bits explained above is only exemplary, and is not limited to those examples.

In the terminal device 40, the obtaining unit 451 can obtain the information related to the message A, which is scheduled to be transmitted, from the memory unit 42. Then, in the terminal device 40, the generating unit 452 can generate common recognition information based on the information related to the message A. Subsequently, in the terminal device 40, the processing unit 453 can treat the common recognition information as the terminal ID and perform transmission signal processing of transmission data (for example, scrambling of the message 3). Then, the transmitting unit 455 of the terminal device 40 can transmit the transmission data, which has been subjected to the transmission signal processing, to the base station device 20.

In the base station device 20, the receiving unit 234 receives the message A from the terminal device 40. Moreover, in the base station device 20, the obtaining unit 231 obtains the information related to the message A (for example, the information given above in (C1) to (C3)) from the message A. Then, in the base station device 20, the generating unit 232 generates common recognition information based on the information related to the message A. Subsequently, in the base station device 20, based on the common recognition information, the processing unit 233 decodes the transmission data that was transmitted from the terminal device 40. As a result, the base station device 20 can obtain the message 3 that is included in the message A transmitted from the terminal device 40.

[Generation based on information related to RA-RNTI]

For example, the terminal device 40 generates common recognition information based on the information related to an RA-RNTI (Random Access RNTI). The RA-RNTI represents an identifier that is secured for the purpose of issuing a random access response (the message 2 or the message B) from the base station device 20 to the terminal device 40. The information related to an RA-RNTI is, for example, the information to be used in generating an RA-RNTI. Alternatively, the terminal device 40 can treat the RA-RNTI itself as the common recognition information.

An RA-RNTI is generated from the resource used in transmitting the preamble. For example, an RA-RNTI is generated based on the information indicated by (D1) to (D7) given below. The terminal device 40 and the base station device 20 can generate common recognition information from one or more sets of information from among a plurality of sets of information meant for generating an RA-RNTI. Of course, common recognition information can be generated using all of a plurality of sets of information meant for generating an RA-RNTI.

(D1) symbol index within one slot
(D2) symbol index within one frame
(D3) subframe number
(D4) time domain transmission resource index
(D5) frequency domain transmission resource index
(D6) carrier ID
(D7) information about whether or not the carrier is an SUL (Supplemental Uplink) carrier

Meanwhile, in the terminal device 40, the obtaining unit 451 can obtain the information for generating the RA-RNTI from the memory unit 42. The information for generating an RA-RNTI can be stored by the terminal device 40 at the time of preamble transmission. Then, in the terminal device 40, the generating unit 452 can generate common recognition information based on the information for generating an RA-RNTI. Subsequently, in the terminal device 40, the processing unit 453 can treat the common recognition information as the terminal ID and perform transmission signal processing of transmission data (for example, scrambling of the message 3). Then, in the transmitting unit 455, the terminal device 40 can transmit the transmission data, which has been subjected to the transmission signal processing, to the base station device 20.

In the base station device 20, the receiving unit 234 receives transmission data from the terminal device 40. Moreover, in the base station device 20, the obtaining unit 231 obtains the information about the resources used in the preamble transmission (for example, the information given above in (D1) to (D7)) as the information meant for generating an RA-RNTI. Then, in the base station device 20, the generating unit 232 generates common recognition information based on the obtained information. Alternatively, the RA-RNTI itself can serve as the common recognition information. Subsequently, in the base station device 20, the processing unit 233 decodes the transmission data, which is received from the terminal device 40, based on the common recognition information. As a result, the base station device 20 becomes able to obtain the transmission data that was transmitted from the terminal device 40.

[Generation based on information related to transmission resources]

For example, the terminal device 40 generates common recognition information based on the information related to the transmission resources meant for predetermined data transmission. The predetermined data transmission can be data transmission scheduled to be performed by the terminal device 40 (i.e., data transmission scheduled to be subjected to the transmission signal processing using the common recognition information), or can be data transmission performed in the past by the terminal device 40. For example, the terminal device 40 generates common recognition information based on the information related to the transmission resources for the message A, the preamble, and/or the PDSCH (or the message 3).

As the information related to the transmission resources, for example, information that is given below in (E1) to (E7) and that is used in predetermined data transmission (for example, transmission of the message A, the preamble, and/or the PUSCH (or the message 3)) can be cited. However, the information related to the transmission resources is not limited to the examples given below. Moreover, the information related to the transmission resources can be a combination of a plurality of sets of information selected from among the sets of information given below.

(E1) symbol index within one slot
(E2) symbol index within one frame
(E3) subframe number
(E4) time domain transmission resource index
(E5) frequency domain transmission resource index
(E6) carrier ID
(E7) information about whether or not the carrier is an SUL (Supplemental Uplink) carrier

Meanwhile, in the terminal device 40, the obtaining unit 451 can obtain the information related to transmission resources from the memory unit 42. The information related to transmission resources can be stored in the terminal device 40 either after or before performing predetermined data transmission. Then, in the terminal device 40, the generating unit 232 can generate common recognition information based on the information related to the transmission resources. Subsequently, in the terminal device 40, the processing unit 453 can treat the common recognition information as the terminal ID and perform transmission signal processing of transmission data (for example, scrambling of the message 3). Then, the transmitting unit 455 of the terminal device 40 can transmit the transmission data, which has been subjected to the transmission signal processing, to the base station device 20.

In the base station device 20, the receiving unit 234 receives the transmission data from the terminal device 40. Moreover, in the base station device 20, the obtaining unit 231 obtains the information about the transmission resources for predetermined data transmission (for example, the information given above in (E1) to (E7)). Then, in the base station device 20, the generating unit 232 generates common recognition information based on the obtained information. Subsequently, in the base station device 20, the processing unit 233 decodes the transmission data, which is received from the terminal device 40, based on the common recognition information. As a result, the base station device 20 becomes able to obtain the transmission data that was transmitted from the terminal device 40.

[Generation based on information related to relationship between preamble of message A and PUSCH]

For example, the terminal device 40 generates common recognition information based on the information related to the relationship between the preamble of the message A and the PUSCH (or the message 3). In the 2-step random access procedure, the transmission of the preamble in the message A and the transmission of the message 3 is performed at the same time. Hence, based on the information related to the relationship of the preamble with the channel used for transmitting the message 3, the terminal device 40 can generate common recognition information.

As the information related to the relationship, the information related to the relationship of the preamble index and/or the preamble of the message A with the information about the relative position in the resource of the PUSCH (or the message 3) can be cited. For example, as the information related to the relationship, the information indicating a combination of the preamble (or the preamble index) and the slot offset or the PRB (Physical Resource Block) offset of the PUSCH (or the message 3) can be cited.

Meanwhile, in the terminal device 40, the obtaining unit 451 can obtain the information related to the relationship between the preamble of the message A and the PUSCH (or the message 3) from the memory unit 42. The information related to the relationship can be stored in advance in the terminal device 40 before the transmission of the message A. Then, in the terminal device 40, the generating unit 232 can generate common recognition information based on the information related to the relationship. Subsequently, in the terminal device 40, the processing unit 453 can treat the common recognition information as the terminal ID and perform transmission signal processing of transmission data (for example, scrambling of the message 3). Then, the transmitting unit 455 of the terminal device 40 can transmit the transmission data, which has been subjected to the transmission signal processing, to the base station device 20.

In the base station device 20, the receiving unit 234 receives transmission data from the terminal device 40. Moreover, in the base station device 20, the obtaining unit 231 obtains the information related to the relationship between the preamble of the message A and the PUSCH (or the message 3). Then, in the base station device 20, the generating unit 232 generates common recognition information based on the obtained information. Subsequently, in the base station device 20, based on the common recognition information, the processing unit 233 decodes the message 3 received from the terminal device 40. As a result, the base station device 20 can obtain the message 3 that was transmitted from the terminal device 40.

[In case of handover]

In the case of handover, the terminal device 40 can obtain, as the common recognition information, the terminal ID that was used in the source cell. The source cell implies the cell representing the handover source. Meanwhile, if the terminal ID to be used in the target cell is known, then the terminal device 40 can obtain that terminal ID as the common recognition information. The target cell implies the cell representing the handover destination. Of course, the terminal device 40 can generate common recognition information using some other method too. The base station device 20 receives data from the terminal device 40 and decodes it using the terminal ID in the source cell or the terminal ID in the target cell.

<5-3. Generation of common recognition information from information about group of candidates for common recognition information>

As a method for generating common recognition information, for example, it is possible to think of a method in which, from the information about a group of candidates for common recognition information (for example, terminal IDs or substitutes for the terminal IDs), the terminal device 40 generates (selects) common recognition information.
The base station device 20 can transmit, using broadcast or groupcast, the information about a group of candidates for common recognition information to the terminal device 40. The broadcast can be, for example, the transmission of the MIB, the SIB, or the paging information. Then, based on the information about the group of candidates that has been broadcast or groupcast, the terminal device 40 can generate common recognition information.
Meanwhile, the information about the group of candidates for common recognition information can be the information about a plurality of possible candidates for common recognition information. For example, the information about the group of candidates for common recognition information can be the information about a group of candidates (a white list) obtained by compiling the terminal IDs (or substitutes for the terminal IDs) that are currently available for use to the base station device.
Alternatively, the information about the group of candidates for common recognition information can be the information about a plurality of candidates that cannot serve as common recognition information. For example, the information about the group of candidates for common recognition information can be the information about a group of candidates (a black list) obtained by compiling the terminal IDs (or substitutes for the terminal IDs) that are currently unavailable for use.
In the terminal device 40, the obtaining unit 451 obtains the information about the group of candidates for common recognition information from the base station device 20. The information about the group of candidates either can be a white list or can be a black list. Then, in the terminal device 40, the generating unit 452 generates common recognition information from the information about the group of candidates. Herein, the generating unit 452 of the terminal device 40 can select one of the candidates from the group of candidates as the common recognition information, or can perform predetermined processing on one of the candidates from the group of candidates and treat the processing result as the common recognition information.
At that time, the generating unit 452 of the terminal device 40 can select (or generate) the common recognition information from the group of candidates according to a predetermined rule. As an example of the predetermined rule, the generating unit 452 can randomly select information from a plurality of candidates and treat the selected information as the common recognition information. As another example of the predetermined rule, based on sensing information obtained by the obtaining unit 451, the generating unit 452 can select information from a plurality of candidates and treat the selected information as the common recognition information. The sensing information obtained by the obtaining unit 451 can be information about the detection of a plurality of terminal devices 40 present within a predetermined area (for example, within the same cell). Then, from the sensing information, the generating unit 452 estimates the terminal IDs used by the surrounding terminal devices 40; and can select, as the common recognition information, a terminal ID estimated to be available from among a plurality of candidates.
Then, in the terminal device 40, the processing unit 453 can treat the common recognition information as the terminal ID and perform transmission signal processing of transmission data (for example, scrambling of the message 3). Subsequently, the transmitting unit 455 of the terminal device 40 can transmit the transmission data, which has been subjected to the transmission signal processing, to the base station device 20.
In the base station device 20, the receiving unit 234 receives the transmission data from the terminal device 40. Moreover, in the base station device 20, the obtaining unit 231 obtains the information about the group of candidates for common recognition information that has been transmitted to the terminal device 40. The information about the group of candidates either can be a white list or can be a black list. Then, in the base station device 20, the processing unit 233 repeatedly attempts to decode the received signals using the information about a plurality of candidates for common recognition operation. As a result, the base station device 20 becomes able to obtain the transmission data that was transmitted from the terminal device 40.

<5-4. Generation of common recognition information based on additional information transmitted from base station device>

The terminal device 40 can generate common recognition information based on additional information related to common recognition information (hereinafter, called additional information) as transmitted from the base station device 20.

In the terminal device 40, the obtaining unit 451 obtains the additional information from the base station device 20. The additional information can be information to be used in generating common recognition information. For example, the additional information can be information about the criteria for generating common recognition information, or can be information about the manner of generation of common recognition information.

Alternatively, the additional information can be common recognition information that is statically decided in advance. In that case, in the additional information, a plurality of selection candidates for common recognition information can be included. Moreover, the selection candidates can be classified according to predetermined criteria.

For example, in the terminal device 40, the obtaining unit 451 can obtain values from 0 to $X_1$ as the selection candidates for common recognition information in the case of communication of high priority, and can obtain values from $X_2$ to $X_3$ as the selection candidates for common recognition information in the case of communication of high priority. Then, in the terminal device 40, based on the priority of the transmission data to be subjected to the transmission signal processing, the generating unit 452 can select the common recognition information from among the selection candidates.

Meanwhile, a plurality of selection candidates for common recognition information can be classified according to the information related to the terminal device 40 (for example, the information about the type of the terminal device 40). For example, in the terminal device 40, the obtaining unit 451 can obtain values from 0 to $X_1$ as the selection candidates for common recognition information in the case in which the category of the terminal device 40 is category 1, and can obtain values from $X_2$ to $X_3$ as the selection candidates for common recognition information in the case in which the category of the terminal device 40 is category 1. Then, in the terminal device 40, based on the category of the terminal device 40, the generating unit 452 can select the common recognition information from among the selection candidates.

Alternatively, a plurality of selection candidates for common recognition information can be classified according to the multi-access method used by the terminal device 40 for performing data transmission. For example, in the terminal device 40, the obtaining unit 451 can obtain values from 0 to $X_1$ as the selection candidates for common recognition information in the case in which the terminal device 40 uses the OMA as the multi-access method for performing data transmission, and can obtain values from $X_2$ to $X_3$ as the selection candidates for common recognition information in the case in which the terminal device 40 uses the NOMA as the multi-access method for performing data transmission. Then, in the terminal device 40, based on the multi-access method to be used by the terminal device 40 for performing data transmission, the generating unit 452 can select the common recognition information from among the selection candidates.

Still alternatively, a plurality of selection candidates for common recognition information can be classified according to the information related to the resources used by the terminal devices 40 for performing random accessing. For example, in the terminal device 40, the obtaining unit 451 can obtain values from 0 to $X_1$ as the selection candidates for common recognition information in the case in which the terminal device 40 uses a random access resource 1 as the resource to be used in random accessing, and can obtain values from $X_2$ to $X_3$ as the selection candidates for common recognition information in the case in which the terminal device 40 uses a random access resource 2 as the resource to be used in random accessing. Then, in the terminal device 40, based on the information related to the resource to be used in subsequent random accessing, the generating unit 452 can select the common recognition information from among the selection candidates.

Moreover, in the terminal device 40, the processing unit 453 can treat the common recognition information as the terminal ID and perform transmission signal processing of transmission data (for example, scrambling of the message 3). Then, the transmitting unit 455 of the terminal device 40 can transmit the transmission data, which has been subjected to the transmission signal processing, to the base station device 20.

In the base station device 20, the receiving unit 234 receives the transmission data from the terminal device 40. Moreover, in the base station device 20, the obtaining unit 231 obtains the additional information that has been transmitted to the terminal device 40. Then, in the base station device 20, the generating unit 232 generates common recognition information using the additional information. Subsequently, based on the common recognition information, the processing unit 233 of the base station device 20 decodes the transmission data that was transmitted by the terminal device 40. As a result, the base station device 20 becomes able to obtain the transmission data that was transmitted by the terminal device 40.

<5-5. Generation of common recognition information from previously-obtained terminal ID>

The terminal device 40 can generate common recognition information from a previously-obtained terminal ID. The terminal device 40 can treat a previously-obtained terminal ID itself as the common recognition information, or can perform predetermined processing on a previously-obtained terminal ID and treat the processing result as the common recognition information. Meanwhile, the previously-obtained terminal ID can be the terminal ID obtained from the base station device 20 at the time of switching to the RRC connected state.

Once the terminal ID is obtained, the terminal device 40 stores it in the memory unit 42. Meanwhile, when a new terminal ID is notified from the base station device 20, the terminal device 40 can update the terminal ID stored in the memory unit 42. Then, in the terminal device 40, if there is a situation in which data transmission needs to be performed with no terminal ID assigned thereto, the obtaining unit 451 obtains the terminal ID from the memory unit 42. In the terminal device 40, the generating unit 452 can treat the terminal ID itself as the communication recognition information, or can perform predetermined processing on the terminal ID and treat the processing result as the common recognition information.

Subsequently, in the terminal device 40, the processing unit 453 can treat the common recognition information as the terminal ID and perform transmission signal processing of transmission data (for example, scrambling of the message 3). Then, the transmitting unit 455 of the terminal device 40 can transmit the transmission data, which has been subjected to the transmission signal processing, to the base station device 20.

In the base station device 20, the receiving unit 234 receives the transmission data from the terminal device 40. Moreover, in the base station device 20, the obtaining unit 231 obtains the additional information that has been transmitted to the terminal device 40. Then, in the base station device 20, the generating unit 232 generates common recognition information using the additional information. Subsequently, in the base station device 20, the processing unit 233 decodes the transmission data, which was transmitted from the terminal device 40, based on the common recognition information. As a result, the base station device 20 becomes able to obtain the transmission data that was transmitted from the terminal device 40.

Meanwhile, when any one of conditions (F1) to (F3) given below is satisfied, it is desirable that the terminal device 40 does not use the previously-obtained terminal ID.

(F1) when a predetermined period of time has elapsed since obtaining the terminal ID
(F2) when there is movement to another cell since obtaining the terminal ID
(F3) when transmission fails using the previously-obtained terminal ID

<5-6. Treating zero value as common recognition information>

The terminal device 40 can treat the zero value as the common recognition information. For example, the terminal device 40 can perform transmission signal processing, such as scrambling, with the zero value serving as the terminal ID. Moreover, the base station device 20 can perform received signal processing with the zero value serving as the terminal ID.

In that case, although scrambling is performed, it is equivalent to not performing scrambling. In that case, the correlation with the transmission signals of other terminal devices 40 becomes higher, and it is believed that transmission errors occur. For that reason, for example, when there is no demand for low delay (for example, from among eMBB, mMTC, and URLLC; cases excluding URLLC), it is desirable to perform transmission signal processing in which the zero value serves as the terminal ID (the common recognition information).

<5-7. Implicit notification of common recognition information from terminal device to base station device>

The terminal device 40 can notify the base station device 20 about the common recognition information (for example, a terminal ID or a substitute for the terminal ID) in an implicit manner.

For example, the common recognition information (for example, a terminal ID or a substitute for the terminal ID) generated by the terminal device 40 is linked to at least one of the following: the reference signal ID (port number), the preamble index, and the transmission resource index. That is, when the terminal device 40 decides on the common recognition information (for example, a terminal ID or a substitute for the terminal ID), at least one of the reference signal ID (port number), the preamble index, and the transmission resource index gets decided.

Then, using at least one of the reference signal ID (port number), the preamble index, and the transmission resource index that is linked to the generated common recognition device (for example, the terminal ID or a substitute for the terminal ID); the terminal device 40 transmits the reference signal and/or the preamble.

The base station device 20 determines the common recognition device (for example, the terminal ID or a substitute for the terminal ID) from the received reference signal and/or the preamble; and performs reception processing.

Moreover, the base station device 20 can determine the transmission resource index from the determined common recognition device (for example, the terminal ID or a substitute for the terminal ID), and decode the determined transmission resources.

<5-8. Explicit notification of common recognition information from terminal device to base station device>

The terminal device 40 can notify the base station device 20 about the common recognition information (a terminal ID or a substitute for the terminal ID) in an explicit manner.

For example, the terminal device 40 notifies the base station device 20 about the generated common recognition information (a terminal ID or a substitute for the terminal ID) using UCI (Uplink Control Information). Thus, the base station device 20 can recognize the terminal ID by decoding the UCI. After decoding the UCI and recognizing the terminal ID, the base station device 20 decodes the PUSCH (or the message 3).

For example, the terminal device 40 can omit the scrambling operation and, when the base station device 20 is capable of decoding the PUSCH (or the message 3), can include the common recognition information (a terminal ID or a substitute for the terminal ID) in the data of the PUSCH.

<5-9. Omission of signal processing requiring terminal ID>

Meanwhile, when the terminal ID is not assigned, the terminal device 40 can omit the signal processing requiring the terminal ID, such as the scrambling operation. Then, the base station device 20 can perform received signal processing by considering that the signal processing requiring the terminal ID was not performed in the terminal device 40.

<5-10. Exemplary sequence>

Till now, the detailed explanation was given about the signal processing performed without any ID assignment. Given below is the explanation of a specific example of the sequence of those operations. The exemplary sequence explained in the present embodiment represents an exemplary sequence of the connection operation performed using the 2-step random access procedure.

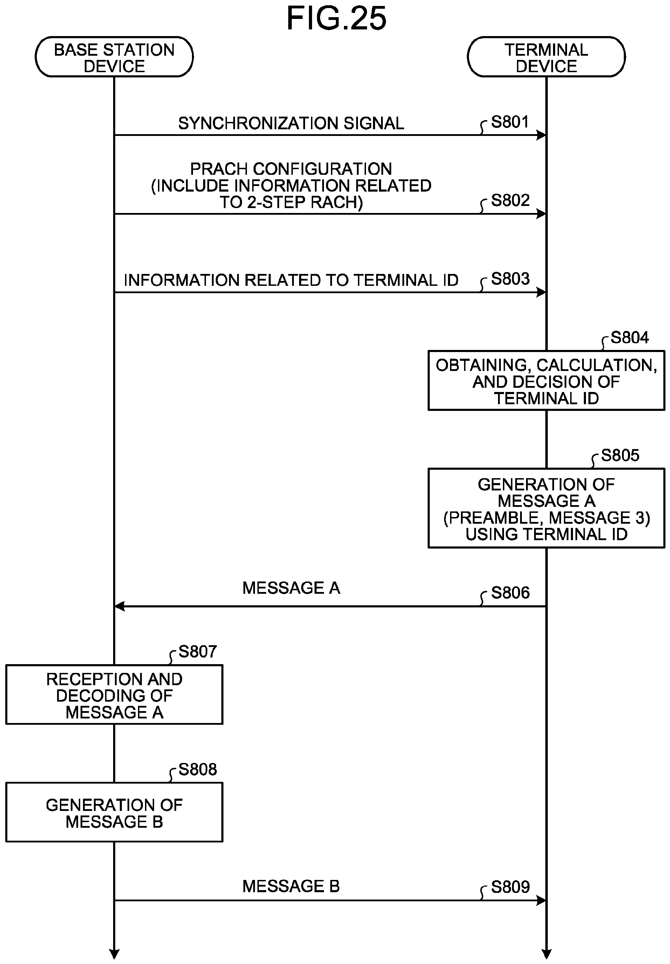

FIG. 25 is a sequence diagram illustrating an example of the connection operation according to the embodiment of the application concerned. In FIG. 25 is illustrated an example in which the terminal device 40 establishes connection with the base station device 20 using the 2-step random access procedure. Thus, the exemplary sequence of the connection operation is explained below with reference to FIG. 25.

Firstly, the transmitting unit 235 of the base station device 20 transmits a synchronization signal. In the terminal device 40, the receiving unit 454 receives the synchronization signal from the base station device 20 (Step S801) .

Moreover, the transmitting unit 235 of the base station device 20 transmits a PRACH configuration that includes information related to the 2-step RATCH. In the terminal device 40, the receiving unit 454 receives the PRACH configuration, which includes information related to the 2-step RATCH, from the base station device 20 (Step S802) .

Furthermore, the transmitting unit 235 of the base station device 20 transmits the information related to the common recognition information. For example, the transmitting unit 235 of the base station device 20 transmits the information related to the terminal ID. The information related to the common recognition information is, for example, either the information about the group of candidates for common recognition information or the additional information. In the terminal device 40, the receiving unit 454 obtains the information related to the common recognition information from the base station device 20 (Step S803). Meanwhile, it is also possible to omit Step S803.

Then, in the terminal device 40, the obtaining unit 451 obtains predetermined information that is different than the terminal ID. Moreover, in the terminal device 40, the generating unit 452 generates common recognition information (for example, a terminal ID or a substitute for the terminal ID) based on the predetermined information. For example, the terminal device 40 obtains, calculates, and decides on the terminal ID (Step S804). Herein, the operations performed in the terminal device 40 (the operations performed by the obtaining unit 451 and the generating unit 452) can be identical to the operations explained above with reference to <5-2> to <5-9>.

Then, in the terminal device 40, the processing unit 453 performs transmission signal processing using the common recognition information. For example, in the terminal device 40, the processing unit 453 generates a message A (the preamble and the message 3) using the terminal ID (or the substitute for the terminal ID) (Step S805). At that time, the processing unit 453 can perform scrambling of the message 3 while treating the common recognition information as the terminal ID.

Then, the transmitting unit 455 of the terminal device 40 transmits the message A to the base station device 20 (Step S806). The base station device 20 receives the message A from the terminal device 40, and decodes it (Step S807). For example, in the base station device 20, the obtaining unit 231 obtains predetermined information that is different than the terminal ID of the terminal device 40. Then, in the base station device 20, the generating unit 232 generates common recognition information based on the predetermined information. Subsequently, in the base station device 20, the processing unit 233 decodes the message 3, which is included in the message A, based on the common recognition information. Herein, the operations performed in the base station device 20 (the operations performed by the obtaining unit 231, the generating unit 452, and the processing unit 233) can be identical to the operations explained above with reference to <5-2> to <5-9>.

Then, in the base station device 20, the processing unit 233 generates a message B (Step S808). Subsequently, the transmitting unit 235 of the base station device 20 transmits the generated message B to the terminal device 40 (Step S809). In the terminal device 40, the receiving unit 454 receives the message B from the base station device 20.

<5-11. Use of common recognition information in operations subsequent to message A>

The common recognition information (for example, a terminal ID or a substitute for the terminal ID), which is generated at Step S804, can be used in the operations subsequent to the message A.

For example, the terminal device 40 and the base station device 20 can use the common recognition information, which is generated at Step S804 or Step S807, without modification as the terminal ID of the terminal device 40 in the operations subsequent to the message A. Of course, the terminal device 40 and the base station device 20 may not use the common recognition information as the terminal ID of the terminal device 40 in the operations subsequent to the message A.

[In case of using common recognition information as terminal ID in operations subsequent to message A]

In the case of using the common recognition information as the terminal ID of the terminal device 40 in the operations subsequent to the message A, the terminal device 40 and the base station device 20 can use the common recognition information as, for example, a C-RNTI. Meanwhile, it is desirable that an RNTI, which is scrambled in the CRC added to the DCI that schedules the message B, represents the C-RNTI mentioned above.

[Case (1) of not using common recognition information as terminal ID in operations subsequent to message A]

In the case of not using the common recognition information as the terminal ID of the terminal device 40 in the operations subsequent to the message A, the base station device 20 can notify the terminal device 40 about the terminal ID using the message B or some other message.

At that time, the base station device 20 can be include the terminal ID in the data of the message B or some other message, or can include the terminal ID in the control information of the message B or some other message. The RNTI, which is scrambled in the CRC added to the DCI that schedules the message B, can be an RA-RNTI or can be a new RNTI different than the C-RNTI.

Moreover, in the scrambling of the control information of the message B or some other message, or in the scrambling of the CRC of the control information; the base station device 20 can perform scrambling using the common recognition information. As a result of scrambling of the control information or scrambling of the CRC of the control information, the terminal device 40 becomes able to recognize that the message addressed to itself has been transmitted.

[Case (2) of not using common recognition information as terminal ID in operations subsequent to message A]

In the case of not using the common recognition information as the terminal ID of the terminal device 40 in the operations subsequent to the message A, for example, the terminal device 40 and the base station device 20 use, as the terminal ID in the operations subsequent to the message A, a terminal ID calculated from the common recognition information or a terminal ID selected from among the candidates for terminal ID linked to the value of the common recognition information.

For example, the base station device 20 receives signals transmitted using the common recognition information; calculates or decides on the terminal ID from the common recognition information; and transmits the message B using the terminal ID that is calculated or decided.

The terminal device 40 transmits signals using the common recognition information; and then calculates or decides on the terminal ID from the common recognition information and receives the message B, which is transmitted by the base station device 20, using the terminal ID that is calculated or decided.

Meanwhile, in the case of selecting a terminal ID from the candidates for terminal ID linked to the value of the common recognition information, the value selected by the terminal device 40 needs to be determined in a blind manner. For example, at the time of unscrambling the control information of the message B transmitted by the base station device 20, the terminal device 40 performs blind decoding using all candidates for terminal ID. Then, the terminal device 40 transmits, to the base station device 20, a response with respect to the terminal ID that enabled successful decoding; and that terminal ID is used in the communication between the terminal device 40 and the base station device 20 during the subsequent operations.

<5-12. Cases in which generated common recognition information collides with common recognition information of another terminal>

As the cases in which the calculated/decided common recognition information (for example, a terminal ID or a substitute for the terminal ID) collides with the ID of another terminal device 40, it is possible to think of the following cases. The following explanation is given for the cases in which two terminal devices 40 are present. However, the explanation is also applicable to the cases in which three or more terminal devices 40 are present.

[Case 1]

In a case 1, the base station device 20 is not only unable to decode the transmission signals from two terminal devices 40, but is also unable to even detect the transmission signals from the terminal devices 40.

In this case, the base station device 20 is unable to get to know that two terminal devices 40 have performed data transmission. At the time of performing retransmission, the terminal devices 40 can attempt retransmission by ramping up the transmission power, or modifying the sequence of the preambles, or changing the transmission resource, or varying the transmission timing. If the transmission count reaches the transmission count upper limit, then the terminal device 40 can stop the retransmission operation.

[Case 2]

In a case 2, although the base station device 20 is not able to decode the transmission signals from two terminal devices, it is able to successfully detect the transmission signals from one or both of the two terminal devices 40.

In this case, with respect to the successfully-detected transmission signals, the base station device 20 transmits response signals and/or control information of response signals. The response signals and/or the control information of the response signals include information related to transmission signal processing, such as the successfully-detected preambles, DMRS, resource information, terminal IDs, resource allocation information, and MCS. Moreover, the response signals and/or the control information of the response signals include back-off timer (back-off indicator), and can also include information for shifting the retransmission timing of the terminals.

When the terminal device 40 receives the response signals and/or the control information of the response signals and can recognize that the response signals correspond to the transmission signals transmitted therefrom, the terminal device 40 can retransmit the message using the resource allocation information and the information related to transmission signal processing as included in the response signals and/or the control information of the response signals. In that case, the terminal device 40 need not transmit some of the information such as the preambles. Moreover, when the information related to the terminal ID is included in the response signals and/or the control information of the response signals, the terminal device 40 can perform signal processing at the time of retransmission using the notified terminal ID.

On the other hand, upon receiving the response signals and/or the control information of the response signals, if the terminal device 40 cannot recognize that the response signals correspond to the transmission signals transmitted therefrom, the terminal device 40 can retransmit the message by shifting the transmission timing based on, for example, the back-off timer. At that time, when the terminal selects the terminal ID, it is desirable to reselect the terminal ID and then attempt to retransmit the message.

[Case 3]

In a case 3, the base station device 20 is able to decode the transmission signals from one or both of the two terminal devices 40.

In this case, the base station device 20 can transmit a response signal of the message B and/or control information of the response signal to each terminal device 40 regarding which the decoding of transmission signals was successful. The response signal of the message B and/or the control information of the response signal can include the common recognition information (for example, a terminal ID or a substitute for the terminal ID) decided/calculated by the terminal device 40. Alternatively, the base station device 20 can use the abovementioned information in the signal processing of the response signal. Still alternatively, the base station device 20 can use, in the signal processing of the response signal, a different terminal ID in place of the common recognition information (for example, a terminal ID or a substitute for the terminal ID).

The terminal device 40 receives the response signal of the message B and/or the control information of the response signal. At that time, the terminal device 40 can confirm whether the decided/calculated common recognition information (for example, a terminal ID or a substitute for the terminal ID) is included in the response signal, or can confirm whether the abovementioned ID is used in the signal processing of the response signal. The terminal device 40 can read the decided/calculated common recognition information (for example, a terminal ID or a substitute for the terminal ID) and, when the information about another terminal ID is further included, can use the notified other terminal ID in the subsequent operations. On the other hand, if such information is not included, the terminal device 40 can use the decided/calculated common recognition information (for example, a terminal ID or a substitute for the terminal ID) as the terminal ID in the subsequent operations too.

<5-13. Regarding cell ID>

In the case of handover, for example, there are times when the $n_{ID}$ used in scrambling becomes an issue. For example, there are times when the cell ID is used as the $n_{ID}$.

In this case, for example, the terminal device 40 can use the source cell ID as the $n_{ID}$, or can use the target cell ID as the $n_{ID}$.

Moreover, in the case of handover, the terminal device 40 can delete the term of $n_{ID}$ or can set "0" in the term of $n_{ID}$. Alternatively, the terminal device 40 can use a fixed value for the $n_{ID}$.

<<6. Modification examples>>

The embodiment described above is only exemplary, and it is possible to have various modifications and applications.

<6-1. Modification examples related to operations>

For example, regarding the methods explained earlier in the embodiment (for example, the methods explained in <5-1. Signal processing requiring terminal ID>), either only one of the methods can be implemented or a plurality of methods can be implemented in combination.

In the embodiment described above, the explanation is given mainly for the working example of the uplink. However, the embodiment described above is not limited to the uplink, and can also be applied to the downlink. Besides, the embodiment described above can also be applied to the sidelink such as device-to-device communication and to the communication with relay terminals. For example, the embodiment described above can also be applied to the communication between a base station and a relay terminal, the communication between a relay terminal and a user terminal, and the communication between a user terminal and a user terminal.

In the embodiment described above, the operations (<5-1. Signal processing requiring terminal ID>) are performed during the communication between the base station device 20 and the terminal device 40. However, those operations can also be applied to the communication between the relay device 30 and the terminal device 40. In that case, the term "base station device 20" appearing in those operations is appropriately replaced with the term "relay device 30".

Moreover, the operations (<5-1. Signal processing requiring terminal ID>) can also be applied to the communication between the base station device 20 and the relay device 30. In that case, the term "terminal device 40" appearing in those operations is appropriately replaced with the term "relay device 30".

Furthermore, the operations (<5-1. Signal processing requiring terminal ID>) can also be applied to the communication between the concerned base station device 20 and another base station device 20. In that case, the terms "terminal device 40" and "base station device 20" appearing in those operations are appropriately replaced with the terms "concerned base station device 20" and "other base station device 20", respectively.

Moreover, the operations (<5-1. Signal processing requiring terminal ID>) can also be applied to the communication between the concerned relay device 30 and another relay device 30. In that case, the terms "terminal device 40" and "base station device 20" appearing in those operations are appropriately replaced with the terms "concerned relay device 30" and "other relay device 30", respectively.

Furthermore, the operations (<5-1. Signal processing requiring terminal ID>) can also be applied to the communication between the concerned terminal device 40 and another terminal device 40. In that case, the "base station device 20" appearing in those operations is appropriately replaced with the term "other terminal device 40".

<6-2. Other modification examples>

A control device for controlling the management device 10, the base station device 20, the relay device 30, or the terminal device 40 can be implemented using a dedicated computer system or a general-purpose computer system.

For example, a communication program meant for implementing the abovementioned operations (for example, the transmission-reception operation) is distributed by storing it in a computer-readable recording medium such as an optical disk, a semiconductor memory, a magnetic tape, or a flexible disk. Then, for example, the communication program is installed in a computer and is executed to configure the control device. At that time, the control device can also be an external device (for example, a personal computer) installed on the outside of the base station device 20, the relay device 30, or the terminal device 40. Alternatively, the control unit can be an internal device of the base station device 20, the relay device 30, or the terminal device 40 (for example, can be the control unit 23, the control unit 34, or the control unit 45).

Meanwhile, the communication program can be stored in a disk device of a server device installed in a network such as the Internet, and can be downloaded in a computer. Alternatively, the abovementioned functions can be implemented as a result of coordination between the OS (Operating System) and application software. In that case, the portion other than the OS can be stored it in a medium and distributed, or can be stored in a server device and downloaded in a computer.

Of the operations described in the embodiments, some or all of the operations explained as being performed automatically can be performed manually. Similarly, some or all of the operations explained as being performed manually can be performed automatically by a known method. Moreover, the information such as the operational procedures, the specific names, a variety of data, and the parameters described in the embodiment or illustrated in the drawings can be changed as required unless otherwise specified. For example, the variety of information illustrated in the drawings is not limited to the information illustrated in the drawings.

The constituent elements of the devices illustrated in the drawings are merely conceptual, and need not be physically configured as illustrated. The constituent elements, as a whole or in part, can be separated or integrated either functionally or physically based on various types of loads or use conditions.

The embodiment described above can be appropriately combined without causing any contradiction in the operational details. Moreover, regarding the steps illustrated in the flowcharts and the sequence diagrams explained in the embodiment, the sequence can be appropriately changed.

Meanwhile, for example, the present embodiment can be implemented using all types of configurations of a device or a system (i.e., implemented as a partial configuration of a device), such as a processor functioning as a system LSI (Large Scale Integration), a module used in a plurality of processors, a unit in which a plurality of modules is used, or a set configured by adding other functions to a unit.

Meanwhile, in the present embodiment, a system implies a collection of a plurality of constituent elements (devices and modules (components), and it does not matter whether or not all constituent elements are housed in a single housing. Thus, a system can imply a plurality of devices housed in different housings and connected via a network, or can imply a single device configured by placing a plurality of modules inside a single housing.

Moreover, for example, in the present embodiment, the configuration can be done using cloud computing in which a single function is processed among a plurality of devices in cooperation via a network.

<7. Summary>

As explained above, according to the embodiment of the application concerned, a communication device (for example, the terminal device 40) obtains predetermined information, which is different than the terminal IDs enabling identification of a plurality of communication devices with which another communication device (for example, the base station device 20) performs radio communication; and, based on the predetermined information, generates common recognition information to be shared with the other communication device.

The common recognition information generated in such a manner represents the information that is recognizable in common by the concerned communication device (for example, the terminal device 40) and the other communication device (for example, the base station device 20). Hence, even when the terminal ID is not assigned, the concerned communication device can perform signal processing (for example, scrambling) on the transmission data to be transmitted to the other communication device. Thus, if the concerned communication device performs signal processing on the transmission data using the common recognition information, the base station device can decode the transmission data, which has been subjected to the transmission signal processing, using the common recognition information. As a result, in the 2-step random access procedure, even in a situation in which the terminal ID is not assigned, the concerned communication device becomes able to transmit data to the other communication device. Hence, the communication system including the concerned communication device (for example, the communication system 1) becomes able to achieve a high level of communication performance.

Although the application concerned is described above in detail in the form of an embodiment with reference to the accompanying drawings; the technical scope of the application concerned is not limited to the embodiment described above. That is, the application concerned is to be construed as embodying all modifications such as other embodiments, additions, alternative constructions, and deletions that may occur to one skilled in the art that fairly fall within the basic teaching herein set forth.

The effects of the embodiment described in the present written description are only explanatory and exemplary, and are not limited in scope.

Meanwhile, a configuration as explained below also falls within the technical scope of the application concerned.

(1) A communication device comprising:

an obtaining unit that obtains predetermined information which is different than terminal IDs enabling identification of each of a plurality of communication devices with which another communication device performs radio communication; and

a generating unit that, based on the predetermined information, generates common recognition information to be shared with the other communication device.

(2) The communication device according to (1), wherein

the obtaining unit obtains, as the predetermined information, held information which is held in the communication device and which enables the other communication device to narrow down candidate sets of information as information about the communication device, and

the generating unit generates the common recognition information based on the held information.

(3) The communication device according to (2), wherein

the other communication device is a base station device connected to a core network, and

the obtaining unit obtains, as the predetermined information, the held information that is held in the communication device and that is obtainable by the base station device from another base station device via the core network.

(4) The communication device according to (1), wherein

the obtaining unit obtains, as the predetermined information, held information that is held in the communication device and that is recognizable by the other communication device as information about the communication device, and

the generating unit generates the common recognition information based on the held information.

(5) The communication device according to (4), wherein

the other communication device is a base station device, and

the held information represents information related to 2-step random access with respect to the base station device.

(6) The communication device according to (5), wherein the held information represents information related to transmission resource to be used in performing data transmission to the other communication device during 2-step random access.

(7) The communication device according to (5), wherein the held information represents at least one set of information selected from among

a demodulation reference signal ID of PUSCH of message A of 2-step random access,

preamble index of preamble of message A, and

transmission resource index of message A or PUSCH.

(8) The communication device according to (4), wherein the held information represents information for generating an RA-RNTI.

(9) The communication device according to (1), wherein

the obtaining unit obtains, as the predetermined information from the other communication device, a plurality of candidate sets of information that is not able to serve as the common recognition information, and
the generating unit obtains, as the common recognition information, information selected by avoiding the plurality of candidate sets.

(10) The communication device according to (1), wherein

the obtaining unit obtains, as the predetermined information from the other communication device, a plurality of candidate sets of information that is able to serve as the common recognition information, and
the generating unit obtains, as the common recognition information, information selected from among the plurality of candidate sets.

(11) The communication device according to (10), wherein

the obtaining unit obtains sensing information about a plurality of communication devices present within a predetermined range, and
based on the sensing information, the generating unit selects, from among the plurality of candidate sets, information to be used as the common recognition information.

(12) The communication device according to any one of (1) to (11), further comprising a processing unit that uses the common recognition information and performs transmission signal processing meant for transmitting data to the other communication device.
(13) The communication device according to (12), wherein

the other communication device is a base station device, and
the processing unit uses the common recognition information in the transmission signal processing at time of performing 2-step random access to the base station device.

(14) The communication device according to (13), wherein the transmission signal processing represents scrambling of a physical channel.
(15) A base station device comprising:

an obtaining unit that obtains predetermined information which is different than terminal IDs enabling identification of each of a plurality of terminal devices; and
a generating unit that, based on the predetermined information, generates common recognition information to be shared with one terminal device from among the plurality of terminal devices.

(16) The base station device according to (15), further comprising a processing unit that uses the common recognition information and performs received signal processing meant for receiving data from one terminal device from among the plurality of terminal devices.
(17) A communication method comprising:

obtaining predetermined information which is different than terminal IDs enabling identification of each of a plurality of communication devices with which another communication device performs radio communication; and
generating, based on the predetermined information, common recognition information to be shared with the other communication device.

(18) A computer program that causes a computer to function as:

an obtaining unit that obtains predetermined information which is different than terminal IDs enabling identification of each of a plurality of communication devices with which another communication device performs radio communication; and
a generating unit that, based on the predetermined information, generates common recognition information to be shared with the other communication device.

(19) A communication method comprising:

obtaining predetermined information which is different than terminal IDs enabling identification of each of a plurality of terminal devices; and
generating, based on the predetermined information, common recognition information to be shared with one terminal device from among the plurality of terminal devices.

(20) A communication program that causes a computer to function as:

an obtaining unit that obtains predetermined information which is different than terminal IDs enabling identification of each of a plurality of terminal devices; and
a generating unit that, based on the predetermined information, generates common recognition information to be shared with one terminal device from among the plurality of terminal devices.

Reference Signs List

1 communication system
10 management device
20 base station device
30 relay device
40 terminal device
11 communication unit
21, 31, 41 signal processing unit
12, 22, 32, 42 memory unit
13, 23, 34, 45 control unit
33, 43 network communication unit
44 input-output unit
211, 311, 411 reception processing unit
211a, 411a radio receiving unit
211b, 411b multiple separation unit
211c, 411c demodulating unit
211d, 411d decoding unit
212, 312, 412 transmission processing unit
212a, 412a encoding unit
212b, 412b modulating unit
212c, 412c multiplexing unit
212d, 412d radio transmission unit
213, 313, 413 antenna
231, 451 obtaining unit
232, 452 generating unit
233, 453 processing unit
234, 454 receiving unit
235, 455 transmitting unit

Claims

1. A communication device comprising:

an obtaining unit that obtains predetermined information which is different than terminal IDs enabling identification of each of a plurality of communication devices with which another communication device performs radio communication; and
a generating unit that, based on the predetermined information, generates common recognition information to be shared with the other communication device.

2. The communication device according to claim 1, wherein

the obtaining unit obtains, as the predetermined information, held information which is held in the communication device and which enables the other communication device to narrow down candidate sets of information as information about the communication device, and

the generating unit generates the common recognition information based on the held information.

3. The communication device according to claim 2, wherein

the other communication device is a base station device connected to a core network, and
the obtaining unit obtains, as the predetermined information, the held information that is held in the communication device and that is obtainable by the base station device from another base station device via the core network.

4. The communication device according to claim 1, wherein

the obtaining unit obtains, as the predetermined information, held information that is held in the communication device and that is recognizable by the other communication device as information about the communication device, and
the generating unit generates the common recognition information based on the held information.

5. The communication device according to claim 4, wherein

the other communication device is a base station device, and
the held information represents information related to 2-step random access with respect to the base station device.

6. The communication device according to claim 5, wherein the held information represents information related to transmission resource to be used in performing data transmission to the other communication device during 2-step random access.

7. The communication device according to claim 5, wherein the held information represents at least one set of information selected from among

a demodulation reference signal ID of PUSCH of message A of 2-step random access,
preamble index of preamble of message A, and transmission resource index of message A or PUSCH.

8. The communication device according to claim 4, wherein the held information represents information for generating an RA-RNTI.

9. The communication device according to claim 1, wherein

the obtaining unit obtains, as the predetermined information from the other communication device, a plurality of candidate sets of information that is not able to serve as the common recognition information, and
the generating unit obtains, as the common recognition information, information selected by avoiding the plurality of candidate sets.

10. The communication device according to claim 1, wherein

the obtaining unit obtains, as the predetermined information from the other communication device, a plurality of candidate sets of information that is able to serve as the common recognition information, and
the generating unit obtains, as the common recognition information, information selected from among the plurality of candidate sets.

11. The communication device according to claim 10, wherein

the obtaining unit obtains sensing information about a plurality of communication devices present within a predetermined range, and
based on the sensing information, the generating unit selects, from among the plurality of candidate sets, information to be used as the common recognition information.

12. The communication device according to claim 1, further comprising a processing unit that uses the common recognition information and performs transmission signal processing meant for transmitting data to the other communication device.

**13.** The communication device according to claim 12, wherein

the other communication device is a base station device, and
the processing unit uses the common recognition information in the transmission signal processing at time of performing 2-step random access to the base station device.

**14.** The communication device according to claim 13, wherein the transmission signal processing represents scrambling of a physical channel.

**15.** A base station device comprising:

an obtaining unit that obtains predetermined information which is different than terminal IDs enabling identification of each of a plurality of terminal devices; and
a generating unit that, based on the predetermined information, generates common recognition information to be shared with one terminal device from among the plurality of terminal devices.

**16.** The base station device according to claim 15, further comprising a processing unit that uses the common recognition information and performs received signal processing meant for receiving data from one terminal device from among the plurality of terminal devices.

**17.** A communication method comprising:

obtaining predetermined information which is different than terminal IDs enabling identification of each of a plurality of communication devices with which another communication device performs radio communication; and
generating, based on the predetermined information, common recognition information to be shared with the other communication device.

**18.** A computer program that causes a computer to function as:

an obtaining unit that obtains predetermined information which is different than terminal IDs enabling identification of each of a plurality of communication devices with which another communication device performs radio communication; and
a generating unit that, based on the predetermined information, generates common recognition information to be shared with the other communication device.

**19.** A communication method comprising:

obtaining predetermined information which is different than terminal IDs enabling identification of each of a plurality of terminal devices; and
generating, based on the predetermined information, common recognition information to be shared with one terminal device from among the plurality of terminal devices.

**20.** A communication program that causes a computer to function as:

an obtaining unit that obtains predetermined information which is different than terminal IDs enabling identification of each of a plurality of terminal devices; and
a generating unit that, based on the predetermined information, generates common recognition information to be shared with one terminal device from among the plurality of terminal devices.

**Amended claims under Art. 19.1 PCT**

**1.** (Amended) A communication device comprising:

an obtaining unit that obtains predetermined information which is different than terminal IDs enabling identification of each of a plurality of communication devices with which another communication device performs radio communication; and

a generating unit that, based on the predetermined information, generates common recognition information to be shared with the other communication device, wherein

in the common recognition information, a new RANTI is included that is different than a C-RANTI, and

the communication device scrambles CRC, which is added to DCI that is used for scheduling message B of 2-step random access, using the new RANTI representing the common recognition information.

2. The communication device according to claim 1, wherein

the obtaining unit obtains, as the predetermined information, held information which is held in the communication device and which enables the other communication device to narrow down candidate sets of information as information about the communication device, and

the generating unit generates the common recognition information based on the held information.

3. The communication device according to claim 2, wherein

the other communication device is a base station device connected to a core network, and

the obtaining unit obtains, as the predetermined information, the held information that is held in the communication device and that is obtainable by the base station device from another base station device via the core network.

4. The communication device according to claim 1, wherein

the obtaining unit obtains, as the predetermined information, held information that is held in the communication device and that is recognizable by the other communication device as information about the communication device, and

the generating unit generates the common recognition information based on the held information.

5. The communication device according to claim 4, wherein

the other communication device is a base station device, and

the held information represents information related to 2-step random access with respect to the base station device.

6. The communication device according to claim 5, wherein the held information represents information related to transmission resource to be used in performing data transmission to the other communication device during 2-step random access.

7. The communication device according to claim 5, wherein the held information represents at least one set of information selected from among

a demodulation reference signal ID of PUSCH of message A of 2-step random access,

preamble index of preamble of message A, and

transmission resource index of message A or PUSCH.

8. The communication device according to claim 4, wherein the held information represents information for generating an RA-RNTI.

9. The communication device according to claim 1, wherein

the obtaining unit obtains, as the predetermined information from the other communication device, a plurality of candidate sets of information that is not able to serve as the common recognition information, and

the generating unit obtains, as the common recognition information, information selected by avoiding the plurality of candidate sets.

10. The communication device according to claim 1, wherein

the obtaining unit obtains, as the predetermined information from the other communication device, a plurality of candidate sets of information that is able to serve as the common recognition information, and
the generating unit obtains, as the common recognition information, information selected from among the plurality of candidate sets.

11. The communication device according to claim 10, wherein

the obtaining unit obtains sensing information about a plurality of communication devices present within a predetermined range, and
based on the sensing information, the generating unit selects, from among the plurality of candidate sets, information to be used as the common recognition information.

12. The communication device according to claim 1, further comprising a processing unit that uses the common recognition information and performs transmission signal processing meant for transmitting data to the other communication device.

13. The communication device according to claim 12, wherein

the other communication device is a base station device, and
the processing unit uses the common recognition information in the transmission signal processing at time of performing 2-step random access to the base station device.

14. The communication device according to claim 13, wherein the transmission signal processing represents scrambling of a physical channel.

15. (Amended) A base station device comprising:

an obtaining unit that obtains predetermined information which is different than terminal IDs enabling identification of each of a plurality of terminal devices; and
a generating unit that, based on the predetermined information, generates common recognition information to be shared with one terminal device from among the plurality of terminal devices, wherein
in the common recognition information, a new RANTI is included that is different than a C-RANTI, and
the base station device scrambles CRC, which is added to DCI that is used for scheduling message B of 2-step random access, using the new RANTI representing the common recognition information.

16. The base station device according to claim 15, further comprising a processing unit that uses the common recognition information and performs received signal processing meant for receiving data from one terminal device from among the plurality of terminal devices.

17. (Amended) A communication method comprising:

obtaining predetermined information which is different than terminal IDs enabling identification of each of a plurality of communication devices with which another communication device performs radio communication; and
generating, based on the predetermined information, common recognition information to be shared with the other communication device, wherein
in the common recognition information, a new RANTI is included that is different than a C-RANTI, and
CRC, which is added to DCI that is used for scheduling message B of 2-step random access, is scrambled using the new RANTI representing the common recognition information.

18. (Amended) A computer program that causes a computer to execute:

obtaining predetermined information which is different than terminal IDs enabling identification of each of a plurality of communication devices with which another communication device performs radio communication; and
generating, based on the predetermined information, common recognition information to be shared with the other communication device, wherein
in the common recognition information, a new RANTI is included that is different than a C-RANTI, and
the computer program causes the computer to execute scrambling of CRC, which is added to DCI that is used for scheduling message B of 2-step random access, using the new RANTI representing the common recognition information.

19. (Amended) A communication method comprising:

obtaining predetermined information which is different than terminal IDs enabling identification of each of a plurality of terminal devices; and

generating, based on the predetermined information, common recognition information to be shared with one terminal device from among the plurality of terminal devices, wherein

in the common recognition information, a new RANTI is included that is different than a C-RANTI, and

CRC, which is added to DCI that is used for scheduling message B of 2-step random access, is scrambled using the new RANTI representing the common recognition information.

20. (Amended) A communication program that causes a computer to execute:

obtaining predetermined information which is different than terminal IDs enabling identification of each of a plurality of terminal devices; and

generating, based on the predetermined information, common recognition information to be shared with one terminal device from among the plurality of terminal devices, wherein

in the common recognition information, a new RANTI is included that is different than a C-RANTI, and

the computer program causes the computer to execute scrambling of CRC, which is added to DCI that is used for scheduling message B of 2-step random access, using the new RANTI representing the common recognition information.

**Statement under Art. 19.1 PCT**

The claims 1, 15, 17, 18, 19, and 20 are confined to the configuration explained in the description. These amendments are based on the paragraphs [0321] and [0322] of the description.

# FIG.1

# FIG.2

# FIG.3

20

BASE STATION DEVICE

21

SIGNAL PROCESSING UNIT

211

RECEPTION PROCESSING UNIT

213

| 211a | 211b | 211c | 211d |
|------|------|------|------|
| RADIO RECEIVING UNIT | MULTIPLE SEPARA-TION UNIT | DEMODU-LATING UNIT | DECODING UNIT |

212

TRANSMISSION PROCESSING UNIT

| 212d | 212c | 212b | 212a |
|------|------|------|------|
| RADIO TRANSMIS-SION UNIT | MULTI-PLEXING UNIT | MODU-LATING UNIT | ENCODING UNIT |

22

MEMORY UNIT

INFORMATION RELATED TO SIGNAL PROCESSING

INFORMATION RELATED TO SIGNAL PROCESSING

INFORMATION RELATED TO SIGNAL PROCESSING

23

CONTROL UNIT

OBTAINING UNIT 231

GENERATING UNIT 232

PROCESSING UNIT 233

RECEIVING UNIT 234

TRANSMITTING UNIT 235

# FIG.4

**RELAY DEVICE** *30*

313

**SIGNAL PROCESSING UNIT** *31*

**RECEPTION PROCESSING UNIT** *311*

**TRANSMISSION PROCESSING UNIT** *312*

**MEMORY UNIT** *32*

**NETWORK COMMUNICATION UNIT** *33*

**CONTROL UNIT** *34*

# FIG.5

# FIG.6

EP 3 952 581 A1

# FIG.7

# FIG.8

## FIG.9

| | SUBCARRIER SPACING | MAXIMUM BANDWIDTH | CP LENGTH TYPE | NUMBER OF SYMBOLS | SUBFRAME LENGTH | RADIO FRAME LENGTH | NUMBER OF SUBCARRIERS |
|---|---|---|---|---|---|---|---|
| PARAMETER SET 0 | 15kHz | 20MHz | TYPE 1 | 14 | 1ms | 10ms | 12 |
| PARAMETER SET 1 | 7.5kHz | 1.4MHz | TYPE 1 | 70 | 10ms | 10ms | 24 |
| PARAMETER SET 2 | 30kHz | 80MHz | TYPE 1 | 7 | 0.25ms | 10ms | 6 |
| PARAMETER SET 3 | 15kHz | 20MHz | TYPE 2 | 12 | 1ms | 10ms | 12 |
| ... | ... | ... | ... | ... | ... | ... | ... |

EP 3 952 581 A1

# FIG.10

SUBFRAME

SUBCARRIER LENGTH OF PARAMETER SET 1

SYMBOL LENGTH OF PARAMETER SET 1

PARAMETER SET 1

SUBCARRIER LENGTH OF PARAMETER SET 0

SYMBOL LENGTH OF PARAMETER SET 0

PARAMETER SET 0

RESOURCE ELEMENT

SYSTEM BANDWIDTH

SUBCARRIER LENGTH OF PARAMETER SET 2

SYMBOL LENGTH OF PARAMETER SET 2

PARAMETER SET 2

FREQUENCY

TIME

# FIG.11

$20_1$

$40_1$

MA SIGNATURE #0

MA SIGNATURE #1

# FIG.12

TRANSMISSION
SIGNAL SET D10

MA
SIGNATURE
#0

TRANSMISSION
SIGNAL SET D11

TRANSMISSION
SIGNAL SET AFTER
NON-ORTHOGONAL
MULTIPLEXING

RECEIVED
SIGNAL

TRANSMISSION
SIGNAL SET D20

MA
SIGNATURE
#1

TRANSMISSION
SIGNAL SET D21

PROPAGATION
CHANNEL

FREQUENCY

TIME

EP 3 952 581 A1

# FIG.13

TRANSMISSION
SIGNAL SET D10

MA
SIGNATURE
#0

TRANSMISSION
SIGNAL SET D11

TRANSMISSION
SIGNAL SET AFTER
NON-ORTHOGONAL
MULTIPLEXING

RECEIVED
SIGNAL

PROPAGATION
CHANNEL

TRANSMISSION
SIGNAL SET D30

MA
SIGNATURE
#1

TRANSMISSION
SIGNAL SET D31

FREQUENCY

TIME

EP 3 952 581 A1

# FIG.14

$20_1$

$40_2$

$40_2$

MA SIGNATURE #0

MA SIGNATURE #1

# FIG.15

TRANSMISSION
SIGNAL SET D10

MA
SIGNATURE
#0

TRANSMISSION
SIGNAL SET D11

TRANSMISSION
SIGNAL SET D20

MA
SIGNATURE
#1

TRANSMISSION
SIGNAL SET D21

PROPAGATION
CHANNEL

RECEIVED
SIGNAL

FREQUENCY

TIME

EP 3 952 581 A1

# FIG.16

TRANSMISSION SIGNAL SET D10 → MA SIGNATURE #0 → TRANSMISSION SIGNAL SET D11

TRANSMISSION SIGNAL SET D30 → MA SIGNATURE #1 → TRANSMISSION SIGNAL SET D31

PROPAGATION CHANNEL

RECEIVED SIGNAL

FREQUENCY

TIME

EP 3 952 581 A1

# FIG.17

TRANSMISSION
SIGNAL SET D10

MA SIGNATURE #0
/EQUALIZER
/CANCELLER

RECEIVED
SIGNAL

TRANSMISSION
SIGNAL SET D30

MA SIGNATURE #1
/EQUALIZER
/CANCELLER

FREQUENCY

TIME

# FIG.18

INITIAL CONNECTION
OPERATION

DETECT SYNCHRONIZATION SIGNAL — S101

CELL SEARCH

DECODE PBCH — S102

OBTAIN SYSTEM INFORMATION — S103

PERFORM RANDOM ACCESS
PROCEDURE — S104

END

# FIG.19

# FIG.20

# FIG.21

# FIG.22

BASE STATION
DEVICE

TERMINAL
DEVICE

S501

OBTAINING OF
TRANSMISSION DATA

REQUESTING FOR RESOURCE
ASSIGNMENT — S502

ASSIGNMENT (GRANTING) OF
RESOURCES — S503

TRANSMISSION OF DATA USING
ASSIGNED RESOURCES — S504

RESPONSE — S505

# FIG.23

BASE STATION
DEVICE

TERMINAL
DEVICE

NOTIFICATION OF AVAILABLE
RESOURCES — S601

S602

OBTAINING OF
TRANSMISSION DATA

TRANSMISSION OF DATA USING
ASSIGNED RESOURCES — S603

RESPONSE — S604

# FIG.24

```
TERMINAL                    BASE STATION                  TERMINAL
 DEVICE                       DEVICE                        DEVICE
```

⌐S701

| OBTAINING OF TRANSMISSION DATA |

DATA
TRANSMISSION   ⌐S702a          DATA
                              TRANSMISSION   ⌐S702b

RESPONSE   ⌐S703a          RESPONSE   ⌐S703b

# FIG.25

BASE STATION DEVICE

TERMINAL DEVICE

SYNCHRONIZATION SIGNAL   S801

PRACH CONFIGURATION (INCLUDE INFORMATION RELATED TO 2-STEP RACH)   S802

INFORMATION RELATED TO TERMINAL ID   S803

S804
OBTAINING, CALCULATION, AND DECISION OF TERMINAL ID

S805
GENERATION OF MESSAGE A (PREAMBLE, MESSAGE 3) USING TERMINAL ID

MESSAGE A   S806

S807
RECEPTION AND DECODING OF MESSAGE A

S808
GENERATION OF MESSAGE B

MESSAGE B   S809

# EP 3 952 581 A1

<table>
<tr><td colspan="2" align="center"><strong>INTERNATIONAL SEARCH REPORT</strong></td><td>International application No.<br>PCT/JP2020/005041</td></tr>
</table>

**A. CLASSIFICATION OF SUBJECT MATTER**
H04W 74/08(2009.01)i
FI: H04W74/08

According to International Patent Classification (IPC) or to both national classification and IPC

**B. FIELDS SEARCHED**

Minimum documentation searched (classification system followed by classification symbols)
H04W74/08

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br>Y | ZTE, SANECHIPS, Considerations on 2-Step RACH Procedures[online], 3GPP TSG RAN WG1 #96, 01 March 2019, R1-1901627, retrieval date [02 April 2020], Internet<URL:http://www.3gpp.org/ftp/tsg_ran/WG1_RL1/TSGR1-96/Docs/R1-1901627.zip> section 2.5 | 1-2, 4-8, 12-20<br><br>3 |
| X | INTEL CORPORATION, Channel structure for two-step RACH[online], 3GPP TSG RAN WG1 #96, 01 March 2019, R1-1902466, retrieval date [03 April 2020] Internet<URL:http://www.3gpp.org/ftp/tsg_ran/WG1_RL1/TSGR1_96/Docs/R1-1902466.zip> section 2.6 | 1-2, 4-8, 12-20 |
| X | ERICSSON, RNTIs and Contention Resolution for 2-step RA[online], 3GPP TSG RAN WG2 #105bis, 28 March 2019, R2-1903429, retrieval date [03 April 2020] Internet<URL:https://www.3gpp.org/ftp/tsg_ran/WG2_RL2/TSGR2 105bis/Docs/R2-1903429.zip> section 3 | 1-2, 4-7, 12-20 |

☒ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 April 2020 (02.04.2020) | 14 April 2020 (14.04.2020) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

71

**INTERNATIONAL SEARCH REPORT**

| International application No. |
| --- |
| PCT/JP2020/005041 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | VIVO, RAN2 impacts of 2-step RACH[online], 3GPP TSG RAN WG2 #104, 16 November 2018, R2-1818260, retrieval date [03 April 2020], Internet<URL:http://www.3gpp.org/ftp/tsg_ran/WG2_RL2/TSGR2_104/Docs/R2-1818260.zip> section 2.2 | 3 |
| X | US 2019/0007946 A1 (QUALCOMM INCORPORATED) 03.01.2019 (2019-01-03) paragraphs [0072]-[0078], fig. 5 | 1, 9-11, 15, 17-20 |

Form PCT/ISA/210 (continuation of second sheet) (January 2015)

**INTERNATIONAL SEARCH REPORT**
Information on patent family members

<br/>

International application No.

PCT/JP2020/005041

| Patent Documents referred in the Report | Publication Date | Patent Family | Publication Date |
|---|---|---|---|
| US 2019/0007946 A1 | 03 Jan. 2019 | WO 2019/005310 A1 paragraphs [0071]-[0077], fig. 5 | |

Form PCT/ISA/210 (patent family annex) (January 2015)

**EP 3 952 581 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- 2-step RACH for NR. RP-182894. ZTE Corporation, December 2018